(19) Europäisches Patentamt / European Patent Office / Office européen des brevets

(11) **EP 4 607 413 B1**

(12) **EUROPEAN PATENT SPECIFICATION**

(45) Date of publication and mention
of the grant of the patent:
**24.06.2026 Bulletin 2026/26**

(21) Application number: **25157253.3**

(22) Date of filing: **11.02.2025**

(51) International Patent Classification (IPC):
**G06N 10/20** *(2022.01)* **G06N 10/40** *(2022.01)*
**G06N 10/70** *(2022.01)*

(52) Cooperative Patent Classification (CPC):
**G06N 10/40; G06N 10/20;** G06N 10/70

(54) **CIRCUIT DESIGNS FOR QUANTUM DATA LOOKUP**

SCHALTUNGSENTWÜRFE FÜR QUANTENDATENSUCHE

CONCEPTIONS DE CIRCUIT POUR CONSULTATION DE DONNÉES QUANTIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.02.2024 US 202418585650**

(43) Date of publication of application:
**27.08.2025 Bulletin 2025/35**

(73) Proprietor: **Microsoft Technology Licensing, LLC Redmond, WA 98052 (US)**

(72) Inventors:
• **SUNDARAM, Aarthi Meenakshi**
**Redmond, 98052 (US)**
• **ZHU, Shuchen**
**Redmond, 98052 (US)**
• **LOW, Guang Hao**
**Redmond, 98052 (US)**

(74) Representative: **CMS Cameron McKenna Nabarro Olswang LLP**
**Cannon Place**
**78 Cannon Street**
**London EC4N 6AF (GB)**

(56) References cited:
• **KOUSTUBH PHALAK ET AL: "Quantum Random Access Memory For Dummies", ARXIV.ORG, CORNELL UNIVERSITY LIBRARY, 201 OLIN LIBRARY CORNELL UNIVERSITY ITHACA, NY 14853, 2 May 2023 (2023-05-02), XP091499436**
• **XU SHIFAN ET AL: "Systems Architecture for Quantum Random Access Memory", 2023 56TH IEEE/ACM INTERNATIONAL SYMPOSIUM ON MICROARCHITECTURE (MICRO), ACM, 28 October 2023 (2023-10-28), pages 526 - 538, XP034538895, DOI: 10.1145/3613424.3614270**
• **SHUCHEN ZHU ET AL: "Unified Architecture for a Quantum Lookup Table", ARXIV.ORG, CORNELL UNIVERSITY LIBRARY, 201 OLIN LIBRARY CORNELL UNIVERSITY ITHACA, NY 14853, 26 June 2024 (2024-06-26), XP091800830**

**Description**

INTRODUCTION

The subject disclosure relates to quantum circuits, and particularly to circuit designs for quantum data lookup.

A quantum computer is a physical machine configured to execute logical operations based on or influenced by quantum-mechanical phenomena. Such logical operations may include, for example, mathematical computation. Where conventional computer memory holds digital data in an array of bits and enacts bitwise logical operations, a quantum computer holds data in an array of qubits and operates quantum mechanically on the qubits in order to implement the desired logic. One or more quantum logic gates may thus be applied to operate on a set of qubits. Current interest in quantum-computer technology is motivated by analysis suggesting that the computational efficiency of an appropriately configured quantum computer may surpass that of any practicable non-quantum computer when applied to certain types of problems. Such problems include computer modeling of natural and synthetic quantum systems, integer factorization, data searching, and function optimization as applied to systems of linear equations and machine learning. Furthermore, it has been predicted that continued miniaturization of conventional computer logic structures will ultimately lead to the development of nanoscale logic components that exhibit quantum effects and should therefore be addressed according to quantum-computing principles.

Different types of quantum computers base their operation on different quantum-mechanical phenomena. A 'topological' quantum computer is a quantum computer whose operation is based on a non-Abelian topological phase of matter that may support 'braidable' quasiparticles. This type of quantum computer is expected to be less prone to the issue of quantum decoherence than other types of quantum computers, and may therefore serve as a relatively fault-tolerant quantum-computing platform.

K. Phalak et al. "Quantum Random Access Memory for Dummies" arXiv:2305.01178v1 describes that Quantum Random Access Memory (QRAM) has the potential to revolutionize the area of quantum computing. QRAM uses quantum computing principles to store and modify quantum or classical data efficiently, greatly accelerating a wide range of computer processes. Despite its importance, there is a lack of comprehensive surveys that cover the entire spectrum of QRAM architectures. The authors fill this gap by providing a comprehensive review of QRAM, emphasizing its significance and viability in existing noisy quantum computers. By drawing comparisons with conventional RAM for ease of understanding, this survey clarifies the fundamental ideas and actions of QRAM.

S. Xu et al. "Systems Architecture for Quantum Random Access Memory" MICRO '23 Proceedings of the 56TH IEEE/ACM International Symposium on Microarchitecture, pages 526-538, DOI: 10.1145/3613424.3614270 describes that operating on the principles of quantum mechanics, quantum algorithms hold the promise for solving problems that are beyond the reach of the best-available classical algorithms. An integral part of realizing such speedup is the implementation of quantum queries, which read data into forms that quantum computers can process. Quantum random access memory (QRAM) is a promising architecture for realizing quantum queries. However, implementing QRAM in practice poses significant challenges, including query latency, memory capacity and fault-tolerance. In this paper, the authors propose the first end-to-end system architecture for QRAM. First, the authors introduce a novel QRAM that hybridizes two existing implementations and achieves asymptotically superior scaling in space (qubit number) and time (circuit depth). Like in classical virtual memory, the authors' construction enables queries to a virtual address space larger than what is actually available in hardware. Second, the authors present a compilation framework to synthesize, map, and schedule QRAM circuits on realistic hardware. Third, the authors show how to leverage the intrinsic biased-noise resilience of the proposed QRAM for implementation on either Noisy Intermediate-Scale Quantum (NISQ) or Fault-Tolerant Quantum Computing (FTQC) hardware. Finally, the authors validate these results numerically via both classical simulation and quantum hardware experimentation.

SUMMARY

The invention is set out in the appended set of claims.

Embodiments of the present invention are directed to methods for providing circuit designs for quantum data lookup. A non-limiting example method for quantum lookup is in accordance with independent claim 1.

The above features and advantages, and other features and advantages of the disclosure are readily apparent from the following detailed description when taken in connection with the accompanying drawings. This Summary is provided to introduce in simplified form a selection of concepts that are further described in the Detailed Description.

BRIEF DESCRIPTION OF THE DRAWINGS

The specifics of the exclusive rights described herein are particularly pointed out and distinctly claimed in the claims at the conclusion of the specification. The foregoing and other features and advantages of the embodiments of the invention are apparent from the following detailed description taken in conjunction with the accompanying drawings in which:

FIG. 1 depicts an example quantum computer configured to execute quantum-logic operations in accordance with one or more examples;

FIG. 2 depicts an illustration of a Bloch sphere that provides a graphical description of some quantum mechanical aspects of an individual qubit in accordance with one or more examples;

FIG. 3 is a graph of example signal levels associated durations to assert a quantum-gate operation on one or more qubits of a quantum circuit in accordance with one or more examples;

FIG. 4 depicts a layout of a quantum circuit in accordance with one or more examples;

FIG. 5A depicts a vertical brick wall unit of a honeycomb lattice in accordance with one or more examples;

FIG. 5B depicts a vertical brick wall unit of the 4.8.8 lattice in accordance with one or more examples;

FIG. 5C depicts the directions for XX, YY, and ZZ measurements in accordance with one or more examples;

FIG. 5D depicts example bulk YY measurements in accordance with one or more examples;

FIG. 5E depicts example bulk XX measurements in accordance with one or more examples;

FIG. 5F depicts example bulk ZZ measurements in accordance with one or more examples;

FIG. 6 depicts an example Table 1 of resource scaling for quantum circuit designs in accordance with one or more examples;

FIG. 7 depicts an example quantum circuit for quantum data lookup for planar nearest-neighbor quantum architectures resilient to generic noise in accordance with one or more examples;

FIG. 8 depicts an example quantum circuit for single bit readout using quantum data lookup for planar nearest-neighbor quantum architectures resilient to generic noise in accordance with one or more examples;

FIGS. 9A, 9B, and 9C depict designs for linear routers used in Stage I in accordance with one or more examples;

FIGS. 10A, 10B, and 10C depict designs for noise-resilient routers used in Stages II and III in accordance with one or more examples;

FIGS. 11A, 11B, and 11C depict designs for CNOT routers used in Stage II in accordance with one or more examples;

FIGS. 12A and 12B depict a planar layout for the circuit generic framework described in FIG. 8 in accordance with one or more examples;

FIG. 13 depicts an example Table 2 of resource scaling for various quantum data lookup designs;

FIGS. 14A and 14B depict an algorithm for quantum data lookup performed on quantum circuits of a quantum computer as caused/initiated by a classical computer in accordance with one or more examples;

FIG. 15 depicts a flowchart of a computer-implemented method for operating quantum circuits of a quantum computer as caused/initiated by a classical computer in accordance with one or more examples;

FIG. 16 depicts an example Table 3 of resource scaling for quantum circuit designs in accordance with one or more examples;

FIG. 17 depicts an example of a high-level description of a quantum router in accordance with one or more examples;

**EP 4 607 413 B1**

FIG. 18 depicts a high-level routing scheme for 16 memory locations in accordance with one or more examples;

FIG. 19 depicts a router qubit arrangement on a planar layout with 16 memory locations in accordance with one or more examples;

FIG. 20 depicts an example Table 4 of error types addressed in the fine-tuned analysis in accordance with one or more examples;

FIG. 21 depicts a naive action sequence of routers in a given query branch of depth four in accordance with one or more examples;

FIG. 22 depicts an improved action sequence of routers in a given query branch of depth four in accordance with one or more examples;

FIG. 23 depicts a high-level routing arrangement for 16 memory locations with both CSWAP and CNOT routers in accordance with one or more examples;

FIGS. 24A, 24B, 24C, and 24D depict a single CNOT router in accordance with one or more examples;

FIG. 25 depicts a high-level router arrangement employing GHZ states for diffusing control qubits and collecting memory qubits in accordance with one or more examples;

FIG. 26 depicts an example of passing the state of the router to all its children's memory locations in accordance with one or more examples;

FIG. 27 depicts a block diagram of a classical computer system utilized in accordance with one or more examples;

FIG. 28 depicts a high-level view of router arrangement employing GHZ states in accordance with one or more examples;

FIG. 29 depicts a high-level router arrangement of FIG. 25 with modifications in accordance with one or more examples;

FIG. 30 depicts a conditional optimal layout for a high-level router arrangement employing linear routers, CSWAP routers, and CNOT routers in accordance with one or more examples;

FIGS. 31A, 31B, and 31C depict a high-level scheme for two linear routers in accordance with one or more examples;

FIGS. 32A, 32B, and 32C depict linear routers configured based on the value of address bits in accordance with one or more examples;

FIG. 33A depicts a circuit illustrating that a Pauli $X$ error does not propagate in accordance with one or more examples;

FIG. 33B depicts a circuit illustrating that a Pauli Z error does propagate in accordance with one or more examples;

FIG. 34 depicts a high-level scheme for a quantum circuit as an extension to the quantum circuit in FIG. 8 in accordance with one or more examples;

FIG. 35 depicts a planar layout for resilience against Pauli errors in accordance with one or more examples;

FIG. 36 depicts a high-level scheme for a quantum circuit as an extension to the quantum circuit in FIG. 8 in accordance with one or more examples;

FIG. 37 depicts an example Table 5 in accordance with one or more examples;

FIG. 38 depicts an example Table 6 in accordance with one or more examples;

FIG. 39 depicts an example Table 7 in accordance with one or more examples;

4

FIG. 40 depicts an example Table 8 in accordance with one or more examples; and

FIG. 41 depicts an example Table 9 in accordance with one or more examples;

FIG. 42 depicts an example Table 10 in accordance with one or more examples; and

FIG. 43 depicts an example Table 11 in accordance with one or more examples.

The diagrams depicted herein are illustrative. There can be many variations to the diagram or the operations described therein without departing from the invention. For instance, the actions can be performed in a differing order or actions can be added, deleted or modified.

In the accompanying figures and following detailed description of the described embodiments of the invention, the various elements illustrated in the figures are provided with two or three-digit reference numbers. With minor exceptions, the leftmost digit(s) of each reference number corresponds to the figure in which its element is first illustrated.

DETAILED DESCRIPTION

In accordance with one or more embodiments, a system, method, quantum circuit, and/or computer are configured and arranged to provide circuit designs for quantum data lookup. One or more embodiments provide resource-efficient quantum data lookup circuit designs for planar nearest-neighbor quantum architectures resilient to generic noise.

The quantum lookup table, which is a universal structure that allows for superposition-access to classical data, is utilized for executing numerous quantum algorithms. Various circuit designs of the state-of-the-art have been attempted to achieve this operation, each with its own set of advantages and drawbacks. Previous results of the state-of-the-art assumed all-to-all qubit connectivity, which is an assumption that might not be practical in real-world implementations. However, the present disclosure develops a generic quantum lookup table framework that unifies all prior architectures in full generality, according to one or more embodiments. For a dataset of size $N$, the framework of one or more embodiments achieves sublinear scaling in $N$ scaling for single query infidelity, T-gate count, and qubit count when utilizing a planar layout scheme with nearest-neighbor connectivity. Furthermore, the framework of one or more other aspects not covered by the present claims can transition between complete local connectivity (e.g., nearest-neighbor connectivity) and all-to-all connectivity, thereby recovering all previous results of the state-of-the-art. The present disclosure extends the findings to incorporate datasets with multi-bit words design layouts for both sequential and parallel read-out conditions, according to one or more embodiments.

It is noted that quantum computing can utilize methods that suppress errors in faulty qubits. Quantum error correction (QEC) is a broad class of techniques that encode "logical" qubits and gates in a subspace of the Hilbert space formed by many more "physical" qubits and gates. The structure of a quantum code has an influence on how logical gates are enacted on the physical qubits, and hence the total size and execution time of a quantum computation.

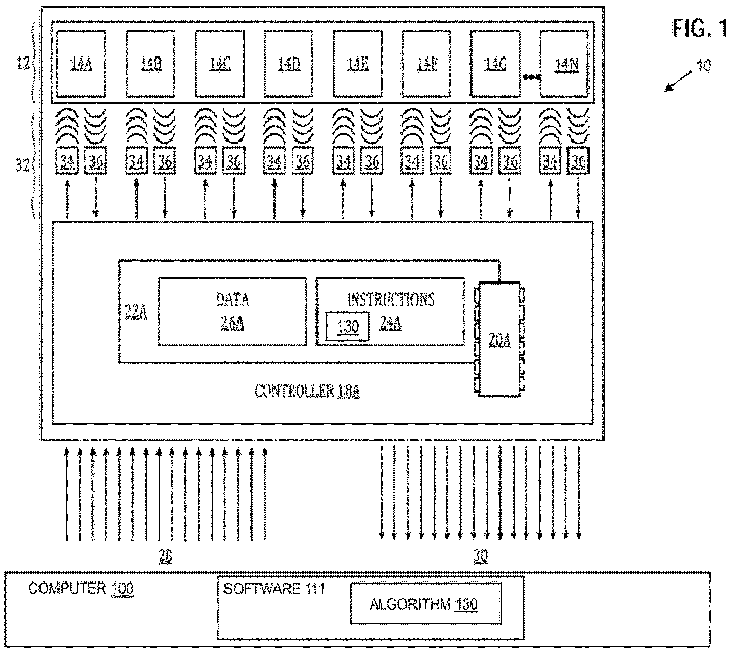

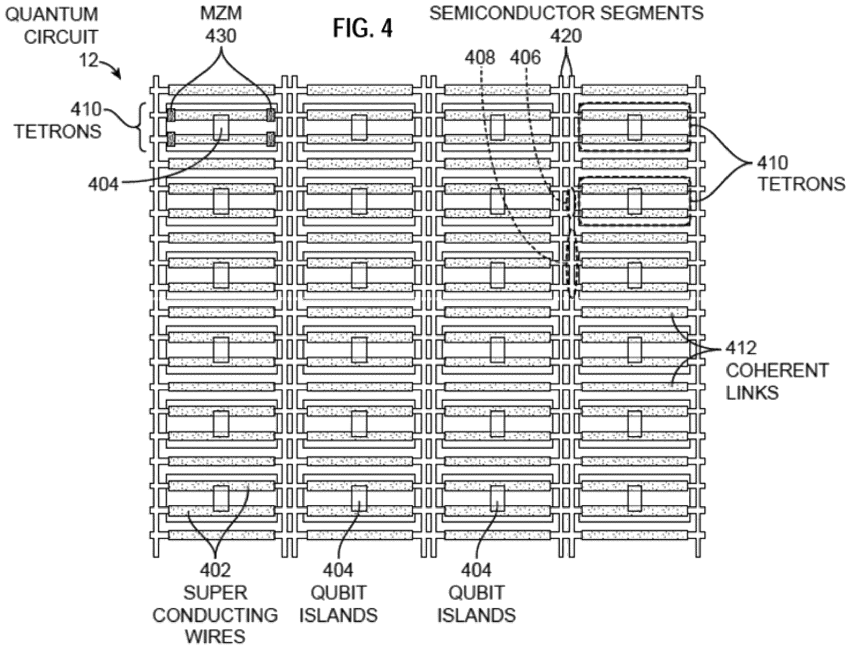

Example Quantum Computer Architecture: FIG. 1 illustrates an example quantum computer 10 configured to execute quantum-logic operations. Whereas conventional computer memory holds digital data in an array of bits and enacts bit-wise logic operations, a quantum computer holds data in an array of qubits and operates quantum-mechanically on the qubits in order to implement the desired logic. Accordingly, quantum computer 10 of FIG. 1 includes at least one quantum circuit 12 having an array of physical qubits 14A, 14B, 14C-14N, where N is the last number of qubits. The qubits 14A-14N can be referred to collectively as qubits 14. The quantum circuit 12 of the array of qubits 14 can be arranged in a lattice structure as depicted in FIG. 4.

The qubits 14 of the quantum circuit 12 take various forms, depending on the desired architecture of quantum computer 10. While this disclosure relates to qubits embodied as quasiparticles in a non-Abelian topological phase, a qubit alternatively can include: a superconducting Josephson junction, a trapped ion, a trapped atom coupled to a high-finesse cavity, an atom or molecule confined within a fullerene, an ion or neutral dopant atom confined within a host lattice, a quantum dot exhibiting discrete spatial- or spin-electronic states, electron holes in semiconductor junctions entrained via an electrostatic trap, a coupled quantum-wire pair, an atomic nucleus addressable by magnetic resonance, a free electron in helium, a molecular magnet, or a metal-like carbon nanosphere, as non-limiting examples. More generally, each qubit 14 can include any particle or system of particles that can exist in two or more discrete quantum states that can be measured and manipulated experimentally. For instance, a qubit may be implemented in the plural processing states corresponding to different modes of light propagation through linear optical elements (e.g., mirrors, beam splitters and phase shifters), as well as in states accumulated within a Bose-Einstein condensate.

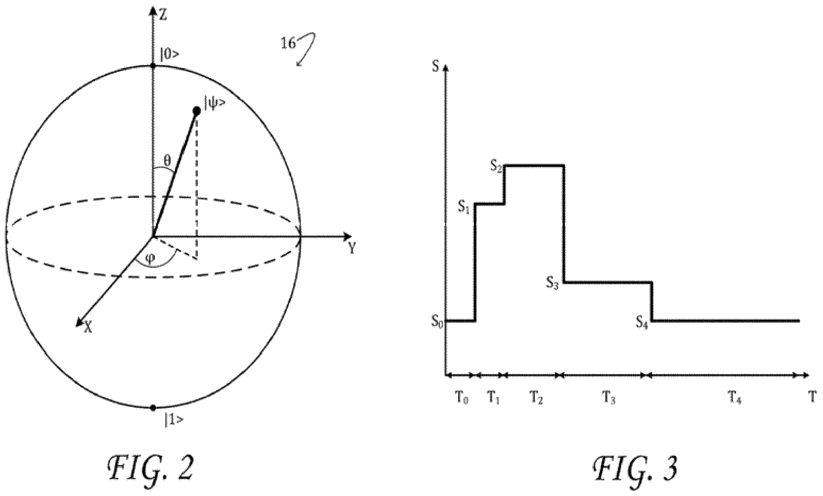

FIG. 2 is an illustration of a Bloch sphere 16, which provides a graphical description of some quantum mechanical aspects of an individual qubit 14. In this description, the north and south poles of the Bloch sphere correspond to the standard basis vectors |0> and |1>, respectively. The set of points on the surface of the Bloch sphere comprise all possible pure states |ψ> of the qubit, while the interior points correspond to all possible mixed states. A mixed state of a given qubit may result from decoherence, which may occur because of undesirable coupling to external degrees of freedom.

Referring to FIG. 1, quantum computer 10 includes a controller 18A. The controller 18A includes at least one processor 20A and associated computer memory 22A. The processor 20A of the controller 18A can be coupled operatively to peripheral componentry, such as network componentry, to enable the quantum computer to be operated remotely. The processor 20A of the controller 18A can take the form of a central processing unit (CPU), a graphics processing unit (GPU), or the like. As such, the controller can include classical electronic componentry. The terms 'classical' and 'non-quantum' are applied herein to any component that can be modeled accurately as an ensemble of particles without considering the quantum state of any individual particle. Classical electronic components include integrated, microlithographed transistors, resistors, and capacitors, for example. The computer memory 22A can be configured to hold program instructions 24A that cause the processor 20A to execute any function or process of the controller. The computer memory can also be configured to hold additional data 26A. In examples in which quantum circuit 12 is a low-temperature or cryogenic device, the controller 18A can include control componentry operable at low or cryogenic temperatures, for example, a field-programmable gate array (FPGA) operated at 77 kelvin (K). In such examples, the low-temperature control componentry can be coupled operatively to interface componentry operable at normal temperatures.

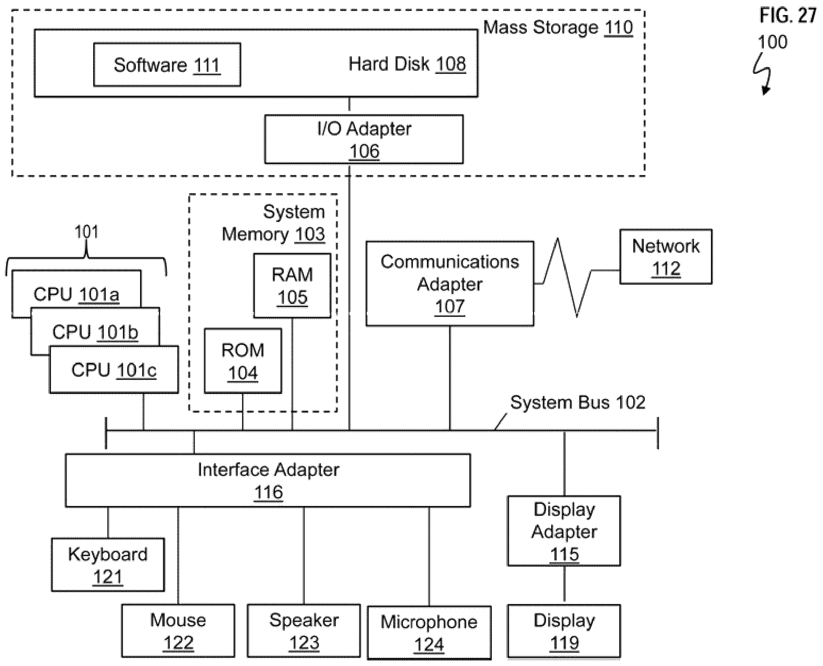

The controller 18A of the quantum computer 10 is configured to receive a plurality of inputs 28 and to provide a plurality of outputs 30. The inputs and outputs can each include digital and/or analog lines. At least some of the inputs and outputs can be data lines through which data is provided to and/or extracted from the quantum computer. Other inputs can include control lines via which the operation of the quantum computer can be adjusted or otherwise controlled. In one or more examples, the quantum computer 10 can be coupled a classical computer 100. Further, details of the example classical computer 100 are discussed in FIG. 27.

The controller 18A is operatively coupled to the quantum circuit 12 via quantum interface 32. The quantum interface 32 is configured to exchange data bidirectionally with the controller 18A. The quantum interface 32 is further configured to exchange signal corresponding to the data bidirectionally with the qubit register. Depending on the architecture of quantum computer 10, such signal may include electrical, magnetic, and/or optical signal. By the signal conveyed through the quantum interface 32, the controller 18A can interrogate and otherwise influence the quantum state held in various qubits 14. For example, the controller 18A can interrogate and otherwise influence the quantum state held a qubit register, as defined by a collective quantum state of a group of qubits 14. The quantum interface 32 includes at least one modulator 34 and at least one demodulator 36, each coupled operatively to one or more qubits 14 of the quantum circuit 12. In one or more examples, a modulator 34 and a demodulator 36 can each be coupled to qubits in a qubit register. Each modulator 34 is configured to output a signal to one or more qubits 14 in the quantum circuit 12 based on modulation data received from the controller 18A. In one or more examples, at least one modulator 34 can output a signal to qubits in a qubit register based on modulation data received from the controller 18A. Each demodulator 36 is configured to sense a signal from the one or more qubits 14 of the quantum circuit 12 and to output data to the controller 18A based on the signal. In one or more examples, each demodulator 36 is configured to sense a signal from the qubit register and to output data to the controller 18A based on the signal. The data received from the demodulator 36 can, in some examples, be an estimate of an observable to the measurement of the quantum state held in one or more qubits 14 in the quantum circuit 12. In one or more examples, the data received from the demodulator 36 can be an estimate of an observable to the measurement of the quantum state held in the qubit register.

In some examples, the modulator 34 can transmit a suitably configured signal to interact physically with one or more qubits 14 of the quantum circuit 12 in order to trigger measurement of the quantum state held in one or more qubits 14. The demodulator 36 can then sense a resulting signal released by the one or more qubits 14 pursuant to the measurement and can provide the data corresponding to the resulting signal to the controller 18A. Stated another way, the demodulator 26 is configured to output, based on the signal received, an estimate of one or more observables reflecting the quantum state of one or more qubits of the qubit register, and to furnish the estimate to the controller 18A. In one non-limiting example, the modulator 34 can provide, based on data from the controller 18A, an appropriate voltage pulse or pulse train to an electrode of one or more qubits 14, to initiate a measurement. In short order, the demodulator 36 can sense photon emission from the one or more qubits 14 and can assert a corresponding digital voltage level on a quantum-interface line into the controller 18A. Generally speaking, any measurement of a quantum-mechanical state is defined by the operator "O" corresponding to the observable to be measured; the result "R" of the measurement is guaranteed to be one of the allowed eigenvalues of "O". In the quantum computer 10, "R" is statistically related to the qubit-register state prior to the measurement but is not uniquely determined by the qubit-register state.

Pursuant to appropriate input from the controller 18A, the quantum interface 32 may be configured to implement one or more quantum-logic gates to operate on the quantum state held in the quantum circuit 12, for example, in a qubit register in the quantum circuit 12. Whereas the function of each type of logic gate of a classical computer system is described according to a corresponding truth table, the function of each type of quantum gate is described by a corresponding operator matrix. The operator matrix operates on (i.e., multiplies) the complex vector representing the qubit register state and effects a specified rotation of that vector in Hilbert space.

For example, the Hadamard gate HAD is defined by

$$HAD = \frac{1}{\sqrt{2}} \begin{bmatrix} 1 & 1 \\ 1 & -1 \end{bmatrix}. \tag{A}$$

The HAD gate acts on a single qubit; it maps the basis state $|0>$ to $(\ |0>)/\sqrt{2}$, and maps to $|1>$ to $(|0> |1>)\sqrt{2}$. Accordingly, the HAD gate creates a superposition of states that, when measured, have equal probability of revealing $|0>$ or $|1>$.

The phase gate $S$ is defined by

$$S = \begin{bmatrix} 1 & 0 \\ 0 & e^{i\pi/2} \end{bmatrix}. \tag{B}$$

The S gate leaves the basis state $|0>$ unchanged but maps $|1>$ to $e^{i\pi/2}|1>$. Accordingly, the probability of measuring either $|0>$ or $|1>$ is unchanged by this gate, but the phase of the quantum state of the qubit is shifted. This is equivalent to rotating $\psi$ by 90 degrees along a circle of latitude on the Bloch sphere of FIG. 2.

Some quantum gates operate on two or more qubits. The SWAP gate, for example, acts on two distinct qubits and swaps their values. This gate is defined by

$$SWAP = \begin{bmatrix} 1000 \\ 1010 \\ 0100 \\ 0001 \end{bmatrix}. \tag{C}$$

The foregoing list of quantum gates and associated operator matrices is non-exhaustive but is provided for ease of illustration. Other quantum gates include Pauli-X, -Y, and -Z gates, the $\sqrt{NOT}$ gate, additional phase-shift gates, the $\sqrt{SWAP}$ gate, controlled cX, cY, and cZ gates, and the Toffoli, Fredkin, Ising, and Deutsch gates, as non-limiting examples.

Continuing in FIG. 1, suitably configured signal from modulators 34 of the quantum interface 32 can interact physically with one or more qubits 14 of the quantum circuit 12, for example, a qubit register in the quantum circuit 12, so as to assert any desired quantum-gate operation. As noted above, the desired quantum-gate operations are specifically defined rotations of a complex vector representing the qubit register state. In order to effect a desired rotation "O", one or more modulators of quantum interface 32 can apply a predetermined signal level $S_i$ for a predetermined duration $T_i$. In some examples, plural signal levels can be applied for plural sequenced or otherwise associated durations, as depicted in FIG. 3, to assert a quantum-gate operation on one or more qubits of the quantum circuit 12, for example, in a qubit register of the quantum circuit 12. In general, each signal level $S_i$ and each duration $T_i$ is a control parameter adjustable by appropriate programming of controller 18A.

The term 'oracle' is used herein to describe a predetermined sequence of elementary quantum-gate and/or measurement operations executable by quantum computer 10. An oracle can be used to transform the quantum state of qubits 14 in the quantum circuit 12, for example, qubits in a qubit register, to effect a classical or non-elementary quantum-gate operation or to apply a density operator, for example. In some examples, an oracle may be used to enact a predefined 'black-box' operation $f(x)$, which may be incorporated in a complex sequence of operations. To ensure adjoint operation, an oracle mapping n input qubits $|x>$ to m output or ancilla qubits $|y> f(x)$ may be defined as a quantum gate $O(|x> \otimes|y>)$ operating on the n+m qubits. In this case, $O$ can be configured to pass the n input qubits unchanged but combine the result of the operation f(x) with the ancillary qubits via an XOR operation, such that $O(|x\rangle \otimes|t\rangle)=|x\rangle\otimes|y+f(x)\rangle$. As described further below, a state-preparation oracle is an oracle configured to generate a quantum state of specified qubit length.

Implicit in the description herein is that each qubit 14 of qubit registers can be interrogated via quantum interface 32 so as to reveal with confidence the standard basis vector $|0\rangle$ or $|1\rangle$ that characterizes the quantum state of that qubit. In some implementations, however, measurement of the quantum state of a physical qubit could be subject to error. Accordingly, any physical qubit 14 can be implemented as a logical qubit, which includes a grouping of physical qubits measured according to an error-correcting oracle that reveals the quantum state of the logical qubit with confidence.

Topological Quantum Computer: In a topological quantum computer, the quantum state held in each qubit is a state of two or more braidable quasiparticles, or 'anyons', observed within a non-Abelian topological phase of matter. The world lines of different anyons are quantum mechanically forbidden from intersecting or merging. This feature forces their paths to form stable braids that pass around each other in space-time. Relative to trapped particles used in other types of quantum computers, anyon braids are more resistant to quantum decoherence, which is a source of error in quantum computation. However, the realization of a topological quantum computer has the ability to engineer a suitable topological phase and to manipulate the anyons therein.

Early experiments in topological quantum computing focused on the two-dimensional 'electron gas' of a supercooled, thin layer of gallium arsenide (GaAs) sandwiched between layers of aluminum gallium arsenide (AlGaAs) and manipulated in a strong magnetic field. Implementation of a quantum computer using that architecture includes the braiding of individual quasiparticle excitations combined with anyonic interferometry-based measurement, involving coherent quasiparticle transport over significant distances.

Proposed more recently is a one-dimensional topological qubit architecture that is more amenable to practical implementation. The proposed system uses a semiconductor-superconductor heterostructure wherein superconductivity, strong spin-orbit coupling, and magnetic fields cooperate to form a topological, superconducting state that supports Majorana zero modes (MZMs). This architecture obviates the need to move quasiparticles by employing a 'measurement-only' method wherein a sequence of measurements has the same effect as a braiding operation. This architecture does not require quasiparticles to be moved through an interferometry loop, but rather exploits a distinction between a 'fermion parity-protected topological phase' (the actual genus of the proposed heterostructure) and a true topological phase. Advantageously, topological charge in a fermion parity-protected topological phase can be manipulated by the process of electron tunneling into an MZM. Transport through a pair of MZMs can provide a measurement of their combined topological charge in the presence of a large charging energy.

In view of these and other useful properties, MZMs can be used as a basis for the qubits of a topological quantum computer. The MZMs are created at the ends of semiconductor-superconductor heterostructures tuned into a topological regime by the appropriate magnetic field and gate voltages. A series of practical implementations are described in Karzig et al., Scalable Designs for Quasiparticle-Poisoning-Protected Topological Quantum Computation with Majorana Zero Modes, arxiv:1610.05289v4 [cond-mat.mes-hall] 21 Jun. 2017. Suitable heterostructure materials and material properties are described in Lutchyn et al., Majorana Fermions and a Topological Phase Transition in Semiconductor-Superconductor Heterostructures, arXiv:1002.4033v2 [cond-mat.supr-con] 13 Aug. 2010.

Example implementations include at least two topological superconducting segments in a qubit, totaling at least four Majorana zero modes per qubit. The states used for quantum computation is the degenerate ground states of the qubit, in contrast to non-degenerate quantum-computing architectures where the two states of the qubit have different energies. The degeneracy of the qubit states and the spatial separation of the Majorana zero modes ensure long coherence times and feasibility of precise application of a set of Clifford gates.

FIG 4 illustrates an example layout of a square lattice of tetrons used to implement a honeycomb and 4.8.8 Floquet codes. In FIG. 4, topological superconducting wires 402 have a MZM at both ends. Qubit islands 404 correspond to two parallel topological superconducting wires 402 joined by a trivial superconducting backbone, with MZMs 430 labeled according to the box in the upper left. MZMs 430 are illustrated for a single tetron 410 but applies to all of the tetrons 410. Rows of tetrons 410 are separated by coherent links 412, which are floating topological wires. Neighboring qubit islands 404 are connected by semiconducting segments 420, with two semiconducting columns of semiconducting segments 420 separating each column of qubit islands 404. There are also rows of semiconductor regions connected the semiconductor segments 420 to coherent links 412 and superconducting wire 402. The coherent links 412 do not have the qubit islands 404. The superconducting wires 402 connect to qubit islands 404, which are the physical qubits 14 in the quantum circuit 12. Since the physical qubits 14 are arranged in an array, the qubit islands 404 are in columns. A semiconductor segment 406 can be referred to as length-1 semiconductor quantum dot with gate defined. A semiconductor segment 408 can be referred to as length-2 semiconductor quantum dot with gate defined.

Each tetron 410 in FIG. 4 includes a physical qubit, where the qubit islands 404 are the physical qubits 14. The tetron 410, which encompasses a qubit island 404, can be referred to as a physical qubit. In the example square lattice as at least a portion of the quantum circuit 12, there is an array of 6*4 = 24 tetrons displayed, each representing a physical qubit. As seen in FIG. 4, the MZM 430 appears at the end of each topological superconducting wire 402. A quartet of MZMs 430 forms a logical qubit, where each tetron 410 has two topological superconducting wires 402, and each wire has two MZMs 430. All together each tetron 410 has 4 MZMs which includes one physical qubit, for example, physical quit 14.

Physical qubits are transformed into logical qubits using a fault tolerant protocol. The fault tolerant protocol provides a transformation such that algorithms of a classical computer can be applied to the quantum computer. The physical operations applied to physical qubits is in accordance with the logical operations applied to the logical qubits. The pattern of operations applied to the physical qubits is directly related to the logical operations for the logical qubits.

An example discussion of quantum error correction (QEC) and a planar quantum instruction-set architecture (ISA) is provided. Further description of quantum error correction and a planar quantum instruction-set architecture is described in Assessing requirements to scale to practical quantum advantage, by M. E. Beverland et al., arXiv:2211.07629 [quant-ph] 14 Nov. 2022. A review of two QEC schemes is provided, focusing on estimates of the resources required for their implementation and for applying fault-tolerant logical operations on the encoded information. For qubits with a gate-based instruction set, surface code is assumed to be utilized. It is the best-understood QEC scheme for this class of qubits and offers a high threshold for practical implementation. For qubits with a Majorana instruction set, both the surface code and also the Hastings-Haah code are considered, which is a recently developed QEC scheme that offers better space-time costs than surface codes on Majorana qubits in many regimes. It is also possible to implement the Hastings-Haah code with qubits that use a gate-based instruction set.

As an example, the Hastings-Haah code is measurement code for logical qubits, and the measurements can be performed using plaquettes. The Hastings-Haah code is based on a honeycomb lattice. As noted herein, the instructions 24A cause measurements on the quantum circuit 12 using the modulators 34 and demodulators 36. A measurement of one or more physical qubits 14 is the result of sending a signal via the modulator 34 and receiving a signal back via the demodulator 36. The received signal, also referred to as the measurements, has the quantum information about the logical qubit that is formed of two or more physical qubits 14. Based on a signal sent and the received signal from the quantum circuit 12, a logical qubit is formed of two or more physical qubits 14 as understood by one of ordinary skill in the art. The various signals sent and corresponding signals received back can be performed using the scheme or code that follows/adheres to plaquettes, as understood by one of ordinary skill in the art.

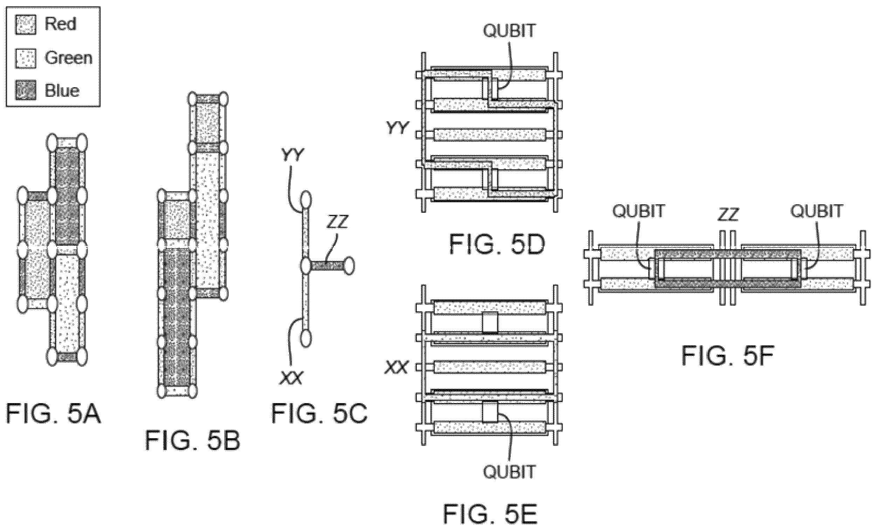

Some examples of measurements are illustrated in FIGS. 5A, 5B, 5C, 5E, and 5F. FIG. 5A illustrates a vertical brick wall unit of a honeycomb lattice. FIG. 5B illustrates a vertical brick wall unit of the 4.8.8 lattice. FIG. 5C illustrates the directions for XX, YY, and ZZ measurements. FIG. 5D illustrates example bulk YY measurements. FIG. 5E illustrates example bulk XX measurements. FIG. 5F illustrates example bulk ZZ measurements. Colors are represented in FIGS. 5A, 5B, 5C, 5D, 5E, and 5F. The colors refer to the measurement time steps, rather than the Pauli operators. It is noted that the different colors describe the 3-coloring of the plaquettes and corresponding checks. The honeycomb and 4.8.8 lattices map to the tetron array of tetrons 410 of the quantum circuit 12 in FIG. 4 using vertical bricks such that each 2n-gon corresponds to a rectangle of height n. With this mapping, the honeycomb and 4.8.8 Floquet codes in the bulk use a subset of the highest fidelity two-qubit measurements: XX and YY measurements between vertically adjacent qubit islands in FIGS. 5E and 5D respectively, and ZZ between horizontally adjacent qubit islands in FIG. 5F. To implement measurements on neighboring pairs of vertically adjacent qubits without their corresponding loops intersecting, the two columns of semiconductor segments 420 separating each column of qubit islands 404, which are the qubits 14, can be utilized.

A previous paper of a layout of the 4.8.8 code using Majorana based architectures has been presented in by Adam Paetznick, Christina Knapp, Nicolas Delfosse, Bela Bauer, Jeongwan Haah, Matthew B. Hastings, and Marcus P. da Silva, in Performance of planar floquet codes with majorana-based qubits, PRX Quantum, 4:010310, January 25, 2023.

The Hastings-Haah code and/or any other code maybe be implemented in the instructions 24A in the quantum computer 10. In one or more embodiments, the Hastings-Haah code can be implemented as computer-executable instructions in the classical computer 100 and sent to the quantum computer 10 for execution. The 4.8.8 Hastings-Haah code uses "4.8.8" to refer to a lattice. As understood by one of ordinary skill in the art, "Hastings-Haah code" denotes a technique of operating the 2D array of qubits 14 in the quantum circuit 12. Moreover, the Hastings-Haah code is a sequence of two qubit measurements on the quantum circuit 12 of the quantum computer 10, and the classical computer 100 eventually stores those measurement outcomes. That sequence of two qubit measurements is programmed into the classical computer 100, which then sends signals to the quantum computer 10, indicating which operations to perform on the quantum circuit 12.

Quantum data lookup is a part of quantum algorithms that allows classical data to be accessed in quantum circuit by using superposition queries. There are many different designs that achieve this function such as the quantum random access memory (QRAM), quantum read only memory (QROM), and the hybrid SELECT-SWAP architecture. However, these state-of-the-art designs have different costs in terms of qubit count, T-gate count, and infidelity scaling. The infidelity scaling refers to how far the state after a query is from the ideal state. From prior results, one can conclude that these state-of-the art designs have infidelity scaling linearly in memory size, making their costs in the fault-tolerant regime prohibitive even for small memories.

A state-of-the-art design showed that with careful analysis the bucket-brigade architecture for QRAM is highly resilient to generic noise with the infidelity scaling as $O(\log N)$ for memory size, $N$, while using $O(N)$ qubits and $O(N)$ T-gates to read one bit of information. Consequently, this assumes all-to-all connectivity on the qubits. In many of the existing hardware proposals today, however, qubits are expected to be laid out on a planar surface with only nearest neighbor operations, i.e., without utilizing all-to-all connectivity on the qubits.

The present disclosure presents a family of circuit designs for noise resilient QRAMs that are amenable to this assumption of qubits being laid out on a planar surface with only nearest neighbor operations. For designs of circuits according to one or more embodiments, the present disclosure shows that there exists a choice of parameters such that the infidelity of a query scales sub-linearly, i.e., as $\tilde{O}(N^a)$ for $\frac{1}{2} \leq a < 1$ for memory size $N$ and uses $O(N^{a'})$ qubits and

$O(N^{a''})$ T-gates for $\frac{1}{2} \leq a', a'' < 1$. Additionally, one or more embodiments provide a generic framework that is capable of recovering all previous designs for quantum data lookup for different choices of parameters.

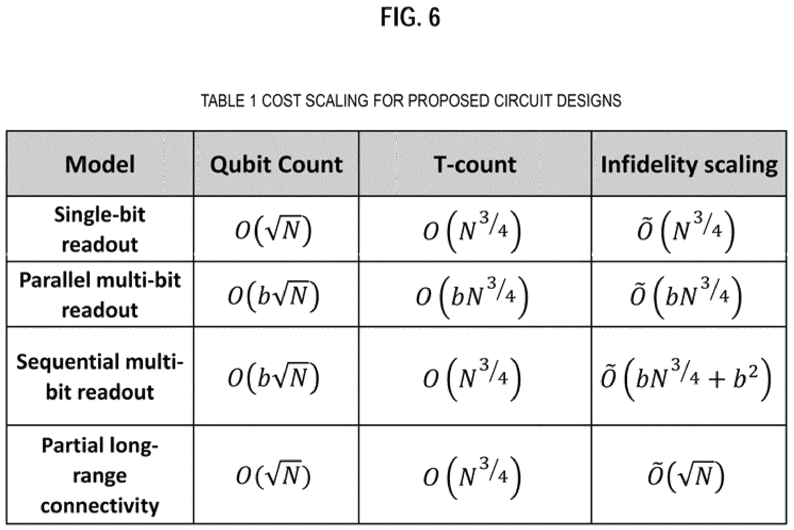

Further, one or more embodiments extend the design to read out multiple bits of information, say bits $b$, either sequentially or in parallel with sublinear qubit counts, T-count, and infidelity scaling. Additionally, the present disclosure considers the impact on these values (e.g., sublinear qubit counts, T-count, and infidelity scaling) given that the system can perform some finite number of long-range operations with $O(1)$ cost. Table 1 in FIG. 6 lists the results for specific parameter choices of circuit designs disclosed according to one or more embodiments. In FIG. 6, for a given memory size $N$, Table 1 illustrates that the parameters for qubit count, T count, and infidelity scale at some amount less than the memory size $N$. This means that the number of routers and gate trees utilized in the design quantum circuit does not increase linearly with the value of the memory size $N$.

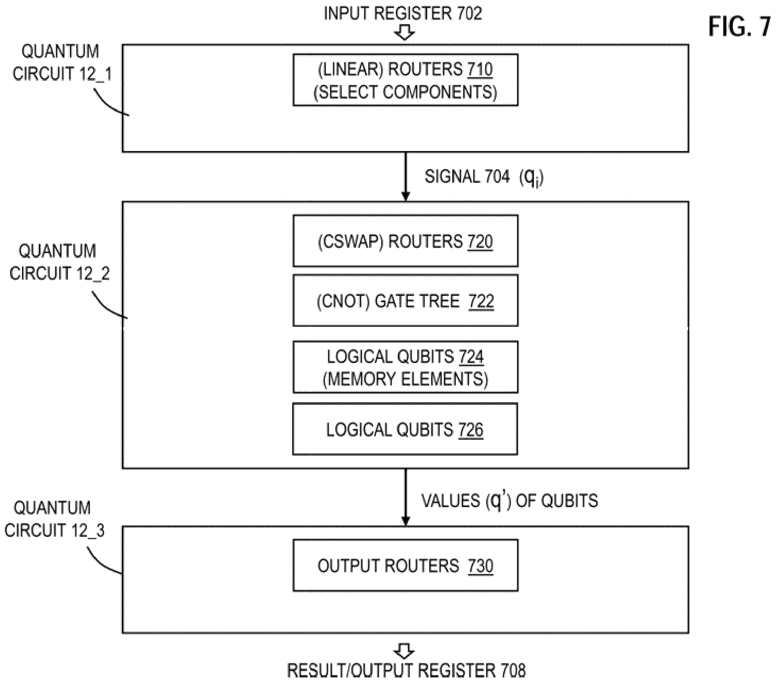

FIG. 7 depicts a design quantum circuit for quantum data lookup for planar nearest-neighbor quantum architectures resilient to generic noise according to one or more embodiment. The design quantum circuit can be implemented in quantum circuit 12 of the quantum computer 10 according to one or more embodiments. The design quantum circuit can be implemented in quantum circuit 12_1 coupled to quantum circuit 12_2, where quantum circuit 12_2 is coupled to quantum circuit 12_3 according to one or more embodiments. The quantum circuits 12_1, 12_2, and 12_3 include the features and functionality of the quantum circuit 12 of the quantum computer 10. Although the quantum circuit 12_1, the quantum circuit 12_2, and the quantum circuit 12_3 are illustrated as separate circuits, any two or more of the quantum circuits 12_1, 12_2, and 12_3 can be combined according to one or more embodiments.

In FIG. 7, the quantum circuit 12_1 includes input from input register 702 that is passed to routers 710. The routers 710 process the input from the input register 702 and provide a signal ($q_i$) 704. In quantum circuit 12_2, routers 720 receive the signal ($q_i$) 704. The routers 720 process the signal 704 and provide input to a gate tree 722. The gate tree 722 processes output from the routers 720 and applies input to one or more logical qubits 724, which are formed of two or more physical qubits 14. The logical qubits 724 serve and/or function as memory elements in accordance with their respective output.

In quantum circuit 12_3, the values of the logical qubits 724 are gathered in logical qubits 726 (e.g., as $q_j$) using quantum entanglement operations. The states of the logical qubits 726 are readout to output routers 730. The output routers 730 process the output of the logical qubits 726 and provide a final output (e.g., readout) to output register 708. The final output in the output register 708 is the data for which the lookup occurred.

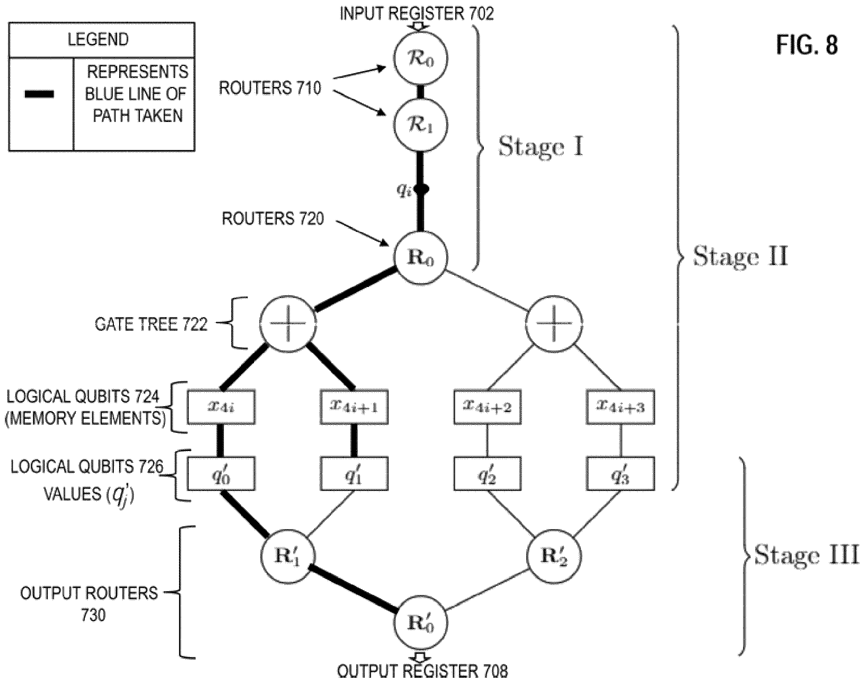

FIG. 8 depicts an example design quantum circuit for single bit readout using quantum data lookup for planar nearest-neighbor quantum architectures resilient to generic noise according to one or more embodiment. It is noted that the components, such as routers 710, routers 720, gate tree 722, logical qubits 724, logical qubits 726, and output routers 730, in the diagram are made of logical qubits (which are formed of two or more physical qubits 14) and gates applied on the logical qubits.

In the present invention as illustrated in FIG. 8, the generic framework for querying a memory of size $N = 2^n$ is made up of different stages where Stage I involves the $d \leq n$ most significant address bits and Stages II and **III** act on the remaining $n - d$ address bits, where $\boldsymbol{d}$ is defined as the number of linear routers $\mathcal{R}$ (e.g., routers 710) and where $n$ is the address bit length. Stage II is further broken up into two phases where Phase (a) acts on $d'$ address bits and Phase (b) involves the remaining $n - d - d'$ address bits, where $d'$ is the depth of router-in (controlled SWAP (CSWAP)) routers $\mathbf{R}$ (e.g., routers 720), where $n - d - d'$ is the depth of the controlled NOT (CNOT) tree (e.g., gate tree 722), and where $n - d$ is the depth of the router-out (CSWAP) routers $\mathbf{R}'$ (e.g., routers 730). In other words, the framework partitions the memory $N$ into sets of size $\lambda = 2^{n-d}$ and repeats Stage I for $\frac{N}{\lambda} = 2^d$ times so that every address can be accessed. For the specific choices of $N = 16$, d = 2, $d' = 1$ and when assuming the system is to query $x_0$ with $|a_3a_2a_1a_0\rangle = |0000\rangle$, the proposed design circuit can be visualized as a tree-like structure in FIG. 8. The parts of the tree-like structure that are activated while querying $x_0$ are highlighted in blue.

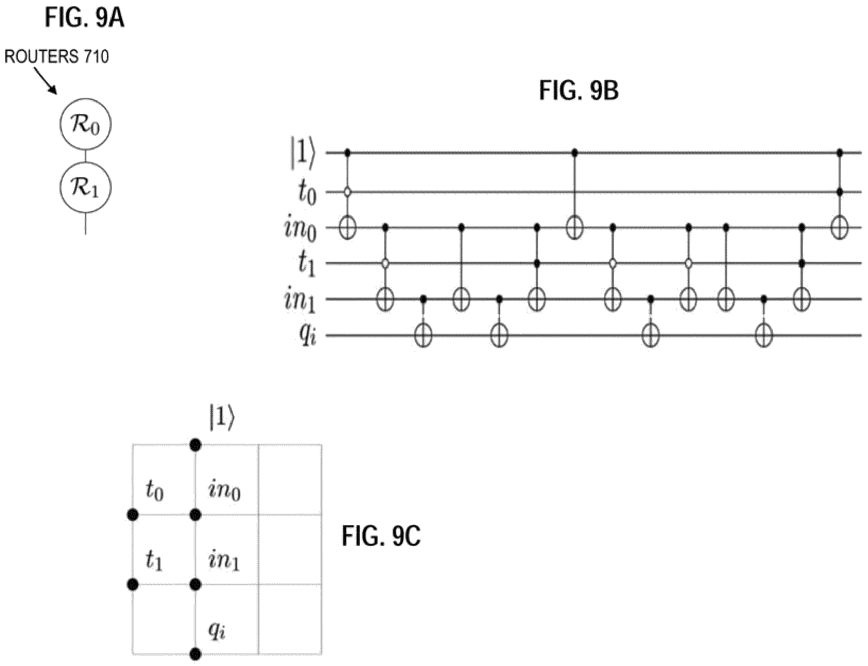

Stage I: This stage includes the SELECT component (e.g., routers 710) that "selects" a unitary $U_z$ controlled by an index state $|z\rangle$. In the present invention, the design circuit is used to set the state of qubit $q_i$ to $|1\rangle$ and continue to Stage II if and only if the index state $|i\rangle$ is equal to the state on the most significant $d$ address bits, i.e., $|i\rangle = |R_0R_1\rangle = |a_3a_2\rangle$. It is noted that the Stage II is repeated for every $i \in \{0, 1\}^d$. FIGS. 9A, 9B, and 9C depict designs for linear routers used in Stage I according to one or more embodiments. FIG. 9A depicts the SELECT component (e.g., routers 710) set to $|00\rangle$, while FIG. 9B depicts the quantum circuit for the SELECT component (e.g., routers 710) and FIG. 9C depicts the planar circuit layout for the SELECT component (e.g., routers 710).

Stage II: This stage is made up of two components: (i) the noise-resilient routers (e.g., routers 720) involving the middle d' address bits and (ii) $2^{d'}$ CNOT trees (e.g., gate trees 722) each of size $\gamma = 2^{n-d-d'}$. In other words, each $\lambda$-sized memory partition is further partitioned into $\gamma$-sized sets each of which is covered by a CNOT tree (e.g., gate trees 722).

When qubit $q_i$ is set to $|1\rangle$, Phase (a) uses the noise-resilient routers (e.g., routers 720) to activate one of the CNOT trees (e.g., gate trees 722) and Phase (b) activates all the $\gamma$ memory locations (e.g., memory locations of memory elements denoted by logical qubits 724) it corresponds to and maps the classical data in these memory locations (e.g., locations of logical qubits 724) into the corresponding $q'_j$ qubits (e.g., into logical qubits 726 coupled to the logical qubits 724 that have been activated by the CNOT tree 722).

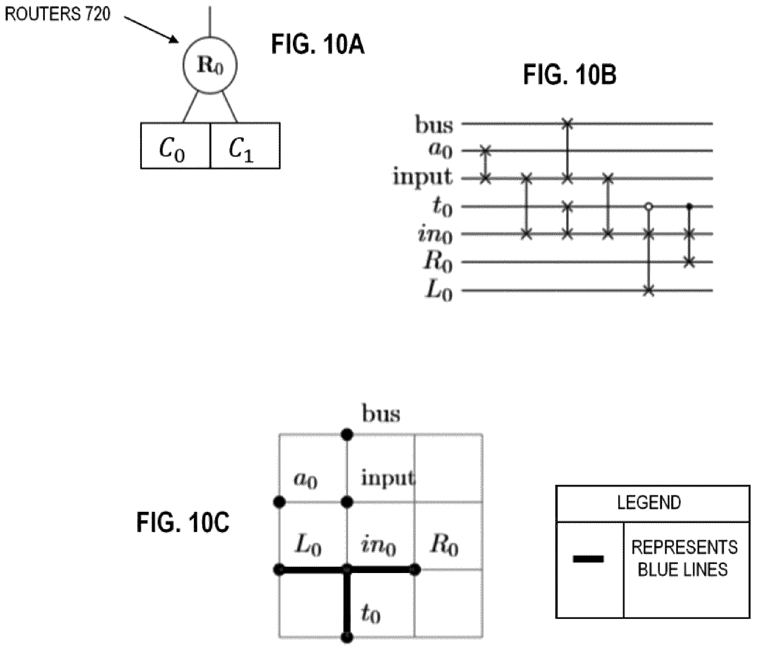

(i) Noise-resilient routers: These routers (e.g., routers 720 in Stage II as well as router 730 in Stage III) are meant to act like a switch such that when the router is set to 0, the router routes any qubit (value) to the left. Analogously, when the router is set to 1, the router routes any qubit (value) to the right. FIG. 10A depicts the non-resilient router (e.g., router 720) connected to child nodes $C_0$ and $C_1$, which are each a logical qubit 724 at the corresponding memory location. FIG. 10B depicts the quantum circuit of the non-resilient router (e.g., router 720) that captures the router's behavior, and FIG. 10C depicts how the non-resilient router (e.g., router 720) can be laid out assuming a planar nearest neighbor architecture. The bus qubit is the one that will be routed to the appropriate child node corresponding to the router's state. A state-of-the-art reference showed that this router construction is resilient to generic noise in "Resilience of Quantum Random Access Memory to Generic Noise" by Connor T. Hann, Gideon Lee, S. M. Girvin, and Liang Jiang, in PRX Quantum 2, 020311, published 29 April 2021, for non-resilient routers discussed herein. The above reference only showed that FIG. 10B is resilient to noise as FIG. 10B can be considered as a schematic for layouts with all-to-all connectivity. According to one or more examples, the present disclosure also makes FIG. 10C resilient to noise and reduces resource counts.

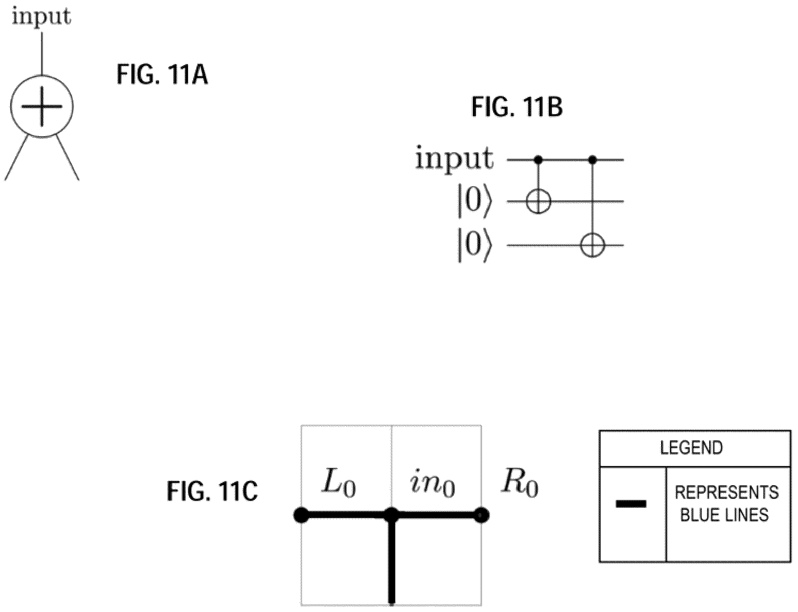

ii) CNOT routers: These routers (e.g., CNOT gates of the gate tree 722) take a 0 or 1 signal from the input node and propagate it to their child nodes. In the example in FIG. 8, the child nodes are illustrated as the logical qubits 724 (e.g., memory elements). In one or more embodiments, the depth of the gate tree 722 can be increased such that a CNOT gate can output a signal to one or more other CNOT gates as child nodes in the gate tree 722 before a signal is eventually output to the logical qubits 724. FIG. 11A depicts the notation for a CNOT router (e.g., CNOT gate in the gate tree 722) with two child nodes (which could be logical qubits as memory elements and/or other CNOT routers that eventually will have logical qubits as the child nods), while FIG. 11B depicts the quantum circuit construction for the CNOT router and FIG. 11C depicts the planar nearest neighbor layout for the CNOT router.

Stage III: This stage consists of noise-resilient routers (e.g., output routers 730) to route-out the $q'_j$ qubit (value) where $j$ corresponds to the value on the least significant $n$ - $d$ address bits, i.e., $j = a_1a_0 = 00$. This serves to read out the correct bit of information because the $q'_j$ s satisfy the following system of equations:

$$q'_0 = q_0 x_0 + q_1 x_4 + q_2 x_8 + q_3 x_{12} \; ;$$

$$q'_1 = q_0 x_1 + q_1 x_5 + q_2 x_9 + q_3 x_{13} \; ;$$

$$q'_2 = q_0 x_2 + q_1 x_6 + q_2 x_{10} + q_3 x_{14} \; ;$$

and

$$q'_3 = q_0 x_3 + q_1 x_7 + q_2 x_{11} + q_3 x_{15} .$$

When i = 00, only $q_0$ = 1 and all other $q_j$s are 0 such that $q'_j = x_j$ , and with $j$ = 00, only $q'_0$ is routed out (of the output routers 730) with the value at location $x_0$ (for logical qubit 724). In this example, the output/readout to the output register 708 is $q'_0 = x_0$ , where $x_0$ corresponds to the value of the logical qubit 724 at the corresponding memory location of 0000.

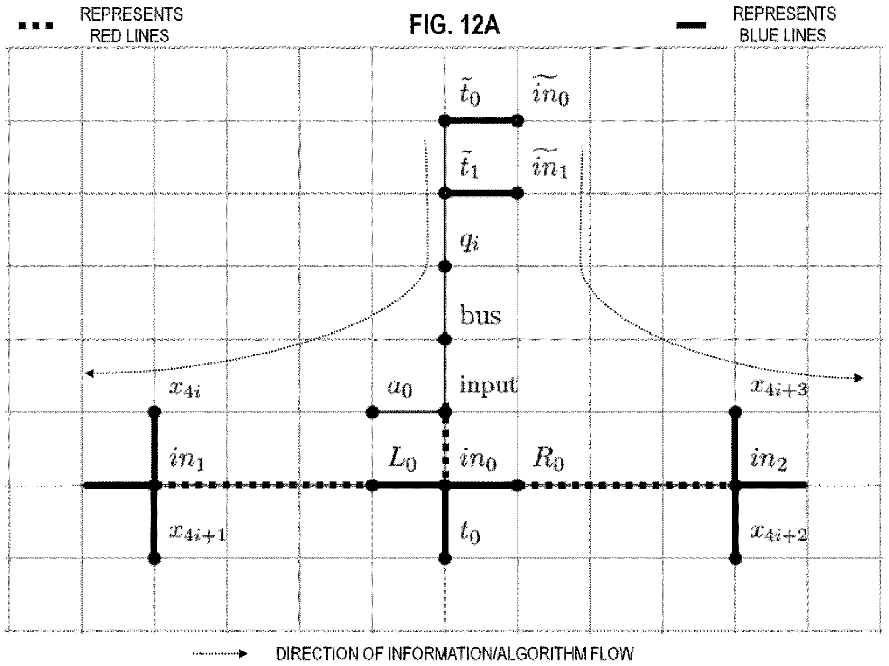

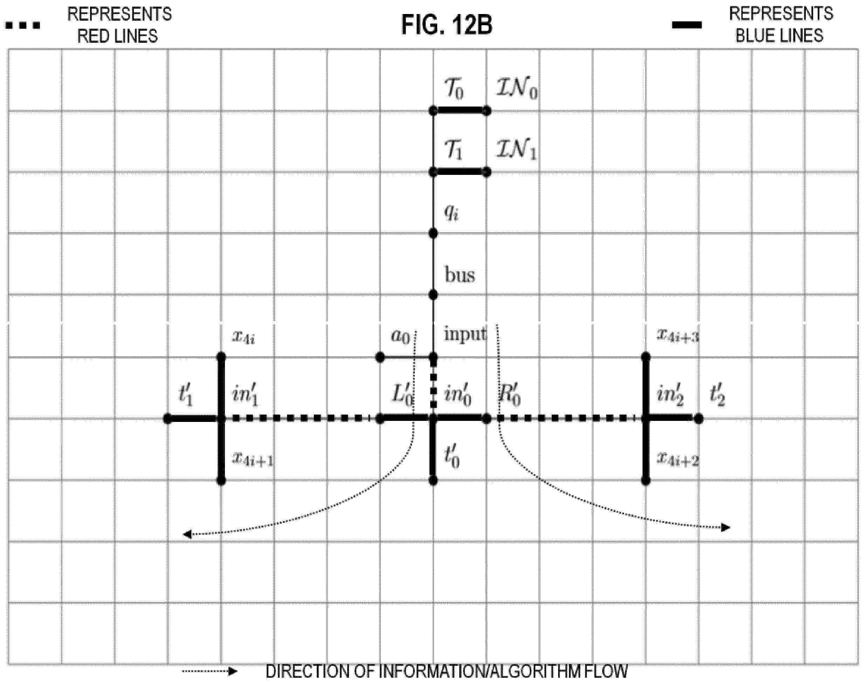

While this design has been shown to work for a single address, all the arguments carry over to superposition queries by linearity as well. The complete design circuit for a generic quantum data lookup in FIG. 8 is laid out on a planar nearest-neighbor architecture as shown in FIGS. 12A and 12B. The qubits used for route-in in Stages I and II in FIG 12A can be reused for route-out in Stage III in FIG 12B. In both cases, the signals flow from the top of the figure to the center and then radiate out to the left and right edges of the figure.

It is noted that the qubits for Stage II is to be laid out optimally on a planar grid growing in the T-tree design that can be considered as loosely related to the H-tree design that has found applications in very-large-scale integration (VLSI) design and microwave engineering. The present disclosure performs remote CNOTs and remote CSWAPs (along the red lines in FIG. 12) in $O(1)$ depth using GHZ states as resources. The present disclosure uses measurement fixups and resets auxiliary qubits after their use but only after ensuring that they are separable from the rest of the system.

The discussion in FIG. 8 has illustrated single-bit readout according to one or more embodiments, and further details are discussed in Section IV. Additionally, one or more embodiments apply to various types of readout including parallel multi-bit readout and sequential multi-bit readout. Turning to multi-bit readout, one or more embodiments extend the design to read out $b > 1$ bits of data in two different ways for parallel readout and sequential readout, where $b$ is the number of address bits.

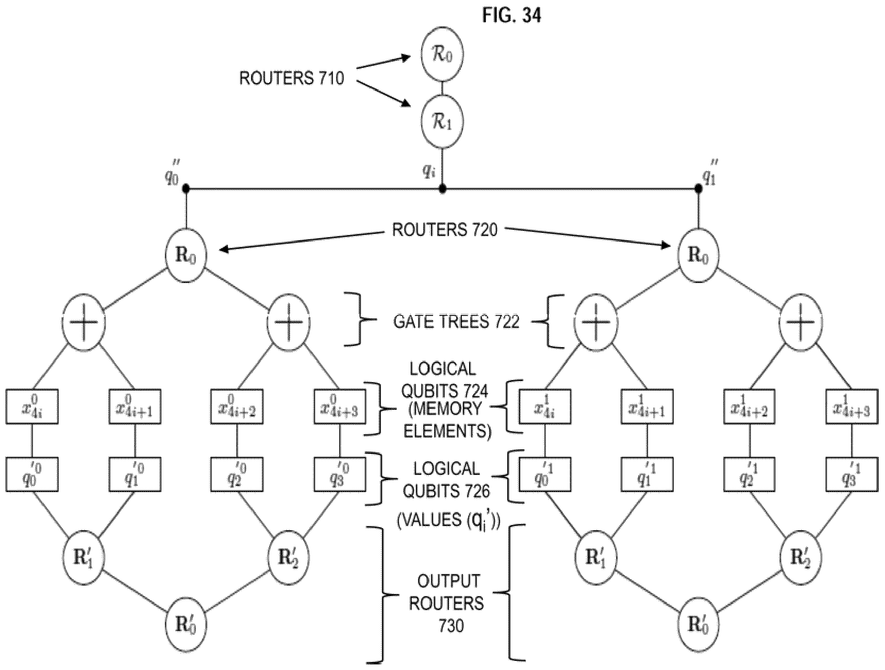

For parallel multi-bit readout, the present disclosure makes $b$ copies of the address bits and $b$ copies of the single bit design in FIG. 8. Hence, in parallel, the present disclosure can read out bit $i$ from the ith copy of the design. The total query depth is independent of $b$, i.e., it is $O(n)$. Further details of the parallel multi-bit readout are discussed in Section V and FIG. 34.

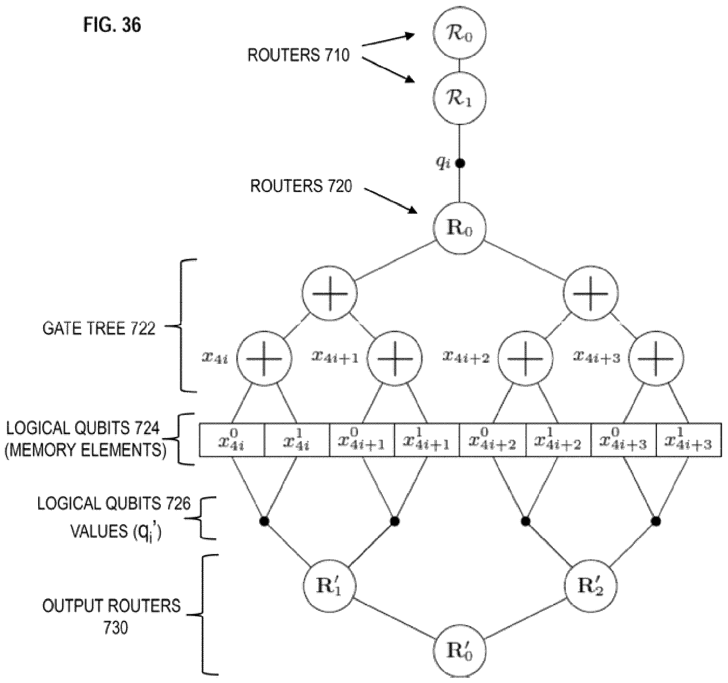

For sequential multi-bit readout, the present disclosure uses (only) one copy of the single bit design in FIG. 8, except that each $q_i'$ block corresponds to $b$ bits laid out in the T-tree fractal pattern. Because there is only one path for route-out from each $q_i'$ block, the bits are read out sequentially. The query depth has an $O(b)$ additive factor, i.e., it is $O(n + b)$. Further details of the sequential multi-bit readout are discussed in Section V and FIG. 36.

Turning to limited long-range connectivity, the present disclosure provides the effect of connectivity on the proposed designs under the assumption that there is a finite number of long-range operations that can be done without long-range errors. By splitting these resources between route-in and route-out operations, one or more embodiments illustrate that for certain choices of the split, the infidelity for single-bit read out can be improved to $\tilde{O}\left(\sqrt{N}\right)$. Further details of the sequential multi-bit readout are discussed in Section VI.

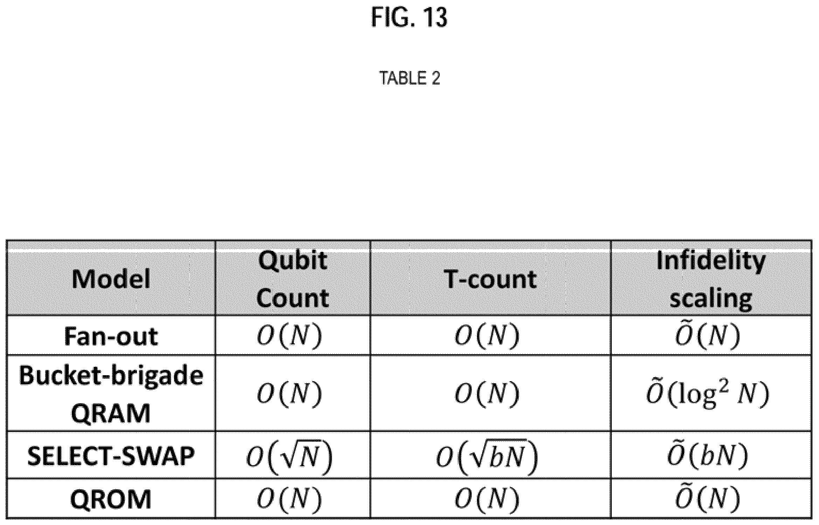

Technical solutions, effects, and benefits are provided by one or more embodiments. One or more embodiments of the design circuit provide a generic framework for data lookup that achieves or recovers previous results for different choices of parameters while also producing new design circuits with better scaling of costs. For instance, with $d = 0$, $d' = n$, the present disclosure achieves or recovers the noise-resilient bucket brigade QRAM design. As another example, with $d = \dfrac{n}{2}$, $d' = 0$, the present disclosure achieves or recovers a variant of the SELECT-SWAP design. Also, with $d = n$, $d' = 0$, the present disclosure achieves or recovers the results of the QROM design. For comparison, the cost of scaling for state-of-the-art results is presented in Table 2 of FIG. 13 under the caveat that they assume all-to-all connectivity for the qubits, i.e., all long-range operations occur without errors. Re-evaluating the infidelity scaling for these state-of-the-art designs under planar nearest-neighbor connectivity conditions would only cause the state-of-the-art designs to scale as $O(N^c)$ for $c \geq 1$. By contrast, from Table 1 in FIG. 6, the designs of the present disclosure achieve sublinear scaling in all costs simultaneously, which means that an increase in the memory size $N$ does not require a linear increase in the size of the quantum circuit according to one or more embodiments. As noted herein, the cost of scaling refers to the qubit count, T-count, and/or infidelity scaling.

There are various differences in design circuits of one or more embodiments over the state-of-the-art. Differences from one state-of-the-art design include the following: (i) the present disclosure considers planar nearest-neighbor connectivity while the state-of-the-art assumes all-to-all connectivity; and (ii) the present disclosure considers a more fine-grained error analysis by breaking up the errors based on their sources such as gate errors, idling errors, long-range errors, etc., to better demonstrate how each of them affects designs of embodiments.

The present disclosure improves on a state-of-the-art design because one or more embodiments disclose the fine-grained error analysis, and the state-of-the-art does not explicitly account for errors in performing long-range operations under nearest-neighbor connectivity assumptions. Additionally, the state-of-the-art design is not resilient to Z errors while the design circuits in one or more embodiments are resilient to generic noise including both Z and X errors.

The present disclosure improves on Select-Swap in the state-of-the-art that provides linear error scaling, thereby achieving sub-linear error scaling. Additionally, if some long-range connectivity is assumed, the present disclosure can achieve better error scaling.

Although the state-of-the-art may consider multi-bit words, their designs also assume all-to-all connectivity and the state-of-the-art designs are not restricted to a planar nearest-neighbor layout where errors can occur for long-range operations. As noted herein, the design circuits of one or more embodiments are for the planar nearest-neighbor layout not all-to-all connectivity of qubits, thereby reducing errors.

A reason to be concerned about better infidelity scaling is not just the accuracy on a single query bit but also that infidelity scaling would imply lower overheads for fault tolerance so fewer physical resources (e.g., few physical qubits 14) would be needed to implement these components at scale. Unlike other designs built on the QRAM or QROM in the state-of-the-art, the design circuit of the present disclosure are able to achieve space-time tradeoffs where space corresponds to number of qubits required and time maps to the circuit depth for executing a query.

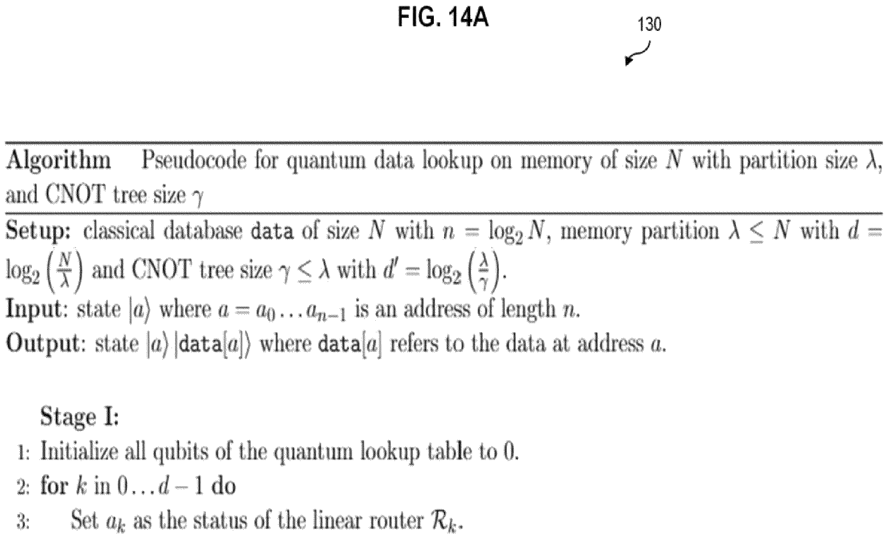

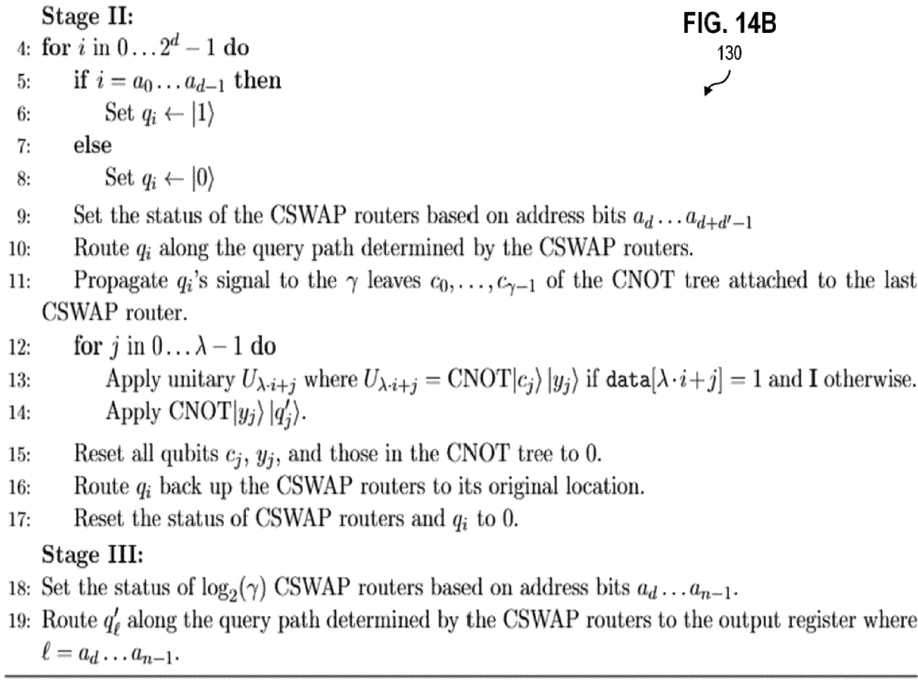

FIGS. 14A and 14B illustrate execution of an algorithm 130 for quantum data lookup on circuit designs in FIGS. 8, 34, and 36 in accordance with the present invention. As a general technique that is utilized with the circuit designs in FIGS. 8, 34, and 36, the algorithm 130 is presented as pseudocode for quantum data lookup on memory of size $N$ where $n = \log_2 N$, with memory partition size $\lambda \leq N$, where $d = \log_2 \left(\frac{N}{\lambda}\right)$, and CNOT tree size $\gamma \leq \lambda$ where $d' = \log_2 \left(\frac{\lambda}{\gamma}\right)$, all of which are known in advance and the quantum circuit has been physically structured accordingly. One or more embodiments provide resource-efficient quantum data lookup circuit designs for planar nearest-neighbor quantum architectures resilient to generic noise.

In Stage I of FIG. 14A, all qubits in the lookup table of the circuit design are set to 0. The input address $a$ has a length $n$ and the first $d$ bits of $a$, $a_0 \ldots a_{d-1}$, are the input to the linear routers. Lines 2 and 3 indicate that the linear routers $\mathcal{R}_k$ (e.g., linear routers $\mathcal{R}_0$ and $\mathcal{R}_1$) are set to $a_k$.

In Stage II of FIG. 14B, lines 4, 5, 6, 7, and 8 indicate that the linear routers $\mathcal{R}_k$ (e.g., linear routers $\mathcal{R}_0$ and $\mathcal{R}_1$) check if loop variable $i = a_0 \ldots a_{d-1}$, the initial part of the input address $a$ and accordingly output a value for $q_i$. The process is repeated i times until reaching the maximum value of $i$.

Line 9 sets the status of CSWAP routers (e.g., routers 720 ($\mathbf{R_0}$)) according to the address bits $a_d \ldots a_{d+d'-1}$, such that the CSWAP routers (e.g., routers 720 ($\mathbf{R_0}$)) can output to the left or right based on the input. Line 10 indicates to route the value of $q_i$ according to the router determined by the CSWAP routers.

Line 11 indicates that the last most CSWAP routers (e.g., routers 720 ($\mathbf{R_0}$)) sends the signal of the $q_i$ to the $\gamma$ leaves $c_0, \ldots, c_{\gamma-1}$ of the CNOT tree (e.g., CNOT tree 722), where each CNOT gate is a leaf. For $j = 0 \ldots \lambda - 1$, lines 12, 13, and 14 indicate that unitary operations are performed for leaves in the CNOT tree (e.g., CNOT gate tree 722) for the values of $j$ according to conditions. At a location (such as for logical qubits 724), line 13 indicates that the unitary operation is a CNOT gate on logical qubits $c_j$, and $y_j$ when the condition of data$[(\lambda \cdot i) + j] = 1$ is met, and when the condition is not met (i.e., data$[(\lambda \cdot i) + j] = 0$), line 13 applies an identity matrix $I$ (which does nothing). For the memory location (for logical qubits 724), it is noted that logical qubit $c_j$ is the qubit carrying the signal from the gate tree 722) and logical qubit $y_j$ is the qubit that will store the data from the classical database. Using FIG. 8 as an example, the logical qubits 724 can be at locations $x_{4i}$, $x_{4i+1}$, $x_{4i+2}$, and $x_{4i+3}$.

After the value of logical qubit $y_j$ is set, line 14 indicates that a CNOT gate is performed between the logical qubit $y_j$ and the logical qubit $q'_j$ (logical qubits 726) in order to add the value of logical qubit $y_j$ to the value $q'_j$. This process of lines 12, 13, and 14 is repeated for $j$ times until the maximum value for $j$ is reached. Using FIG. 8 as an example, this results in the values for the $q'_j$ s which may include any of $q'_0 = q_0 x_0 + q_1 x_4 + q_2 x_8 + q_3 x_{12}$ ; $q'_1 = q_0 x_1 + q_1 x_5 + q_2 x_9 + q_3 x_{13}$ ; $q'_2 = q_0 x_2 + q_1 x_6 + q_2 x_{10} + q_3 x_{14}$ ; and/or $q'_3 = q_0 x_3 + q_1 x_7 + q_2 x_{11} + q_3 x_{15}$ .

After the values for the $q'_j$ s have been updated, line 15 is to reset all logical qubits $c_j$, $y_j$ (e.g., logical qubits 724) and logical qubits in the CNOT tree (e.g., CNOT tree 722) to 0. This does not reset the values of the logical qubits $q'_j$ s (e.g., logical qubits 726 are not reset because they hold the values (via entanglement) that will eventually be readout at the end).

Lines 16 and 17 are to route the signal $q_i$ back up the CSWAP routers (e.g., routers 720) to its original location, and to reset the status of the CSWAP routers (e.g., routers 720) and $q_i$ to 0. The process of lines 4-17 is repeated/loops for $i$ times until reaching the maximum value of $i$.

In Stage III of FIG. 14B, the lines 18 and 19 set the status of the CSWAP routers (e.g., CSWAP 730 such as ($\mathbf{R'}$)) based on the address bits $a_d \ldots a_{n-1}$ and route via the CSWAP routers (e.g., CSWAP 730) the corresponding values (i.e., readouts) for the appropriate logical qubits $q'_j$ s to the output register 708. When $\ell = a_d \ldots a_{n-1}$, this procedure will route the value of $q'_\ell$ to output register 708. This reads the correct memory location because the address can be represented as $a = \lambda \cdot i + \ell$ where $\ell \equiv a \pmod{\lambda}$ holds as $\ell$ is an $(n - d)$ bit number. It should be appreciated that some values of the logical qubits 726 may not be routed out through the output routers 730.

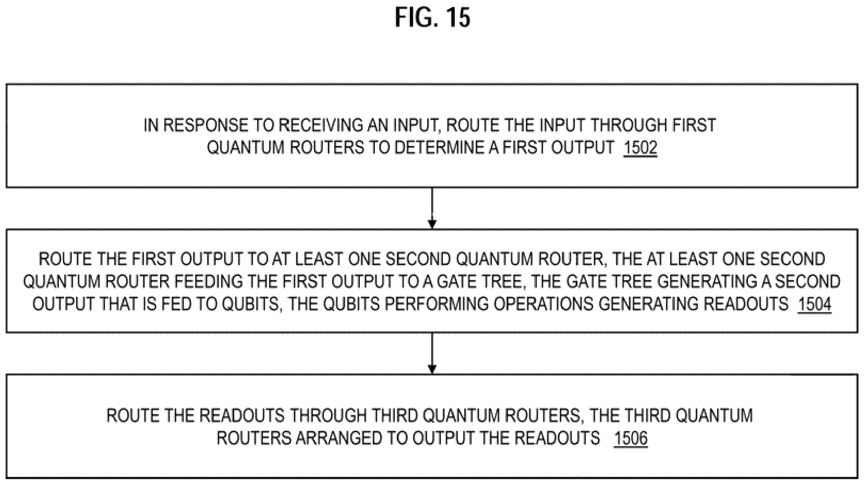

FIG. 15 is a flowchart of a computer-implemented method 1500 for quantum lookup on a quantum computer according to one or more embodiments. Reference can be made to any figures discussed herein.

At block 1502, the method includes, in response to receiving an input (e.g., from an input register 702), routing the input through first quantum routers (e.g., linear routers 710 depicted in, for example, FIGS. 8, 34, and 36) to determine a first output (e.g., a signal 704 ($q_i$)). At block 1504, the method includes routing the first output to at least one second quantum router (e.g., one or more routers 720 depicted in, for example, FIGS. 8, 34, and 36), the at least one second quantum router feeding the first output to a gate tree (e.g., gate trees 722 depicted in, for example, FIGS. 8, 34, and 36), the gate tree generating a second output that is fed to qubits (e.g., logical qubits 724 and 726 depicted in, for example, FIGS. 8, 34, and 36), the qubits performing operations generating readouts. At block 1506, the method includes routing the readouts through third quantum routers (e.g., routers 730 depicted in, for example, FIGS. 8, 34, and 36), the third quantum routers arranged to output the readouts (e.g., to a registers(s) 708).

The input includes an address (e.g., address bits) having a length (e.g., address bit length $n$). The readouts (e.g., output to the output register 708) include data (e.g., the correct $q'_j$ s which may include any of

$$q'_0 = q_0 x_0 + q_1 x_4 + q_2 x_8 + q_3 x_{12} \quad ; \qquad q'_1 = q_0 x_1 + q_1 x_5 + q_2 x_9 + q_3 x_{13} \quad ;$$

$q'_2 = q_0 x_2 + q_1 x_6 + q_2 x_{10} + q_3 x_{14}$ ; and/or $q'_3 = q_0 x_3 + q_1 x_7 + q_2 x_{11} + q_3 x_{15}$ , when using FIG. 8 as an example) based on the input.

The first quantum routers (e.g., routers 710 in FIGS. 8, 34, and 36) include linear routers. The second quantum routers (e.g., router 720 in FIGS. 8, 34, and 36) include a CSWAP router. The gate tree (e.g., gate trees 722 in FIGS. 8, 34, and 36) include CNOT gates. The third quantum routers (e.g., routers 730 in FIGS. 8, 34, and 36) include CSWAP routers.

The disclosure provides a discussion of techniques that are initiated in an algorithm 130 of the software 111 executed on, for example, the classical computer 100 in operative communication with the quantum computer 10 in order to control one or more operations on the quantum computer 10 to perform quantum lookup by executing the algorithm 130 as discussed herein. Headings and subheadings are utilized for ease of understanding and to assist the reader. The headings and subheading are not meant to be limiting.

## I. INTRODUCTION

Many quantum algorithms can provide increases in speed over their corresponding classical algorithms. Examples include algorithms for Hamiltonian simulation and quantum machine learning. These algorithms usually require repeated access to classical data, which encodes the problem instance, throughout the computation. Conceptually, a theoretically structured universal model known as a quantum oracle is employed to facilitate this data access. This is natural since most quantum algorithms can be phrased under the oracle query model. To achieve a practical quantum advantage, it is useful to detail the implementation of the data access methods and ensure they meet specific criteria. However, identifying a feasible implementation for these data access schemes continues to be a challenge.

The quantum lookup table is a generic framework that facilitates the data access procedure for quantum algorithms. By analogy to the classical lookup table that returns data $x_i$ for a specified address bit $i$, the quantum lookup table responds with a superposition of data $\sum_i \alpha_i |i, x_i\rangle$ when queried by a superposition of address bits $\sum_i \alpha_i |i, 0\rangle$. In practice, a classical lookup table is typically realized by Random Access Memory (RAM) providing constant data access time at an almost vanishing error rate. On the quantum side, the quantum lookup table acts as an analogue, extending the quantum oracle in a specific manner. Nonetheless, there are multiple architectures designed to achieve this implementation, known by various names such as QRAM, QROM, and SELECT-SWAP circuits. In the end, they all accomplish the same function call, but they come with varying trade-offs in error rates, query times, and resource costs.

Although the quantum lookup table is valuable for quantum algorithms to succeed, it may be difficult to realize. The challenge in designing a practical quantum lookup table lies in ensuring fault-tolerant quantum circuits. The quantum circuit usually consists of Clifford gates and T-gates, and synthesizing a high-fidelity T-gate usually involves a resource-intensive process. Thus, reducing the T-gate count without compromising fidelity is paramount in circuit design. Additionally, the efficacy of a quantum lookup table is contingent upon its query time being commensurate with the total runtime of the algorithm. Otherwise, the overhead associated with data retrieval could compromise the quantum advantage. A recent study showed that there exists a QRAM design that is error resilient. Therefore, practical quantum lookup tables should uphold this error resilience, aim for a high success rate, and optimize the T-gate count, query duration, and qubit consumption.

For near-term applications, the significance of the T-gate count supersedes circuit depth (which directly relates to query time), especially for circuits with a limited number of available qubits. This is because the restricted number of designated qubits used for T-gate generation results in additional cycles needed to produce the required quantity of T-gates for the circuit, effectively nullifying the benefits of a smaller circuit depth. One might think if one reduces the error of the magic state that generates a T-gate, fewer qubits for the T-gate are necessary, making it seem as though circuit depth holds greater importance. However, with a local layout, the optimal infidelity dependency on T-gate scales sublinearly in memory size which restricts the extent to which magic state distillation can be improved. Hence, it becomes valuable to pinpoint the bottleneck affecting the actual running time in near-term devices. The present disclosure has found and provides the optimal configuration of a quantum circuit that produces the most efficient overall runtime, taking into account multiple factors rather than relying solely on circuit depth.

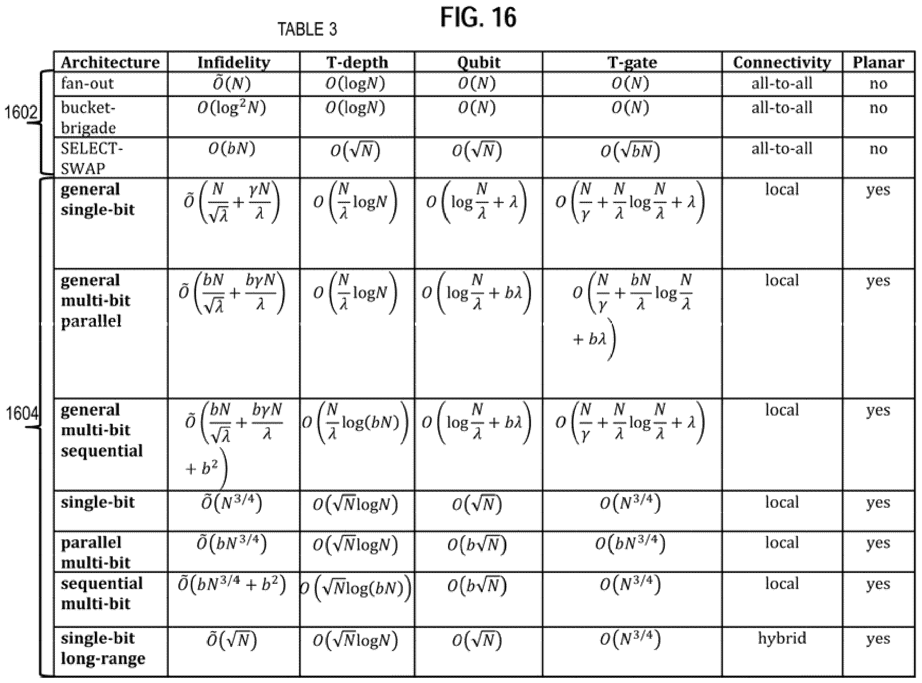

State-of-the-art circuit architectures include fan-out, bucket-brigade, and SELECT-SWAP circuits, whose properties are summarized in part 1602 in Table in FIG. 16. These results in part 1602 are all based on the ideal assumption of all-to-all connectivity, i.e., multi-qubit gates can be applied on any subset of qubits without additional overhead. In fact, most real-world quantum devices require qubits to be physically adjacent for direct interactions. There has been ongoing work regarding variants of QRAM, and review articles on the limitations in the end-to-end implementation. From what it appears, there has been no comprehensive investigation into designing a resilient quantum lookup table framework for real-world applications that takes into account both resource limitations and local connectivity, which is presently provided in accordance with one or more embodiments.

One or more embodiments provide a design circuit as a generic error-resilient quantum lookup table framework, complete with fine-tuned scaling of infidelity, T-gate count, and qubit count. The framework comprises distinct components including routers 710, routers 720, gate trees 722, logical qubits 724, logical qubits 726, and routers 730 during both route-in and route-out procedures with varying parameters, which can be assembled in various configurations to yield different costs. It can be shown that all the state-of-the-art designs are just one of the special cases of the framework in certain parameter regimes of one or more embodiments, while the parameters for design circuits of embodiments can be further tuned for improvements over the state-of-the-art. Further, according to one or more embodiments, the framework permits a smooth transition between local connectivity (e.g., nearest-neighbor connectivity) and all-to-all connectivity when varying the long-range connection budget. The present disclosure determines the regime of parameters that yield improved asymptotic costs and also provide a detailed layout for qubits restricted to a planar lattice.

The present disclosure assigns errors to each gate type present in the circuits. This approach of the present disclosure contrasts with the current literature where a generic $\varepsilon$ error is uniformly assigned to all gates. By having such fine-tuned gate errors, the present disclosure distinguishes which gate errors significantly influence error scaling. Thus, in real-world applications, it becomes feasible to focus on optimizing the performance of these particular gates to mitigate the bottlenecks in error scaling. While achieving optimal scaling in every dimension may be infeasible, the framework allows one to make trade-offs tailored to their specific requirements and constraint conditions in accordance with embodiments. The results of one or more embodiments, based on particular parameter selections, are summarized in part 1604 in Table 3 of FIG. 16 and in Theorems below.

Table 3 of FIG. 16 illustrates resource scaling for state-of-the-art results in part 1602 and embodiments in part 1604 in terms of memory size $N$ and word size $b$. The $\gamma$ and $\lambda$ are the tuning parameters one can choose in embodiments, where both are powers of 2, $\lambda \in [1, N]$, and $\gamma \in [1, \lambda]$. The bottom four rows in Table 3 show scaling results for the particular choice of $\lambda = \sqrt{N}$, and $\gamma = N^{1/4}$. Detailed scaling of resources and error will be shown in the later sections.

**Theorem I.1** (Informal version of Theorem IV. 5 and Corollary IV.6). *There exists a single-word quantum lookup table that has sublinear scaling in infidelity, T-gate count, and qubit count, with planar layout and local connectivity.*

**Theorem I.2** (Informal version of Theorem V.1 and Theorem V.2 ). *For constant word size b, there exist multi-bit word quantum lookup tables that have sublinear scaling in infidelity, T-gate count, and qubit count, with planar layout and local connectivity.*

**Theorem I.3** (Informal version of Corollary VI.3). *With a finite amount of long-range connections, there exists a single-word quantum lookup table whose infidelity can be tuned between $\tilde{O}(N^{1/2})$ and $\tilde{O}(N)$ while maintaining sublinear scaling in T-gate, and qubit counts, with planar layout and local connectivity.*

Design circuits of the present disclosure serve as a link that bridges the gap between the current state-of-the-art theoretical quantum lookup table architectures and near-term end-to-end implementations of quantum algorithms. While most literature is optimistic about the wide applications of quantum lookup tables with a logarithmic infidelity assumption, the present disclosure implements design circuits that permit sublinear infidelity scaling, given the limited budget of long-range connectivity on near-term devices.

The organization of the sections are outlined as follows. Examination of the state-of-the-art is discussed in Section II. Section III presents an elementary planar layout along with a thorough analysis of the elementary planar layout. This analysis lays the foundation for subsequent frameworks disclosed in one or more embodiments. According to one or more embodiments, Section IV presents generic frameworks that are robust against X error and generic error, respectively. The present disclosure provides extensions of the generic framework to accommodate multi-bit readout in Section V according to one or more embodiments. Section VI provides the effect of implementing long-range connections according to one or more embodiments.

## II. CONSIDERATION OF CURRENT DESIGNS

Four key parameters are considered that affect the cost of a QRAM, which are *circuit depth, qubit count, T-gate count,* and *infidelity.* The time it takes to query a memory location is determined by the circuit depth. To claim a quantum advantage over classical algorithms, this circuit depth has to be factored into the overall runtime of the quantum process. For example, to achieve any exponential separation, the circuit depth has to scale poly-logarithmically in memory size. The qubits are used to maintain memory and router status and occasionally act as control ancilla bits. Quantum devices that are currently available are relatively small, often having a few dozen to a few hundred qubits. Considering such constraints in near-term devices, a QRAM design with sublinear qubit scaling becomes more desirable as is provided in one or more embodiments. T-gates, which are for achieving the routing behavior of routers, are non-Clifford gates that remain difficult to physically implement without substantial resources. Hence, in a practical circuit design, the T-gate count should be minimized as is provided in one or more embodiments. The infidelity captures how far the state output by the QRAM is from the ideal state after a single query. The infidelity scales as a function of memory size multiplied by a generic gate error $\varepsilon$. Thus, for a constant target query error, lower infidelity provides more tolerance to gate errors and flexibility for larger memory size, as is proved in on or more embodiments.

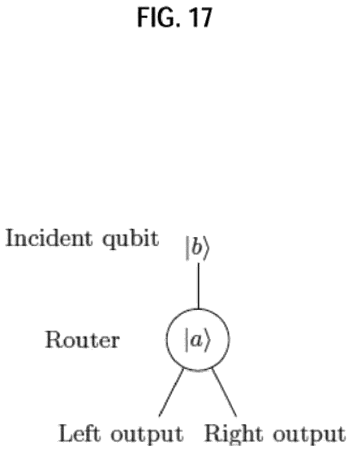

In classical memory, transistors transmit the bus signal to the specific memory location determined by the input address bit and relay the memory bit to the output register. Similarly, in FIG. 17, quantum routers navigate the quantum bus bit to a memory location determined by the input address containing the classical data, and subsequently output a corresponding quantum bit. FIG. 17 depicts a high-level description of a quantum router, where the quantum router status is set to $|a\rangle$. Incident qubit $|b\rangle$ is be routed to the left when the router state is set to $|0\rangle$ and routed to the right when the router state is set to $|1\rangle$. The circuit design of the quantum router plays a pivotal role in determining the properties of the QRAM.

a. Fan-out. The fan-out architecture can be visualized as a binary tree of depth log N, where the N memory bits are situated at the tree's leaves. Every non-leaf node in this tree functions as a router, which can guide the bus signal to its left or right child. Routers on the $\ell$-th level are determined by the $\ell$-th address bit via entanglement. A significant drawback of this setup is its high linear infidelity. If a single router gets corrupted, it has the potential to flip all other routers on that same level, misdirecting the query to an incorrect memory path. Consequently, an optimal configuration should not have all routers entangled with the address bits, as is provided in one or more embodiments.

b. Bucket-brigade. The bucket-brigade method refines the fan-out architecture by activating only the routers along the query path. As a result, merely the log N routers in the binary tree get entangled with the address bits, and all other routers are weakly entangled with the system. A study demonstrated that the bucket-brigade model yields $O(\log N)$ infidelity, which is resilient to any generic gate error. The study observed that errors from a faulty branch cannot spread to a non-faulty branch and proved that the infidelity scales as a product between the number of active routers in a query path and the circuit depth. However, the study assumed all-to-all connectivity, which is a simplification in theory to understand the fundamental properties and capabilities of the framework without getting disturbed by the constraints of the current hardware. When it comes to implementation on real quantum hardware, additional gates and qubits are utilized for interactions between non-local qubits, which can lead to an undesirable asymptotic scaling of infidelity. A subtle limitation often not discussed is the poor linear dependence on memory size in both T-gate and qubit counts for this model. This could result in a greater desire for physical qubits when considering fault tolerant implementations. Additionally, the lack of differentiation among gate error types poses an issue because the lack of differentiation does not shed light on which operations or gates specifically hamper overall performance. Addressing these concerns is valuable to harness the full potential of the bucket-brigade approach in practical scenarios, which are addressed in one or more embodiments.

c. SELECT-SWAP. The quantum lookup table is structured using alternating SELECT and SWAP circuits. Address bits are partitioned into two sets, each controlling one of the two circuits. While the SELECT circuit is deep, scaling exponentially with the number of control qubits, the SELECT circuit uses fewer qubits for its implementation. The SWAP circuit operates like a chain of routers, directing the desired memory bit to the output register. The SELECT-SWAP circuit has a better scaling in both T-gate and qubit count but suffers from linear infidelity scaling. This limits the number of classical data bits that can be accurately accessed using SELECT-SWAP for a given quantum algorithm.

III. NAÏVE CONSTRUCTION

The present disclosure extends the bucket-brigade model with all-to-all connectivity to a planar layout assuming local connectivity (e.g., nearest neighbor connectivity). In Section III A, presented is a straightforward planar layout of the bucket-brigade model to illustrate the concept. The present disclosure conducts a fine-tuned infidelity analysis that is improved by quantum teleportation in Section III B. Sections III C and III D modify the basic layout to enhance its T count and qubit count, respectively. Even though the methods in this section do not lead to ideal scaling, they are useful in understanding the building blocks used for a generic construction in the upcoming sections according to one or more embodiments.

A. Planar layout of bucket-brigade model

The present disclosure provides a planar layout scheme for the bucket-brigade QRAM, assuming that multi-qubit gates act solely on adjacent qubits. The present disclosure first demonstrates a model with two memory locations, where the routing scheme is depicted as a binary tree in FIG. 10A. To reach the desired memory allocation, a single router $R_0$ is employed to direct incoming control qubits into the designated memory location. The arrangement utilizes the same path for routing out the stored data $x_i$. The binary tree representing the high-level routing scheme may not appear beneficial during basic case analysis. However, the binary tree will enhance comprehension as the scheme grows more intricate.

Next, it should be appreciated that a circuit description is provided of a QRAM router as introduced in the "*Resilience of Quantum Random Access Memory to Generic Noise*" by Connor T. Hann et al. Each router is composed of four qubits ($t_0$, $in_0$, $L_0$, and $R_0$), as illustrated in FIG. 10B. The complete memory query procedure can be divided into three phases: *address setting, qubit routing-in*, and *qubit routing-out.* During the address setting phase, the incident address qubit $a_0$ is first temporarily stored in register $in_0$ and then swapped to the status register $t_0$. Once the $t_0$ register is set by an address bit, the $t_0$ register stays active to maintain an open routing path. During the qubit routing-in phase, the bus qubit gets swapped into the desired memory location that is connected to $R_0$ or $L_0$. In FIG. 10B, the circuit for qubit routing-out is not explicitly depicted. However, in the basic layout, the routing-out process is implemented as a reverse of the routing-in process, making the circuit straightforward and intuitive.

For the planar layout with nearest-neighbor connectivity assumption, each router's four qubits can be arranged in a *T-shaped* configuration as shown in FIG. 10C. In FIG. 10C, the black dots at the intersections of the grid represent pre-allocated qubits. This configuration ensures that each router qubit can be adjacent to any other router qubit with at most one local swap. The three-qubit CSWAP gate depicted in FIG. 10B can be decomposed into a sequence of Clifford and T gates that operate on at most two qubits. As a result, the planar layout is capable of executing the memory query procedure using CNOT gates.

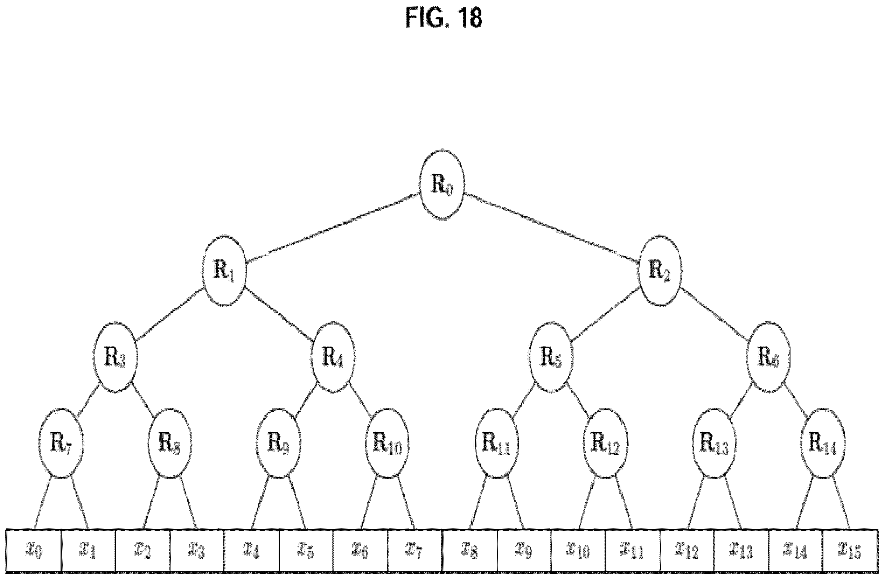

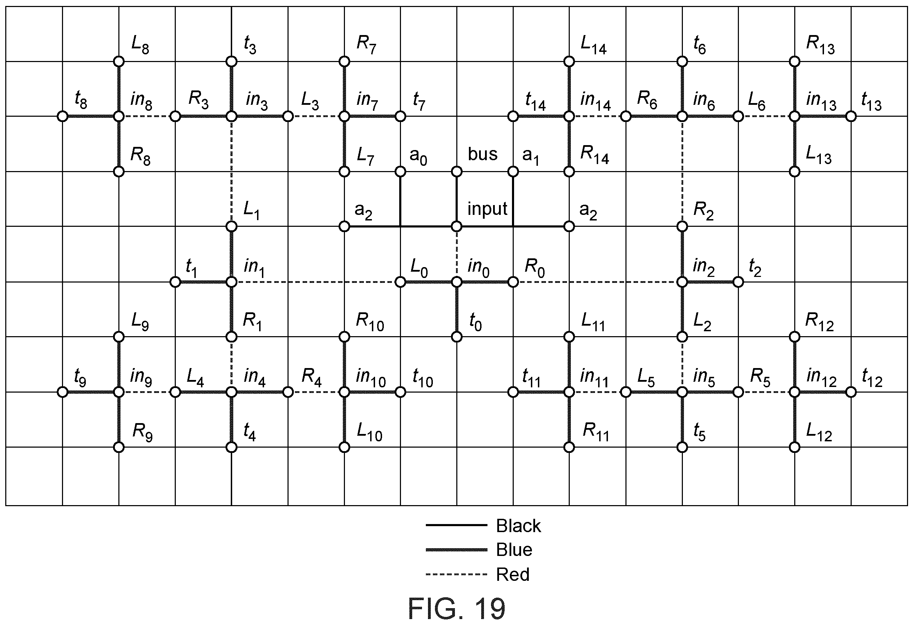

Now, the elements are present to show a planar layout configuration for arbitrary memory size $N$. For the sake of simplicity, a memory size $N = 16$ is illustrated, but it should be appreciated that embodiments apply to other memory sizes for $N$. The high-level routing scheme is shown in FIG. 18, where both the routing-in and routing-out processes follow the same path. The corresponding planar layout is shown in FIG. 19. FIG. 19 depicts a router qubit arrangement on a planar layout with 16 memory locations. The planar configuration expands in a fractal pattern starting from the center, where the address, input, and bus bits are positioned. In FIG. 19, the grid intersections, marked by red lines, indicate additional qubits allocated for communication between routers through swap operations. The left and right registers of the leaf-level routers send control bits to their respective memory locations.

It is noteworthy that the fractal pattern depicted in FIG. 19 can be constructed using a recursive algorithm for any larger value of $N$, because a larger configuration can be constructed from two smaller identical layouts. The recursive expansion of the fractal layout ensures a constant spacing between neighboring router clusters, resulting in an almost optimal spacing-saving layout that occupies an area of size $O(N)$. For such a layout scheme, the present disclosure gives asymptotic bounds for the infidelity, T count, and qubit count. Assuming there are $N$ memory locations, then both the T count and qubit count are $O(N)$ since the layout uses $O(N)$ routers. For the remainder of this section, it is shown that infidelity also scales as $O(N)$.

**Lemma III.1.** *Any radius of a volume N ball on a planar surface is at least* $\sqrt{N}$ .

**Lemma III.2.** *Let $\varepsilon_{max}$ be the maximum gate error for each time step among all types of gates used in the layout. Then the infidelity of the bucket-brigade QRAM with the planar layout scheme (e.g., FIG. 18) scales as* $O(N\varepsilon_{max})$.

*Proof.* Provided is a high-level idea for the proof, and an exact proof can be constructed similar to the one in "Resilience of Quantum Random Access Memory to Generic Noise" by Connor T. Hann, et al. The error containment property of the bucket-brigade model serves as the basis for their proof. This property holds regardless of the layout scheme as long as the high-level routing scheme remains the same. Indeed, the high-level routing scheme (e.g., in FIG. 18) remains the same for both the all-to-all connectivity layout and the nearest neighbor layout, and hence the error does not propagate from bad branches into good ones.

By Lemma III.1, the difference that comes to the planar layout scheme is the depth of the circuit increases from $O$ (log$N$) to $O\left(\sqrt{N}\right)$ as compared to the all-to-all connectivity layout. Inserting this fact into the analysis yields $O(N\varepsilon_{max})$ infidelity. It is noted that such a planar layout scheme can also be extended to the cubic layout, but discussions are directed to the planar layout.

B. Fine-grained and improved infidelity

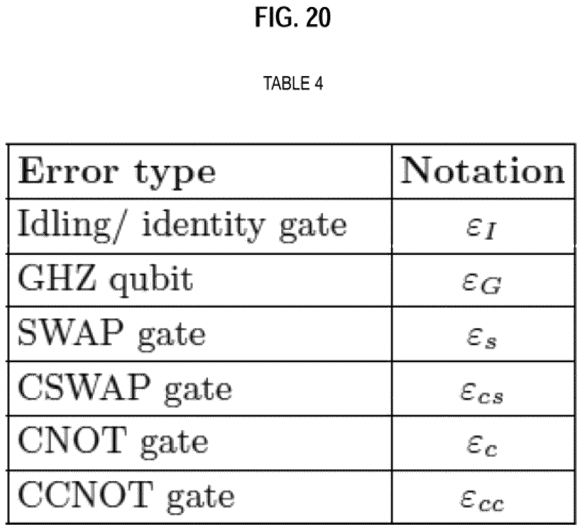

It is noted that Section III A lacks differentiation in error rates among different types of gates. In order to lower the asymptotic scaling of infidelity for the bucket-brigade QRAM, it is better to explicitly specify the error originating from various gate types. In this section, the present disclosure first presents a fine-grained analysis of the infidelity associated with the basic layout. Later, further improvements are made to the fine-grained infidelity by substituting qubits for long-distance swaps with the Greenberger-Horne-Zeilinger (GHZ) states. The type of errors that are considered throughout this work are summarized in Table 4 in FIG. 20.

**Lemma III.3.** *For every time step, the present disclosure assigns an error $\varepsilon_{cs}$ to each control swap gate and an error $\varepsilon_s$ to each swap gate. The fine-grained infidelity of the QRAM with the planar layout scheme (FIG. 18) scales as*

$$O\left(N\varepsilon_s + \sqrt{N}\log N\varepsilon_{cs}\right).$$

*Proof.* For each query branch, the circuit depth is $O\left(\sqrt{N}\right)$, and there are $O\left(\sqrt{N}\right)$ swap gates and $O(\log N)$ routers. A similar argument to Lemma III.2 yields the desired fine-grained infidelity.

Lemma III.3 shows that the linear scaling for infidelity arises due to the presence of consecutive SWAP gates, as indicated by the vertices covered by red lines in FIG. 19. Therefore, the present disclosure explores strategies aimed at reducing the depth of SWAP gates to improve the overall infidelity in accordance with one or more embodiments. One approach to accomplish this is by employing constant depth circuits for long-range qubit teleportation as a substitute for long-range SWAP gates.

For every length $m$ segment of the long-range SWAP operation (a single red line in FIG. 19), the present disclosure replaces the underlying $m$ uncorrelated qubits by a strongly entangled Greenberger-Horne-Zeilinger (GHZ) state of the same length, where a GHZ state of length $m$ is the state

$$|GHZ\rangle = \frac{|0\rangle^{\otimes m} + |1\rangle^{\otimes m}}{\sqrt{2}}. \qquad\qquad (\text{Eq. 1})$$

The creation of GHZ states of any length can be accomplished using a constant-depth circuit. Consequently, all the GHZ states utilized for substitution can be generated in place without incurring a substantial overhead. With such modifications applied to the basic layout, the circuit depth is reduced from $O\left(\sqrt{N}\right)$ to O(logN). Before diving into the updated infidelity analysis, shown are some lemmas and observations.

**Lemma III.4.** *For a given GHZ state of length m, let each GHZ qubit have error probability $\varepsilon_G$, and then the probability that the quantum teleportation circuit produces the correct output is $O((1 - \varepsilon_G)^m)$.*

Lemma III.4 shows that despite the constant depth of the quantum teleportation circuit, its error can increase with the number of GHZ qubits. To achieve tighter bounds for the infidelity, it is useful to minimize the distance (e.g., the number of GHZ qubits) that the control qubit for each query must traverse. This principle is reflected in the basic fractal layout design of the present disclosure, where the total length of GHZ qubits in a single branch scales sublinearly as $O\left(\sqrt{N}\right)$ according to one or more embodiments.

Highlighted is one observation (also recognized in "Resilience of Quantum Random Access Memory to Generic Noise" by Connor T. Hann, et al) that the circuit depth T scales as O(logN), which is contrary to the naive analysis that suggests a scaling of $O(\log^2 N)$. The argument is that during the address setting phase, it is not necessary to wait for the parent router to be set before sending the next address qubit into the QRAM structure. Regardless of a router's depth in the QRAM structure, the qubit that sets its address can be routed into the QRAM structure a constant number of steps after the qubit that sets its parent router. This parallel procedure results in a desirable constant effective time for address setting for each router, which leads to an overall time complexity of $O(\log N)$ for setting the address bits for all routers.

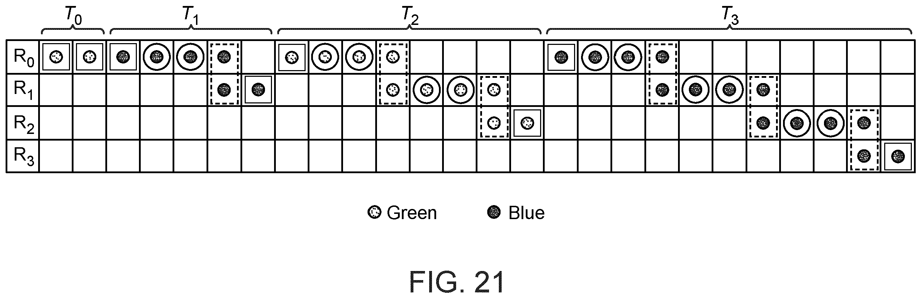

Understanding the activation sequence of routers in a query branch is beneficial. It helps in comprehending the parallel address setting procedure described earlier and reveals that not all qubits need to remain active throughout the entire query duration $T$. This property can be incorporated into the fine-tuned infidelity analysis for a tighter bound. Suppose that one is given a fixed query branch of depth four having routers $\mathbf{R}_0$, $\mathbf{R}_1$, $\mathbf{R}_2$, $\mathbf{R}_3$ counting from root to leaf. The naive activation sequence of each router and associated gates are depicted in FIG. 21, in which the circuit depth $T_i$ increases a constant size such that $\Sigma_i\, T_i = O(\log^2(N))$.

FIG. 21 presents the naive activation sequence of routers in a given query branch of depth four where each column represents a single time step. $\mathbf{T_i}$ is the total time for setting the address bit for router $\mathbf{R_i}$. The green and blue dots indicate the router that is in use at the associated time step. The solid rectangle represents a local SWAP operation over the qubits associated with the router, the circle represents a local CSWAP operation, and the dashed rectangle represents a long-range SWAP between qubits associated with parent and child routers.

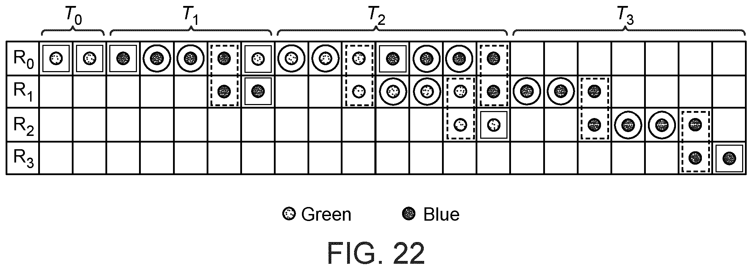

By observing the naive activation sequence in FIG. 21, there can be a merger of the time segment $T_i$ with its neighbors as shown in FIG. 22. For any larger i, it is not hard to observe that each segment takes only a constant number of time steps, hence the total circuit depth is $O(\log N)$.

**Theorem III.5.** *For each time step, let* $\varepsilon_G$, $E_I$, $E_s$, $E_{cs}$ *be the errors of the GHZ qubits, router status qubits, SWAP gate and CSWAP gate, respectively. For N memory locations, the improved fine-grained infidelity of the basic bucket-brigade QRAM with planar layout (e.g., FIG. 18) scales as*

$$O\left(\log N \sqrt{N} \varepsilon_G + \log N \varepsilon_s + \log^2 N \varepsilon_{cs} + \log^2 N \varepsilon_I\right).$$

$$\text{(Eq. 2)}$$

*Proof.* For a fixed query branch, first consider the error contribution from the long-range SWAP with GHZ states. Despite the constant depth of each long-range SWAP, Lemma III.4 highlights that the error is contingent upon the number of GHZ qubits utilized for this operation, exhibiting a $\sqrt{N}$ dependency due to Lemma III.1. Therefore, the contribution of long-range SWAP to errors to the probability of a successful query is

$$P_G = \prod_{\ell=1}^{\log N}( 1 - \varepsilon_G)^{\frac{\sqrt{N}}{2^{(\ell/2)}}(T-\ell)} = (1 - \varepsilon_G)^{\Omega(\sqrt{N}T)},$$

$$\text{(Eq.3)}$$

where $\sqrt{N}/2^{\ell/2}$ is the number of GHZ qubits connecting $R_\ell$ router to $R_{\ell+1}$ router, and $(T\text{-}\ell)$ is the number of times the operation is applied. This pattern is also evident in FIG. 22, where the occurrence of long-rang SWAPs between $R_1$ and $R_2$ happens $T$ times, while between $R_2$ and $R_3$ it happens $T$- 1 times.

Next, consideration is given to the error contribution from the local SWAP operation over qubits associated with individual routers. It can be observed from FIG. 22 that it takes two local SWAP operations to set the state of each router. Hence the contribution of local SWAP errors to the probability of a successful query is

$$P_s = (1 - \varepsilon_s)^{2T} = (1 - \varepsilon_s)^{\Omega(T)}.$$

$$\text{(Eq. 4)}$$

The error contribution of the local CSW AP operation can be analyzed similarly, and its contribution towards the probability of success is

$$P_{cs} = \prod_{\ell=1}^{\log N}(1 - \varepsilon_{cs})^{2\ell} = (1 - \varepsilon_{cs})^{\Omega(T^2)}.$$

$$\text{(Eq. 5)}$$

Last, the present disclosure considers the *idling error* of the status qubit $t_\ell$ for each router $R_\ell$. The status qubit differs from non-router status qubits or helper GHZ qubits. While those can be reset and remain irrelevant until their next usage, the status qubit has to maintain its value immediately after its associated router's address is set. The idling time for each $R_\ell$'s status qubit, $t_\ell$, is the total active time of the router minus the number of CSWAP operations over the qubits of $R_\ell$. From FIG. 22, the total idling time for $R_\ell$ is $O(T - \ell)$. Therefore, the idling error contribution towards the query success probability is

$$P_I = (1 - \varepsilon_I)^{\Omega(T^2)}.$$

$$\text{(Eq. 6)}$$

Since the total success probability is P = $P_G \cdot P_s \cdot P_{cs} \cdot P_I$, by a similar analysis to the reference "Resilience of Quantum Random Access Memory to Generic Noise" by Connor T. Hann, et al with $T = O(\log N)$, the present disclosure obtains the desired infidelity.

C. Improving T count with CNOT trees

The basic planar layout achieves sublinear scaling in $N$ for infidelity, but its T count scales linearly with $N$. In this section, the present disclosure presents a scheme, not covered by the claims, that reduces the T count by replacing $O(N)$ having many CSWAP routers with CNOT routers that do not require the T-gate for implementation. This scheme lacks sublinear infidelity and qubit count but provides insights for constructing the generic framework, which will be presented later according to one or more embodiments.

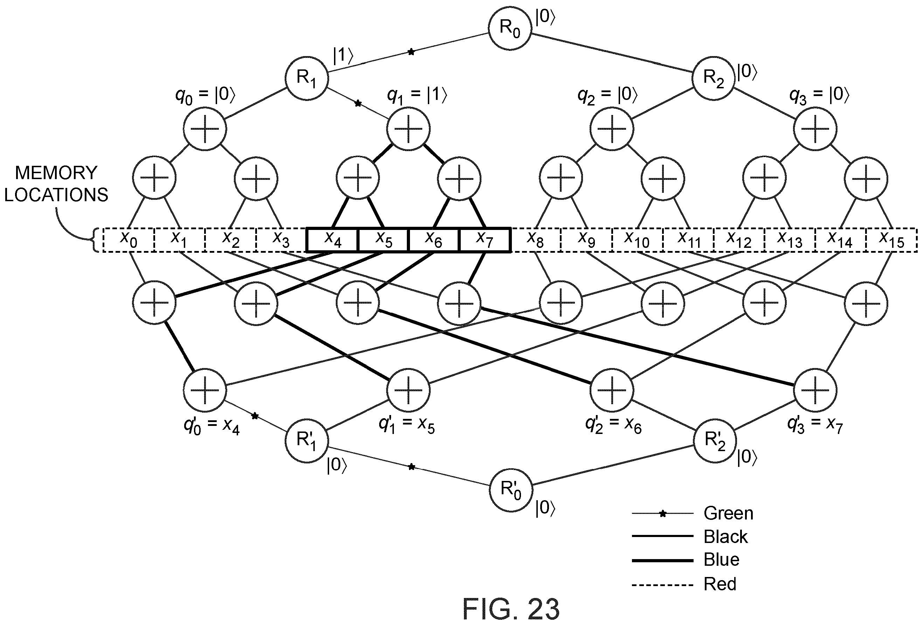

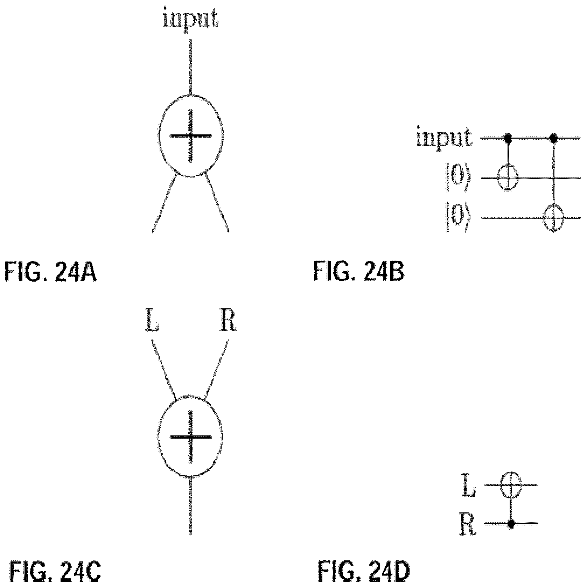

The high-level router arrangement is depicted in FIG. 23, with information flowing from top to bottom. Unlike the basic planar case where the same path is used for the entire process, the qubit route-in and route-out processes in this scheme utilize separate sets of routers. The route-in procedure corresponds to the top half of FIG. 23, while the route-out procedure corresponds to the bottom half. The route-in procedure adopts a similar approach to the previous scheme but replaces all CSWAP routers beyond level $\frac{\log N}{2}$ with CNOT routers, *as* illustrated in FIG. 24A. Each CNOT cluster distributes the same control qubit to its corresponding $\sqrt{N}$ memory locations. Likewise, in the route-out procedure, the CSWAP routers at deeper levels are replaced by CNOT routers, as depicted in FIG. 24C. The distinction is that each route-out CNOT cluster is linked to a memory location from every route-in CNOT cluster. FIG. 24A depicts a single CNOT router for route-in that takes input qubit and sends it to all its child nodes. FIG. 24B depicts the circuit for the CNOT router in FIG. 24A during route-in. FIG. 24C depicts a single CNOT router for route-out. It is effectively an XOR gate. FIG. 24D depicts the circuit for the CNOT router in FIG. 24C during route-out.

Now, the present disclosure demonstrates the correctness of this scheme with an example depicted in FIG. 23, where the target qubit $x_4$ is routed out. To activate the correct paths for routing out the target qubit $x_4$ during the address setting phase, the present disclosure sets the CSWAP routers $R_0$, $R_1$ to the appropriate states based on the address qubits $|0100\rangle$ (in this case the first two qubits are set to $|10\rangle$) associated with the memory location $x_4$. The activated paths are indicated by the green lines in FIG. 23. In the route-in phase, a control qubit 1 is routed from the top router $R_0$ to the first CNOT router $q_1$. Subsequently, the CNOT tree propagates the control qubit, activating all the memory locations at its leaves, namely $x_4$, $x_5$, $x_6$, and $x_7$, as illustrated in FIG. 23. It is to be noted that only the activated memory locations (represented by the blue rectangle) pass down the information stored in their respective locations. Conversely, the inactivated memory locations (depicted by the red rectangle) pass down a 0 qubit to the CNOT routers. By observing the crossover arrangement of CNOT routers in the bottom half, it becomes apparent that each CNOT router at level $\frac{\log N}{2}$ (namely, $q'_0$, $q'_1$, $q'_2$, and $q'_3$) is able to retrieve one unique $x_i$ from among the $\sqrt{N}$ activated memory locations. Next, the present disclosure sets the CSWAP routers $R'_1$, and $R'_0$ to the appropriate states based on the last two address qubits, $|00\rangle$ in this case. In the end, the correct qubit $x_4$ gets selected and routed out by the CSWAP routers $R'_1$ and $R'_0$.

Defining the query branch in this setting can be challenging, but it is evident that each query to memory location $x_i$ relies on the correct passage of qubits from the other $\sqrt{N} - 1$ memory locations which rely on their parent routers being correct. Moreover, it is not possible to have the same fractal pattern for route out as there is for route in. This is because only the memory locations associated with the same route-in CNOT cluster are in close proximity to each other within a distance of $N^{1/4}$. Memory locations from different route-in CNOT clusters are separated by at least $\sqrt{N}$ distance. Therefore, attempting to bring them together using route-out CNOT clusters would result in a long range CNOT error depending linearly on $N$, because the total GHZ qubit length is $N$. This argument implies a linear infidelity that is summarized in the next Corollary.

**Corollary III.6**. *The infidelity of the bucket-brigade QRAM using O(N) CNOT routers as shown in FIG. 23 scales as O(N) in the planar layout scheme.*

This scheme enhances the T count to $O\left(\sqrt{N}\right)$, but the qubit count and infidelity stay at $O(N)$. As explained earlier, the primary reason for the linear increase in infidelity stems from the fact that the query's success relies on a large number of memory locations, resulting in an $O(N)$ GHZ error during the route-out phase. Therefore, an improved scheme design should minimize the correlation between multiple branches in the binary tree for a single query, according to one or more embodiments.

D. Improve qubit count with tree size reductions

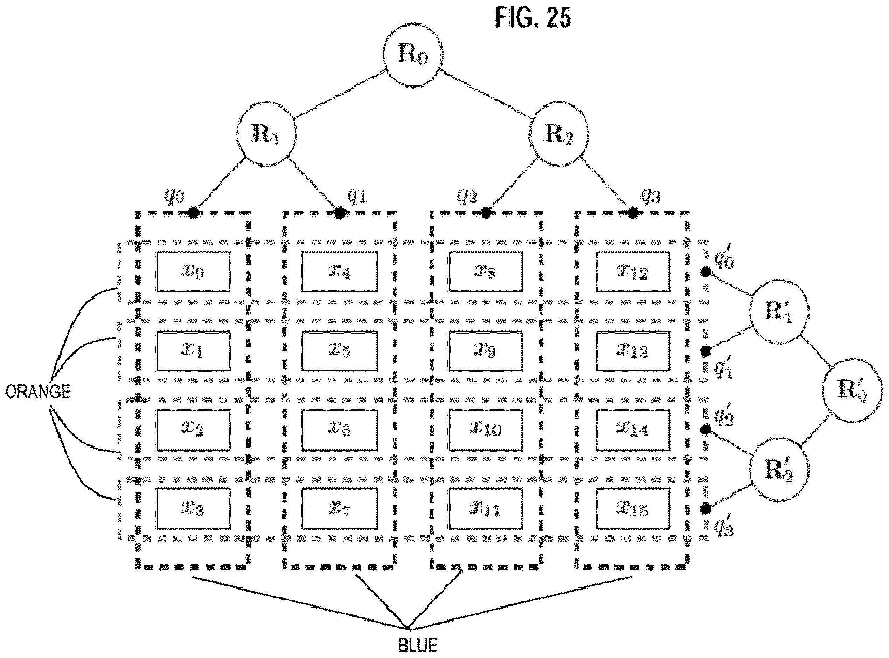

In this section, the present disclosure presents a scheme that achieves a sublinear qubit count. FIG. 25 depicts an initial high-level arrangement scheme in which the total $N$ memory locations are aligned in an $\sqrt{N} \times \sqrt{N}$ square area for

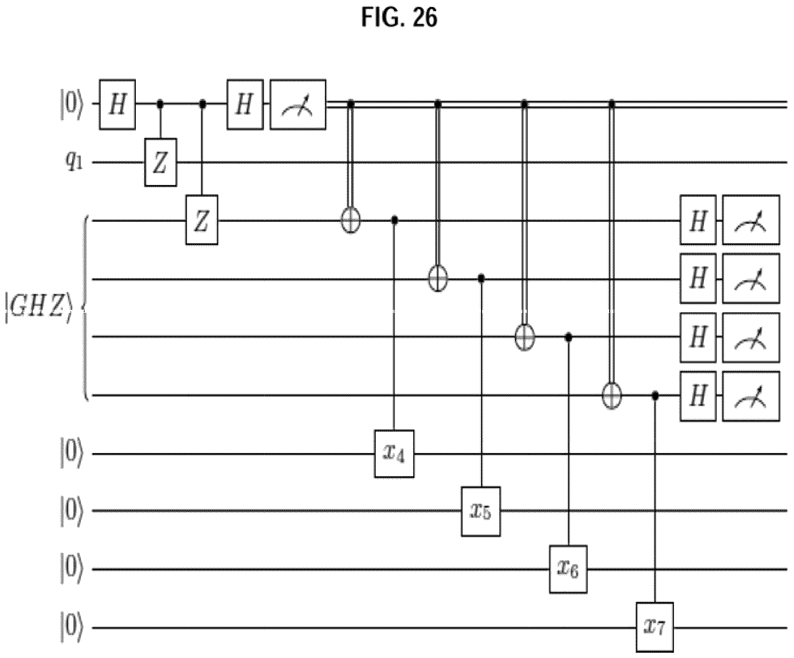

$N = 16$, which results in a square area of 4 rows by 4 columns. During the route-in phase, it requires a depth of $\frac{\log N}{2}$ CSWAP routers to transfer the control qubits to $q_i$. Similarly, during the route-out phase, a second set of CSWAP routers with a depth of $\frac{\log N}{2}$ is used to retrieve the result from qubits $q'_i$. Each dashed colored box (e.g., orange boxes and blue boxes) represents a GHZ state of length $\sqrt{N}$. These GHZ states are responsible for either dispersing the control qubit to its corresponding memory locations (vertical ones) or gathering output from memory locations (horizontal ones), similar to the functioning of a route-out CNOT cluster described in Section **III** C. FIG. 26 depicts a constant-depth circuit that uses the vertical GHZ states to successfully distribute the control value from $q_1$ to its $\sqrt{N}$ associated memory locations $x_4, x_5, x_6$, and $x_7$. Similarly, a constant depth circuit can be employed for extracting values from $\sqrt{N}$ memory locations to the corresponding $q'_i$ qubits using the horizontal GHZ states.

The high-level router arrangement demonstrated in FIG. 25 employs GHZ states for diffusing control qubits and collecting memory qubits. FIG. 26 depicts an example of passing the state of the $q_1$ router to all its children's memory locations $x_4, x_5, x_6$, and $x_7$. The gate associated with each $x_i$ is either a CNOT gate if the memory location $x_i$ stores 1, or an identity gate otherwise.

It is to be highlighted that the circuit depicted in FIG. 26 can maintain a constant depth even on planar layouts, assuming nearest-neighbor connectivity. This is possible because the GHZ state of any length can be positioned parallel to its corresponding memory qubits. As a result, only a constant depth of SWAP operations is required to transfer the control bit from the GHZ qubits to the memory qubits.

Upon initial observation of FIG. 25, one might be tempted to consider it as an improvement over the crossed CNOT router scheme depicted in FIG. 23 in terms of infidelity. This is because the CNOT routers, which contribute to linear GHZ errors, are replaced by circuits using GHZ states of length $O\left(\sqrt{N}\right)$. However, it is noteworthy that the positions of each memory location in FIG. 23 correspond to their respective positions on a planar surface. Therefore, the physical distance from the root CSWAP router $\mathbf{R}_0$ to the control qubit $q_i$ is $\sqrt{N}$. This distance incurs a GHZ error that scales with $\sqrt{N}$. Moreover, the correctness of each $q'_i$ depends on the correctness of all $\sqrt{N}$ $q_i$'s. Consequently, this leads to a GHZ error that scales linearly with $N$.

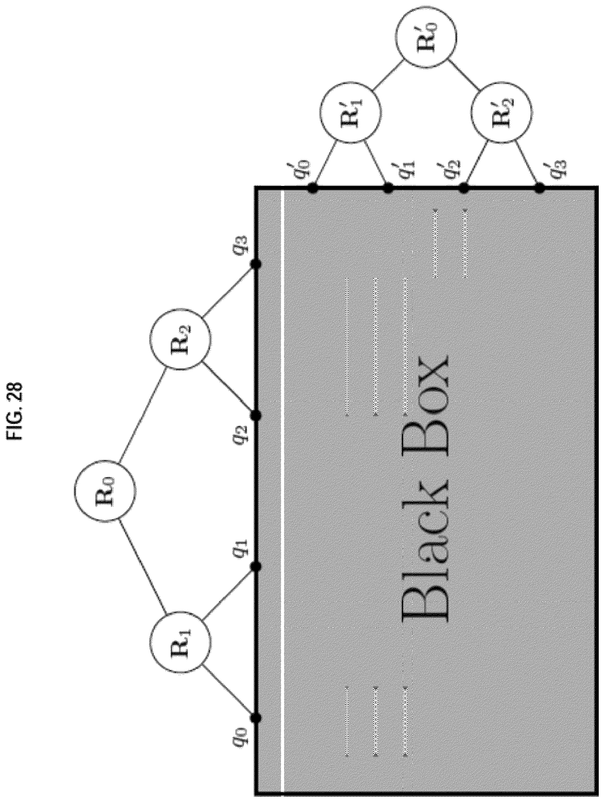

To focus on a reduction in qubit count, one may ignore the part of FIG. 25 without CSWAP routers and treat them as a black box (e.g., in FIG. 28). FIG. 28 depicts an abstract high-level view of a router arrangement using GHZ states. In the given scenario of $N = 16$ memory locations, each intermediate output $q'_i$ relies on $\sqrt{N} = 4$ memory variables $x_i$ and $\sqrt{N}$ control qubits $q_i$ as follows:

$$
\begin{aligned}
q'_0 &= q_0 x_1 + q_1 x_5 + q_2 x_9 + q_3 x_{13}, \\
q'_1 &= q_0 x_2 + q_1 x_6 + q_2 x_{10} + q_3 x_{14}, \\
q'_2 &= q_0 x_3 + q_1 x_7 + q_2 x_{11} + q_3 x_{15}, \\
q'_3 &= q_0 x_4 + q_1 x_8 + q_2 x_{12} + q_3 x_{16}.
\end{aligned}
\qquad \text{(Eq. 7)}
$$

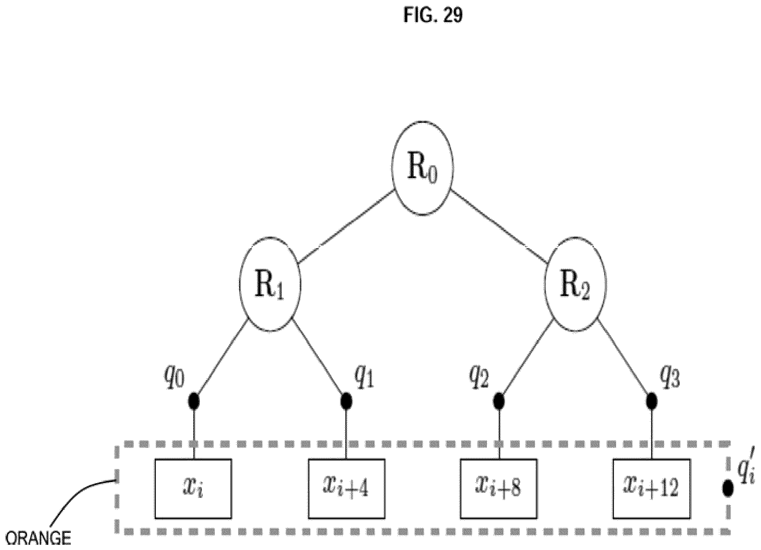

This implies that to obtain a single intermediate output $q'_i$, it is only necessary to synthesize a partial circuit linked to $\sqrt{N}$ $x_i$'s. Additionally, to acquire all $q_i$'s, the partial circuit can be synthesized sequentially, thereby reducing the overall qubit cost, as depicted in FIG. 29. FIG. 29 is a high-level router arrangement of that in FIG. 25 and has been modified to incorporate $O\left(\sqrt{N}\right)$ memory qubits at each round, with a total of $\sqrt{N}$ rounds.

The high-level arrangement depicted in FIG. 29 may appear to be optimal due to its $O\left(\sqrt{N}\right)$ qubit count and T count, along with the fact that the GHZ error scales with $\sqrt{N}$ when obtaining a single $q'_i$. However, this optimal outcome is only valid under the best-case scenario where only $q'_1$ is required. In the case of a superposition query, where all $q'_i$'s are generated sequentially, the idling error for the qubits holding the values of $q'_i$ will exhibit linear scaling.

**Corollary III**.7. *The infidelity of the sequential QRAM shown in FIG. 29 scales as O(N) with the planar layout*

*scheme.*

IV. GENERAL QRAM FRAMEWORK

In this section, the present disclosure draws inspirations from Sections III C and III D that reduce T count and qubit count and adapt that to the bucket-brigade planar layout in Section III A to obtain the most general framework, according to one or more embodiments. The present disclosure first shows the general framework that is robust against X errors in Section IV A, and then modifies the general framework in Section IV B to make it robust against any generic error with trade-offs in infidelity, according to one or more embodiments.

A. X error resilient framework

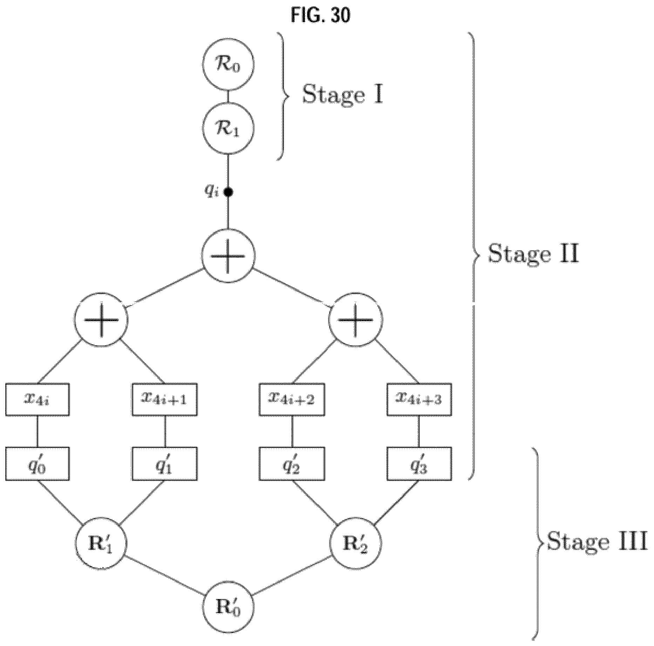

The high-level layout is shown in FIG. 30. The procedure includes three stages. Stage I involves setting the address on linear routers, which are named as such because they do not require branching out and can be arranged linearly in a line within the actual planar setting. During Stage II, the control $q_i$ is diffused to memory locations whose output is added to the corresponding $q'_i$ registers. This stage is repeated $\sqrt{N}$ times, with different CSWAP gates applied to linear routers each time to obtain the appropriate $q_i$ values. In Stage III, the remaining address bits are set on the CSWAP routers, and the corresponding $q'_i$ values are routed out. The value of $q'_i$ in this context can be expressed as shown in Eq. 7.

Before delving into the detailed construction and analysis of each stage, a summarization is provided of the high-level idea behind why this layout achieves optimal results.

i. Unlike the high-level scheme shown in FIG. 23, which employs a separate set of routers at a different location for the routing out procedure, the CSWAP routers, **R'**$_i$, replace the CNOT routers in order to leverage the advantages provided by the fractal layout. This (in FIG. 30) resolves the issue raised in Section III D, where the routing out procedure using CNOT routers fails to maintain the fractal layout utilized during the routing-in phase. Consequently, replacing the CNOT routers with the CSWAP routers, **R'**$_i$, leads to a sublinear scaling for the infidelity originating from GHZ errors.

ii. This scheme in FIG. 30 differs from the one in FIG. 29 by computing all $q'_i$ concurrently in each round, resulting in idle time scaling as $O(\sqrt{N})$ instead of $O(N)$.

In summary, this new scheme addresses the linear infidelity caused by the large idling and GHZ errors discussed in Sections III C and III D, while maintaining sublinear T count and qubit count, according to one or more embodiments. The rest of the section provides a detailed implementation of each stage.

1. Stage I: linear router address setting

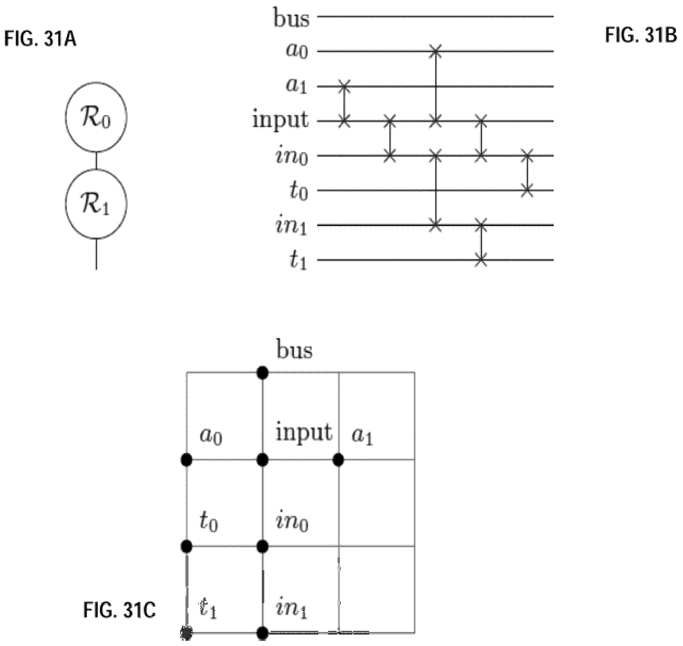

The present disclosure first introduces the linear router, denoted by $\mathcal{R}$, which differs from the branching SWAP router. The linear router, $\mathcal{R}$, includes two registers, *t* and *in,* responsible for status storage and input reception from the parent node. FIGS. 31A, 31B, and 31C illustrate the address bit routing procedure and the planar layout. In Stage I, the depth of the linear routers is $\frac{\log N}{2}$ for N memory locations. This choice allows routing in half of the total logN address bits, resulting in $\sqrt{N}$ distinct $q_i$ for each round in Stage II.

**Lemma IV.1.** *For each time step, let* $\varepsilon_s$, $\varepsilon_l$ *be the error of the SWAP gate and the router status qubit, respectively. For N memory locations, the infidelity of stage I in FIG. 30 scales as O(*$\log^2 N \varepsilon_s$ + $\log^2 N \varepsilon_l$*).*

*Proof.* FIGS. 31A, 31B, and 31C demonstrate that setting the address bit into the deepest router takes $\frac{\log N}{2} + 1$ steps, while the second deepest router requires one less swap. Additionally, once activated, the router status qubit remains active for the entire session. As a result, the total success probability can be expressed as $(1 - \varepsilon_l)^{\Omega(\log^2 N)}(1 - \varepsilon_s)^{\Omega(\log^2 N)}$. As similar to the analysis in "Resilience of Quantum Random Access Memory to Generic Noise" by Connor T. Hann, et al, the desired infidelity can be derived.

2. Stage II: compute intermediate values

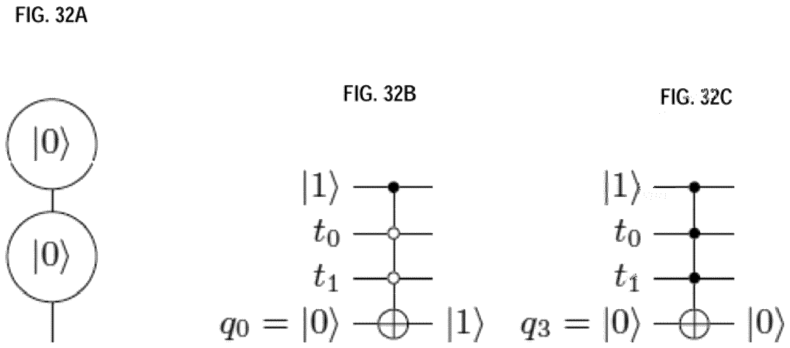

In stage II, the objective is to compute the intermediate values $q'_i$ through $\sqrt{N}$ repetitions. In each round *i,* the control qubit $q_i$ is set to $|1\rangle$ only when the decimal representation of the first half of the address bits matches *i.* These control qubits are then diffused across $\sqrt{N}$ memory locations, which subsequently send their values to the respective intermediate quantum register $q'_i$. To obtain the correct control qubit $q_i$ for each round, different gate sets are applied to the linear routers, as shown in FIGS. 32A, 32B, and 32C.

For each fixed control qubit $q_i$, it diffuses into $\sqrt{N}$ memory locations exactly the way shown in FIG. 23 using the CNOT routers in FIG. 24A. When $q_i = |0\rangle$, all the memory locations will output $|0\rangle$, and this value is added to their corresponding intermediate register $q'_j$. On the other hand, when $q_i = |1\rangle$, the value stored in memory location $\sqrt{N} \cdot i + j$ is added to $q'_j$. This addition operation can be achieved using a CNOT gate, where the output from the memory location serves as the control, and $q'_j$ acts as the target.

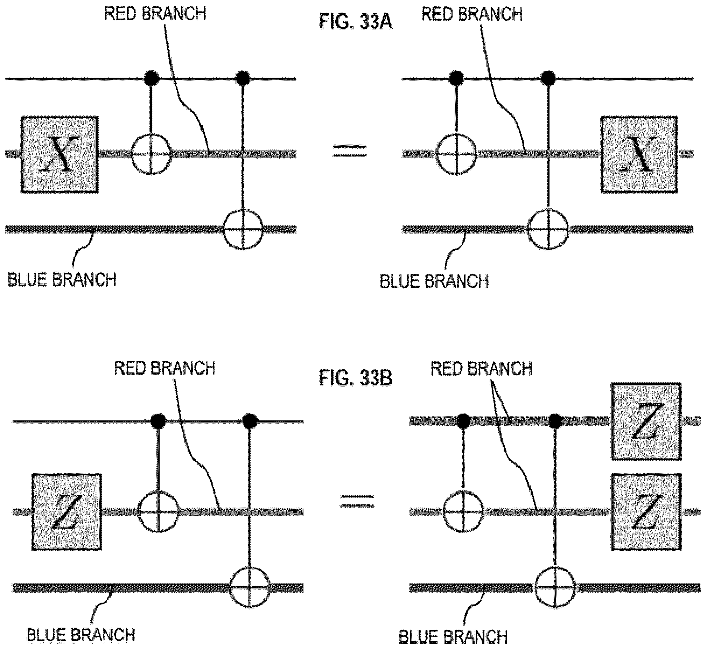

Ensuring that errors in the bad branch do not propagate into the good branch is provided, because the entire proof of infidelity is built upon this assumption. While the CSWAP router has been shown to be robust against error propagation, the present disclosure needs to establish the same property for the CNOT routers used in this context. The robustness of the CNOT routers against Pauli $X$ errors in this setting is evident in FIGS. 33A and 33B. It should be highlighted that while the Pauli $Z$ error cannot extend beyond the parent node in the CNOT router, the Pauli $Z$ error still presents a phase issue within this specific framework. This arises when the round of repetition matches the decimal representation of the fixed address bits, causing the introduction of a (-1) phase factor whenever an odd number of $Z$ errors are present.

FIG. 32A depicts the linear routers $\mathcal{R}_0$ and $\mathcal{R}_1$ which are configured based on the value of address bits that are set to $|00\rangle$. In round 0 depicted in FIG. 32B, a specific set of multi-control CNOT gates is applied to ensure that the control qubit $q_0$ is set to $|1\rangle$. FIG. 32C depicts that the circuit outputs $q_i = |0\rangle$ for all i $\neq |00\rangle$.

FIG. 33A depicts that a Pauli $X$ error does not propagate from the bad branch (red) to the good branch (blue) in the CNOT router. FIG. 33B depicts that a Pauli $Z$ error does propagate into the parent register from a child branch in the CNOT router.

**Lemma IV.2.** *For each time step, let $\varepsilon_I$, $\varepsilon_{cc}$, $\varepsilon_c$, $\varepsilon_G$ be the errors of the $q'_j$ qubits, CCNOT gates, CNOT gates, and GHZ qubits, respectively, and assume that no Pauli Z error occurs in the CNOT tree. For N memory locations, the infidelity of stage II in FIG. 30 scales as* $O\left(\log N \sqrt{N}\varepsilon_I + \log N \sqrt{N}\varepsilon_{cc} + \log N \sqrt{N}\varepsilon_c + \log N N^{\frac{3}{4}}\varepsilon_G\right)$ .

*Proof.* There is a total of $\sqrt{N}$ rounds. In each round, the linear router employs a depth of $O(\log N)$ CCNOT gates. The CNOT tree utilizes GHZ qubits of length $O(N^{1/4}\log N)$ due to the fractal nature of the CNOT tree, as well as a similar analysis to Eq.3. Additionally, $O(\log N)$ CNOT gates are utilized. The idling time for each $q'_j$ is $O(\log N)$. Considering all these factors and incorporating them into the analysis, the present disclosure obtains the desired result.

3. Stage III: routing out and conclusion

In the Stage III, the CNOT routers used in Stage II can be turned into CSWAP routers in place to preserve the fractal layout. This procedure is the same as that of the basic layout shown in Section III A, hence the infidelity scaling analysis in Theorem III.5 can be adopted here for a smaller memory size circuit.

**Corollary IV.3.** *For each time step, let $\varepsilon_G$, $E_I$, $\varepsilon_s$, $\varepsilon_{cs}$ be the errors of the GHZ qubits, router status qubits, SWAP gates, and CSWAP gates, respectively. For N memory locations, the infidelity of stage II in FIG. 30 scales as*

$$O\left(\log N N^{\frac{1}{4}}\varepsilon_G + \log N \varepsilon_s + \log^2 N \varepsilon_{cs} + \log^2 N \varepsilon_I\right).$$

*Proof.* Use Theorem III.5 with memory size $\sqrt{N}$.

Now, the present disclosure bounds the infidelity of the whole procedure.

**Theorem IV.4.** *For each time step, let $E_G$, $E_I$, $\varepsilon_s$, $\varepsilon_{cs}$, $\varepsilon_c$, $\varepsilon_{cc}$ be the errors of the GHZ qubits, idling qubits, SWAP gates, CSWAP gates, CNOT gates, and CCNOT gates respectively. Assuming that there are no Pauli Z errors in the CNOT tree, for N memory locations, the infidelity of the QRAM with the layout scheme in FIG. 30 scales as*

$$O\left(\log N N^{\frac{3}{4}}\varepsilon_G + \log N \sqrt{N}(\varepsilon_I + \varepsilon_c + \varepsilon_{cc})\right. \\ \left. + \log^2 N(\varepsilon_s + \varepsilon_{cs})\right). \tag{Eq. 8}$$

*Proof.* Combining Lemmas IV.1 and IV.2 and Corollary IV.3 yields the result.

The qubit count and T count for this scheme are both $O\left(\sqrt{N}\right)$.

B. Generic error resilient framework

In this section, the present disclosure addresses the phase kickback issue of the general framework (e.g., FIG. 30) in Section IV A and provides a remedy that preserves the sublinear scaling of infidelity, qubit count, and T count, according to one or more embodiments.

Assuming only Pauli Z errors occur, the address $a_i$, $i \in \left[\sqrt{N}\right]$, is fixed to the linear routers $\mathcal{R}$. In Stage II, there are $\sqrt{N}$ rounds of repetition. For each round $j$, let $N_j$ denote the number of Pauli Z errors in the CNOT tree. During round $i$, $j = i$, the intermediate value q' acquires a phase factor of $(-1)^{N_j}$. This is because in round i the control qubit $q_i = |1\rangle$, and the Z error becomes effective on CNOT routers set to $|1\rangle$. This kind of address-dependent error becomes problematic. In contrast, for the basic layout in FIG. 18 discussed in Section III A, the presence of Z errors outside the query branch does not pose a problem. This is because the router status qubit is consistently set to $|0\rangle$ for all CSWAP routers that are not part of the query path, rendering any Z error ineffective in those cases.

The preceding analysis indicates that in order to prevent phase errors, the entire CNOT tree should be designated, where the root node captures the $|1\rangle$ qubit during the process, as part of the query branch, ensuring the CNOT tree remains Z error-free. However, if one requires the entire CNOT tree in FIG. 30 to be entirely Z error-free, the infidelity will exhibit a linear infidelity scaling due to the $\sqrt{N}$ repetitions over the $\sqrt{N}$-sized CNOT tree.

Hence, a novel approach is to minimize the CNOT tree's depth depicted in FIG. 30 by substituting the upper tier of CNOT routers with CSWAP routers, according to the present invention. FIG. 8 showcases an instance of this layout, demonstrating that the address-specific phase error ceases to be an issue when the query branch is error-free, according to one or more embodiments. In a broader model with a memory size of $N$, where the address bit length is $n$ = logN, the present disclosure defines $d$ as the number of linear routers $\mathcal{R}$, $d'$ as the depth of route-in CSWAP routers **R**, $n - d - d'$ as the depth of the CNOT tree, and $n - d$ as the depth of the route-out CSWAP routers **R'**. Now, the objective is to examine the optimal balance between $d$ and $d'$ that results in the most favorable infidelity, T count, and qubit count scaling.

FIG. 8 depicts a Pauli error resilient layout that is an improvement over the scheme in FIG. 30. In this case of FIG. 8, $N = 16$, $n = 4$, $i \in 0,1,2,3$, the linear circuit depth d = 2, routing-in CSWAP router is depth $d' = 1$, and the CNOT router depth is $n - d = 2$. Suppose in this example $x_0$ is being queried in FIG. 8, then the address bit $|a_0 a_1 a_2 a_3\rangle = |0000\rangle$, $|\mathcal{R}_0\rangle = |a_0\rangle$, $|\mathcal{R}_1\rangle = |a_1\rangle$, $|R_0\rangle = |R'_0\rangle = |a_2\rangle$, and $|R'_1\rangle = |a_3\rangle$. In FIG. 8, the number of repetitions of Stage II is $2^{n-d}$. The colored line (e.g., blue) is an example of the query branch in FIG. 8. For this example, $q_i$ is routed to the left at $R_0$ following the blue path as the router's state is set to 0. The signal is passed to the leaves of the CNOT tree (gate tree 722). Finally, as both $R'_0$ and $R'_1$ are set to 0, $q'_0$ is routed to the output following the blue path.

**Theorem IV.5.** *Consider the QRAM with the high-level scheme in FIG. 8 with N memory locations. For each time step, let $\varepsilon_G$, $\varepsilon_I$, $\varepsilon_S$, $\varepsilon_{cs}$, $\varepsilon_c$, $\varepsilon_{cc}$ be the errors of the GHZ qubits, idling qubits, SWAP gates, CSWAP gates, CNOT gates, and CCNOT gates respectively. Let $n$ = logN, $\lambda = 2^{n-d}$ be the number of intermediate qubits $q'_j$ updated in each round in phase II, and $\gamma = 2^{n-d-d'}$ be the size of a CNOT tree. The infidelity of the QRAM is*

$$O\left(\varepsilon_G\left(\frac{N}{\sqrt{\lambda}} + \frac{\gamma N}{\lambda} + \sqrt{\lambda}\log\gamma\right) + \varepsilon_s\log\frac{\lambda^2}{\gamma}\right.$$
$$+\varepsilon_I\left(\frac{N}{\lambda}\log N\log\frac{N}{\gamma} + \frac{\gamma N}{\lambda}\log N + \log\frac{N}{\gamma} + \log^2\lambda\right)$$
$$\left.+\varepsilon_c\frac{\gamma N}{\lambda} + \varepsilon_{cc}\frac{N}{\lambda}\log\frac{N}{\lambda} + \varepsilon_{cs}\left(\log^2\frac{\lambda}{\gamma} + \log^2\lambda\right)\right).$$

$$\text{(Eq. 9)}$$

*Moreover, the T count is* $O\left(\frac{N}{\gamma} + \frac{N}{\lambda}\log\frac{N}{\lambda} + \lambda\right)$, *and qubit count is* $O\left(\log\frac{N}{\lambda} + \lambda\right)$.

*Proof.* First consider stage I, by Theorem III.5 routing in the address qubits for the CSWAP router has infidelity

$$O\left(d'^2\varepsilon_I + d'^2 2^{\frac{n-d}{2}}\varepsilon_G + d'\varepsilon_s + d'^2\varepsilon_{cs}\right)$$ . Then, for Stage II, the infidelity from the gate errors is

$$O\left(2^d\left(\varepsilon_{cc}\,d + \varepsilon_G\left(2^{\frac{n-d}{2}} + 2^{n-d-d'}\right) + \varepsilon_c\,2^{n-d-d'}\right)\right),$$

(Eq. 10)

where the Toffoli gates (also referred to as controlled-controlled-NOT (CCNOT) gates) in the linear routers contribute to $\varepsilon_{cc}$, a route-in CSWAP path and a CNOT-tree contribute to $\varepsilon_G$, and the CNOT tree also has CNOT gate error $\varepsilon_C$. The infidelity from the idling error is

$$O\left(2^d\left(\varepsilon_I n\left(d + d' + 2^{n-d-d'}\right)\right)\right),$$

(Eq. 11)

where the terms correspond to the idling qubits in linear routers, CSWAP routers, and intermediate registers $q'_j$, respectively. Last, for Stage III, by applying Theorem III.5, the present disclosure obtains the infidelity of the CSWAP tree as $O\left((n-d)^2\varepsilon_I + (n-d)2^{\frac{n-d}{2}}\varepsilon_G + (n-d)\varepsilon_s + (n-d)^2\varepsilon_{cs}\right)$ . Combining the infidelity from all phases and replacing *d, d', n* by *N, $\lambda$, $\gamma$* yields Eq. 9.
The T count is

$$O\left(2^d\left(2^{d'} + d\right) + 2^{n-d}\right),$$

(Eq. 12)

where the second term comes from $2^d$ repetitions of size $2^{d'}$ CSWAP routers in Stage II and the third term comes from a single run of size $2^{n-d}$ CSWAP tree in Stage III. Replacing *d, d'* and *n* yields $O\left(\frac{N}{\gamma} + \frac{N}{\lambda}\log\frac{N}{\lambda} + \lambda\right)$ as the T count.

The depth $2^{n-d}$ CSWAP tree in Stage III contributes to the qubit count

$$O(d + 2^{n-d}),$$

(Eq. 13)

which yields $O\left(\log\frac{N}{\lambda} + \lambda\right)$ as the qubit count.

**Corollary IV.6.** *For N memory locations, there exists a generic error-resilient planar QRAM scheme that has*

$\tilde{O}\left(N^{\frac{3}{4}}\right)$ *infidelity,* $O\left(N^{\frac{3}{4}}\right) T$ *count, and* $O(\sqrt{N})$ *qubit count scaling.*

*Proof.* In the planar layout described by the high-level scheme depicted in FIG. 8, the present disclosure sets

$\lambda = \sqrt{N}$ and $\gamma = N^{1/4}$. By substituting these values into Theorem IV.5, the corresponding result is obtained.
Corollary IV.6 demonstrates that by carefully selecting values for $\lambda$ and $\gamma$, the planar layout depicted in FIG. 8 can achieve sublinear scaling for the parameters of infidelity, T count, and qubit count, according to one or more embodiments.

However, optimizing one scaling in one parameter may lead to less favorable scaling in one or more other parameters. For instance, if one sets N as fixed and chooses $\lambda \in [1, N]$ and $\gamma \in [1, \lambda]$, the present disclosure can pursue infidelity optimization by selecting $\lambda = N$ and $\gamma = \sqrt{N}$. In this case, the infidelity scales as $\tilde{O}(\sqrt{N})$, while T count and qubit count exhibit linear scaling, resulting in the same scenario as the basic planar case shown in FIG. 18. On the other hand, if the goal is to achieve optimal T count, one can set $\lambda = \gamma = \sqrt{N}$; however, this choice leads to linear infidelity scaling due to the $\sqrt{N}$ repetitions that use length $\sqrt{N}$ GHZ qubits as shown in FIG. 30.

## V. LARGE WORD SIZE

In classical memory architectures, the word size of RAM is typically designed to suit the system's needs, often mirroring the size of the CPU's general-purpose registers. This word size signifies the number of bits that can be fetched in a single operation. Similarly, for quantum systems, the goal is for QRAM to permit access to multiple qubits simultaneously. In the subsequent section, the present disclosure details planar layouts for QRAM that exhibit optimal scaling with word size $b$, according to one or more embodiments.

A. Parallel multi-bit readout

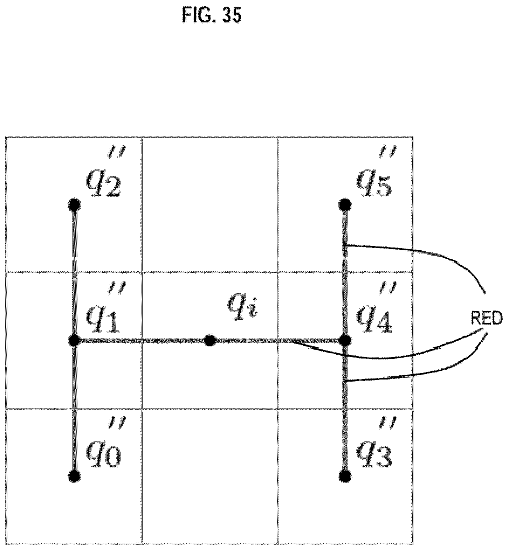

The present disclosure can fan out the $b$-bit words initially, prior to the introduction of the fractal tree structure, as depicted in FIG. 34. The signal $q_i$ is concurrently transmitted to all top-tier qubits $q''$ across all instances. Subsequent procedures align precisely with those elaborated in Section IV B, for a single word size. FIG. 34 depicts a high-level scheme for parallel readout of word size b = 2, which is an extension to the scheme in FIG. 8. FIG. 35 depicts a planar layout designed for resilience against Pauli errors with a word size of b = 6. Each square in FIG. 34, labeled by $q''_i$, encompasses the full fractal planar layout as depicted by the tree in FIG. 34. In FIG. 35, the red line indicates the alignment of GHZ qubits responsible for diffusing the signal $q_l$ to all q" instances.

**Theorem V.1.** *Consider the QRAM with the high-level scheme in FIG. 34 with N memory locations. For each time step, let $\varepsilon_G$ be the error of GHZ qubit. Let $b = 2^{d''}$ be the word size, n = logN, $\lambda = 2^{n-d}$ be the number of intermediate qubits $q'_i$ updated each round in phase II, and $\gamma = 2^{2-d-d'}$ be the size of a CNOT tree. Also, let $\mathbf{I}, \mathbf{T},$ and $\mathbf{Q}$ respectively be the infidelity, T count, and qubit count of the Pauli error-resilient scheme for the single-word readout in Theorem IV.5. The Infidelity of the QRAM Is O($b\mathbf{I}$). Moreover, the T count is O($b\mathbf{T}$), and qubit count is O($b\mathbf{Q}$).*

*Proof.* Given the block setup for every word b as depicted in FIG. 35, the extra GHZ qubits required to transmit the signal $q_i$ to all q" instances are $O\left(b2^{\frac{n-d}{2}}\right)$. Let $\mathbf{I}_i$ represent the infidelity at stage i as described in Theorem IV.5. In Stage I, the infidelity is $O\left(b\mathbf{I}_1 + \epsilon_G b2^{\frac{n-d}{2}}d'\right)$, where the second term emerges from the GHZ error introduced while setting up b CSWAP router copies at a depth of $d'$. Moving to Stage II, the infidelity is $O\left(b\mathbf{I}_2 + 2^d\left(\epsilon_G b2^{\frac{n-d}{2}}\right)\right)$, where the second term is for the instances when the signal $q_i$ is transmitted to all q" counterparts, which occurs $2^d$ times. For Stage III, the infidelity remains consistent at $O(b\mathbf{I}_3)$. This is because each word remains in its specific block when the procedure is finished. Aggregating the infidelities across these stages, the present disclosure concludes that the total infidelity is $O(b\mathbf{I})$, because all extra GHZ errors get absorbed into $b\mathbf{I}_1$.

The T count is $O(d2^d + b2^{d+d'} + b2^{n-d}) = O(b\mathbf{T})$ as compared with Eq. 12, and the qubit count is $O(d + b2^{n-d}) = O(b\mathbf{Q})$ as compared to Eq. 13.

B. Sequential multi-bit readout

FIG. 36 depicts a high-level scheme for sequential readout of word size b = 2, which is an extension to the scheme in FIG. 8.

**Theorem V.2.** *Consider the QRAM with the high-level scheme in FIG. 36 with N memory locations. For each time step, let $\varepsilon_l$ be the qubit idling error. Let $b = 2^{d''}$ be the word size, n = logN. Also, let $\mathbf{I}, \mathbf{T},$ and $\mathbf{Q}$ respectively be the infidelity, T count, and qubit count of the Pauli error-resilient scheme for the single-word readout in Theorem IV.5. The infidelity of the QRAM is $\tilde{O}(b\mathbf{I} + b^2\varepsilon_l)$. Moreover, the T count is O($\mathbf{T}$), and qubit count is O($b\mathbf{Q}$).*

*Proof.* Before reading out the $b$ memory bits, the analysis follows the same as in Theorem IV.5 which yields $O(b\mathbf{I})$

infidelity. There is an additional qubit idling error to be considered. It takes $O(2^{d''} + n - d + d'')$ time to transfer $b$ memory bits out sequentially. The idling qubits are the memory qubits and the CSWAP router status bits, and hence the total idling error is $O(\varepsilon_I(2^{d''} + d')(2^{d''} + n - d + d'') = \tilde{O}(b^2\varepsilon_I)$. The number of CSWAP routers and linear routers is unchanged, and hence the T count is $O(\mathbf{T})$. The qubit count is magnified by a factor of b, and hence the qubit count is $O(b\mathbf{Q})$.

## VI. LIMITED LONG-RANGE CONNECTIONS

Previously, the assumption was that all the gates can only act on geometrically local qubits on a planar surface. However, the present disclosure may allow a few gates to be able to act on long-distance qubits, according to one or more embodiments. By having such an assumption, the present disclosure can show that one or more embodiments can encompass and/or account for the design circuits of the state-of-the-art having all-to-all connectivity, which are special cases of the general framework described in Section IV of one or more embodiments.

### A. Bucket-brigade model

First, consideration is given to modifying the basic planar layout case in Section III A with only CSWAP routers and SWAP gates. It can be observed that in the fractal design in FIG. 19, for a given branch, the number of swap gates connecting $\ell$-th to $\ell + 1$-th level router is $O\left(\frac{\sqrt{N}}{2^{\ell/2+1}}\right)$. Suppose an aspect, not covered by the claims , which allows the first $k \in [\log N]$ levels routers to be connected by long-range swap gates in the basic planar layout case in FIG. 18. Then, the depth of the circuit for a given query branch becomes $O\left(k + \frac{\sqrt{N}}{2^{k/2}}\right)$. This gives a transition from all-to-all connectivity to the nearest-neighbor connectivity, and as for $k = 0$ the circuit depth is $O(\sqrt{N})$ and for $k = \log(N)$ the circuit depth becomes $O(\log N)$. Now, presented is a modified version of Lemma III.3 which is as follows.

**Corollary VI.1.** *For each time step, let $\varepsilon_s$, $\varepsilon_{cs}$ be the error of the SWAP gate and CSWAP router, respectively. Consider a basic planar layout with CSWAP routers and SWAP gates in FIG. 18. Let long-distance SWAP gates connect the first $k$ level routers. Then the infidelity scales as*

$$O\left(\left(k + \frac{\sqrt{N}}{2^{\lceil k/2\rceil}}\right)\left(\log N\, \varepsilon_{cs} + \left(k + \frac{\sqrt{N}}{2^{\lceil k/2\rceil}}\right)\varepsilon_s\right)\right).$$

$$(Eq.\ 14)$$

*Proof.* For a given query branch, the number of CSWAP routers is $O(\log N)$ and the number of SWAP gates is $O\left(k + \frac{\sqrt{N}}{2^{\lceil k/2\rceil}}\right)$. The depth of the circuit is $O\left(k + \frac{\sqrt{N}}{2^{\lceil k/2\rceil}}\right)$. Using these facts and the same analysis of Lemma III.3 yields the result.

From Corollary VI.1, on one end of the connectivity spectrum $k = 0$, it recovers the result in Lemma III.3, and for the other extreme $k = \log N$, it yields $O(\log^2 N)$ infidelity scaling. Similarly, if GHZ qubits are allowed, the present disclosure can replace the first $k$ level of GHZ qubits by long-range swaps to have a modified version of Theorem III.5.

**Corollary** VI.2. *For each time step, let $E_G$, $E_I$, $\varepsilon_s$, $\varepsilon_{cs}$ be the error of GHZ qubit, router status qubit, SWAP gate, and CSWAP gate, respectively. Let long-distance swap gates connect the first $k$ level routers. For N memory locations, the improved fine-grained infidelity of the basic planar layout (e.g., FIG. 18) scales as*

$$O\left(2^{-\frac{k}{2}}\log N\sqrt{N}\varepsilon_G + \log N\varepsilon_s + \log^2 N\varepsilon_{cs} + \log^2 N\varepsilon_I\right).$$

$$(Eq.16)$$

*Proof.* To obtain the result, follow the proof of Theorem III.5 and adjust the initial value of $\ell$ in Eq. 3 from 1 to $k$.

It is evident that when $k$ equals zero, Corollary VI.2 yields the same outcome as Theorem III.5. On the other hand, when $k$ equals $\log N$, the planar layout achieves the expected $O(\log^2 N)$ infidelity scaling.

B. Generic error resilient model

The present disclosure can replace the first $k$ level of GHZ qubits with long-range swaps to have a modified version of Theorem IV.5.

**Corollary VI.3.** *Consider the QRAM with the high-level scheme in FIG. 8 with N memory locations. For each time step, let $\varepsilon_G$, $\varepsilon_I$, $\varepsilon_S$, $\varepsilon_C$, $\varepsilon_{CC}$ be the error of GHZ qubit, qubit idling, SWAP gate, CNOT gate, and CCNOT gate respectively. Let $n = \log N$, $\lambda = 2^{n-d}$ be the number of intermediate qubits $q'_i$ updated each round in phase II, and $\gamma = 2^{2-d-d'}$ be the size of a CNOT tree. Let long-distance swap gates connect the first k level in the router tree. The infidelity of the QRAM is*

$$\tilde{O}\left(\varepsilon_G\left(2^{-\frac{k}{2}}\sqrt{\lambda} + 2^{-\frac{k}{2}}\frac{N}{\sqrt{\lambda}} + \frac{\gamma N}{\lambda}\right)\right.$$
$$\left. + \varepsilon_{cc}\frac{N}{\lambda} + \varepsilon_I\frac{\gamma N}{\lambda} + \varepsilon_c\frac{\gamma N}{\lambda} + \varepsilon_s\frac{N}{\lambda}\right),$$

$$(\text{Eq.16})$$

*for $k \leq d'$, and*

$$\tilde{O}\left(\varepsilon_G\left(2^{-k}N + 2^{-\frac{k}{2}}\sqrt{\lambda}\right)\right.$$
$$\left. + \varepsilon_{cc}\frac{N}{\lambda} + \varepsilon_I\frac{\gamma N}{\lambda} + \varepsilon_c\frac{\gamma N}{\lambda} + \varepsilon_s\frac{N}{\lambda}\right),$$

$$(\text{Eq.17})$$

*for $d' < k \leq n - d$.*

*Proof.* Combine Theorem IV.5 and Corollary VI.2.

Corollary VI.3 illustrates the challenging nature of achieving optimal scaling in various aspects by balancing the parameters $\lambda$ and $\gamma$ with a long-range budget of $2^k$. It becomes apparent that striking the right balance can be a formidable task, since a trade-off may arise among infidelity, T count, and qubit count, which is to be determined based on the specific resource constraints within the given application. The present disclosure now examines the ranges for $d$, $d'$, and the long-range budget $2^k$ that yield meaningful scalings.

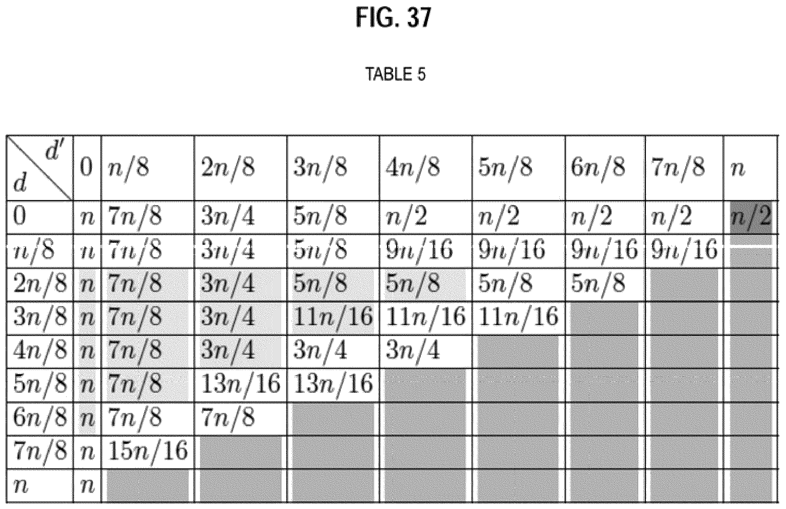

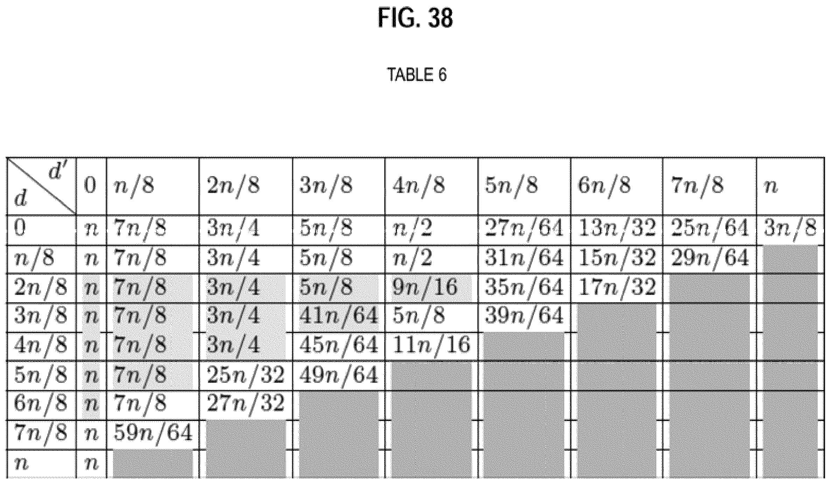

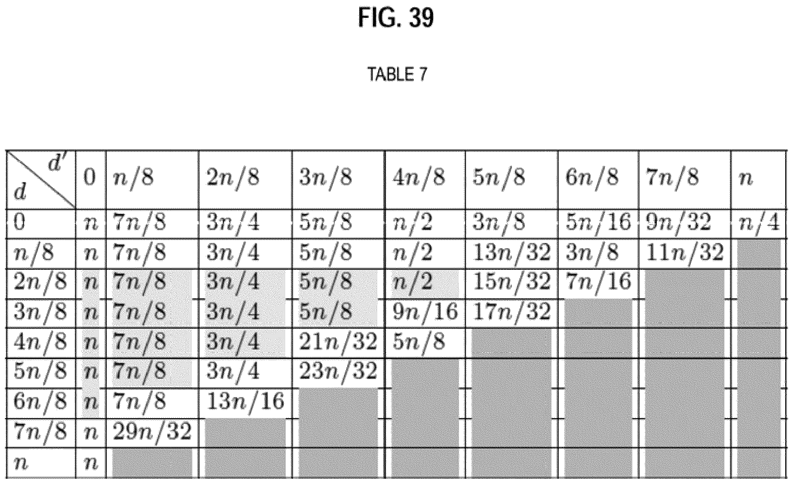

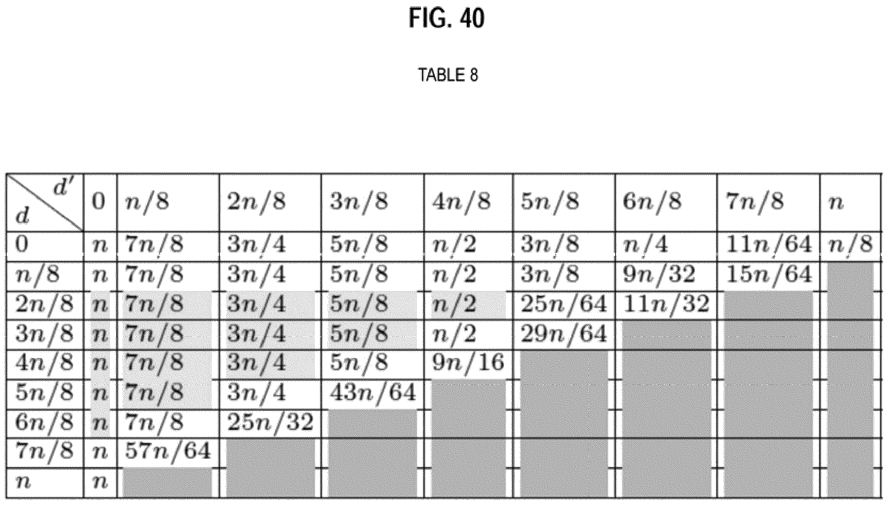

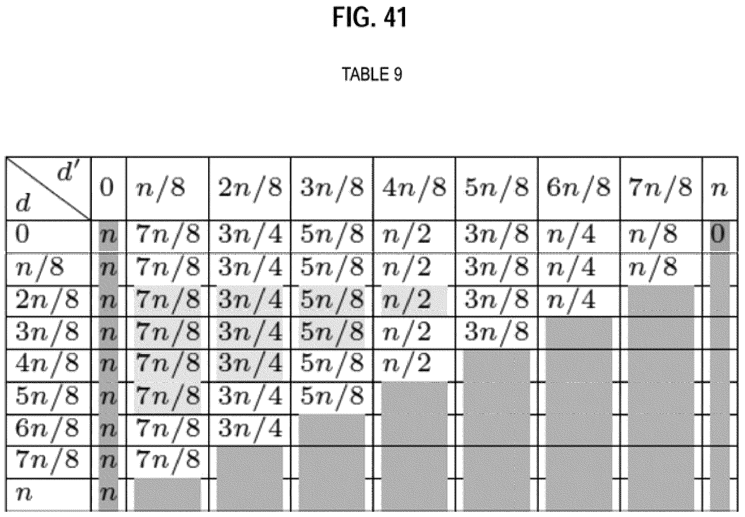

The present disclosure investigates infidelity scaling from Table 5 in FIG. 37, Table 6 in FIG. 38, Table 7 in FIG. 39, to Table 8 in FIG. 40 by examining the equilibrium between $d$ and $d'$ while incrementally increasing the long-range budget from 0 to $2^{d'}$. Using this approach, the present disclosure is able to retrieve the infidelity results for the fundamental planar layout case (e.g., in FIG. 18), as demonstrated in Table 5, where only nearest neighbor connectivity is permitted, and to obtain infidelity scalings reported in previous studies, as depicted in Table 9 of FIG. 41, where all-to-all connectivity is fully established. The present disclosure demonstrates the following within the realm of $\tilde{O}(N^{3/4})$ T count, represented by the green region in Tables 5-9:

a. When $d'$ is relatively small, specifically when $d' \leq n/4$, the presence of long-range connectivity does not enhance infidelity. This is because the primary source of error originates from the CNOT tree section of the circuit.

b. Any further improvement in infidelity becomes unattainable when $k$ exceeds $d'/2$. This is because, when $k > d'/2$, the predominant factor contributing to the error is the idling error by Eq. 16.

c. The greater the value of $d'$ that can be accommodated, the more favorable the infidelity scaling becomes. This is because larger values of $d'$ serve to diminish both the GHZ error and the idling error for the CNOT tree.

d. Increasing the value of $d$ leads to a more favorable qubit count, as the qubit count scales as $O(2^{n-d})$. However, this sets up a trade-off between selecting a larger value of d for improved qubit count or a larger value of $d'$ for reduced infidelity within the $O(N^{3/4})$ T-count regime.

Extending the analysis allows the initial $k$ levels in the route-in procedure to access the long-range gate, while permitting the final $k'$ levels in the route-out procedure to also utilize the long-range gate. In a practical context, this can be likened to having a long-range budget of $2^{d+k}$ for the route-in and a long-range budget of $2^{k'}$ for the route-out process. The objective is to strike a balance between the values of $k$ and $k'$ in order to attain the most favorable scaling of infidelity.

In the present disclosure, it can be argued that it is not useful to separately consider $k$ vs. $k'$ in the regime that yields sublinear infidelity and T count. This is because the GHZ error from route-out only dominates that of route-in when $k > 2d$, at which point a non-zero $k'$ is required to suppress the GHZ error from the route-out procedure. However, the present disclosure observed that $k$ is only meaningful for $k \leq \dfrac{d'}{2}$, and it only improves the infidelity for cases where $d \leq \dfrac{d'}{2}$, a scenario where it is not possible to have $k > 2d$.

Table 5 in FIG. 37 depicts that the exponent of infidelity scaling is examined for $N = 2^n$ with $k = 0$, while varying $d$ and $d'$ subject to the constraint $d + d' \leq n$. In this context, the green region corresponds to the parameter values of d and d', resulting in an $O(N^{3/4})$ T count. The red region corresponds to the regime associated with the basic planar case as elucidated in FIG. 18. Table 6 in FIG. 37 depicts that the exponent of infidelity scaling is examined for N = $2^n$ with k = 1/4d', while varying d and d' subject to the constraint d + d' ≤ n. Table 7 in FIG. 39 depicts that the exponent of infidelity scaling is examined for N = $2^n$ with k = 1/2d', while varying d and d' subject to the constraint d + d' ≤ n. Table 8 in FIG. 40 depicts that the exponent of infidelity scaling is examined for N = $2^n$ with k = 3/4d', while varying d and d' subject to the constraint d + d' ≤ n.

Table 9 in FIG. 41 depicts that the exponent of infidelity scaling is examined for $N = 2^n$ with $k = d'$, while varying $d$ and $d'$ subject to the constraint $d + d' \leq n$. The orange cell represents the domain linked to the all-to-all connectivity QRAM case, while the blue cells pertain to the look-up table in the state-of-the-art.

## VII. USING ENTANGLEMENT DISTILLATION

This d aspect, that is not covered by the claims, also considers a second way of performing long-range two qubit gates using an entangled state called a Bell state between the qubits involved in the gate. The Bell state we consider is

$$|\Phi^+\rangle = \frac{|00\rangle + |11\rangle}{\sqrt{2}}.$$

To obtain a high quality Bell state, the present disclosure uses many noisy Bell states and an entanglement distillation protocol that uses quantum error correcting codes as shown in Section II.D of "Convolutional Entanglement Distillation" by M. M. Wilde, H. Krovi, and T. A. Brun, in 2010 IEEE International Symposium on Information Theory (IEEE, 2010) pp. 2657-2661. This gives the following lemma on how the long-range error will behave in this case.

**Lemma VII.1** *Given an $[[\hat{n}, \hat{k}, \hat{d}]]$ quantum error correcting code and $\hat{n}$ noisy Bell pairs with initial error $\varepsilon_i$, there exists a distillation protocol that creates $\hat{k}$ Bell pairs with error $\varepsilon_L < \varepsilon_i$ where $\varepsilon_L = O\left(\varepsilon_I^d\right)$. Moreover, when $\varepsilon_i = O(m \cdot \varepsilon_G)$ and $\varepsilon_L < 1$ is a small constant, d = O(log m).*

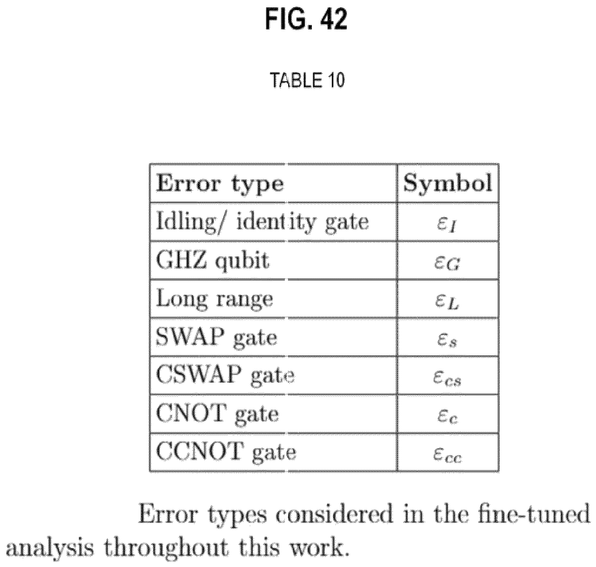

To perform a long-range SWAP, consider the Bell pair being created on adjacent qubits near the source qubit and one half of it is teleported to be adjacent to the target qubit using the length-$m$ GHZ state where $m = O(\sqrt{N})$ as per the layout. Then, from Lemma III.4, these noisy Bell pairs could have an error $\varepsilon_i \leq O\left(\sqrt{N} \cdot \varepsilon_G\right)$ and it is possible to distill a Bell pair with constant error using say, the surface code, with distance $O(\log N)$. For this choice of code, the protocol to distill would have depth $O(d) = O(\log N)$ and the number of noisy Bell pairs used would be $\hat{n} = O(d^2) = O(\log^2 N)$. The updated list of errors is given in Table 10 of FIG. 42.

Although using entanglement distillation may increase the depth and qubit count of one or more of the embodiments by a polylogarithmic factor, techniques can be utilized to reduce the overhead. Therefore, it suffices to proceed under the assumption that long-range Bell states are readily available to perform any long range two qubit operations.

**Theorem VII.3.** *For N memory locations, the improved fine-grained infidelity of the bucket-brigade QRAM with planar layout (e.g., FIG. 18) while using entanglement distillation to perform long-range operations scales as*

$$O(logN\varepsilon_L + logN\varepsilon_s + log^2N\varepsilon_{cs} + log^2N\varepsilon_I). \qquad (Eq.18)$$

*Proof.* The proof follows that of Theorem III.V except that the GHZ errors are replaced by the overall long-range error $\varepsilon_L$.

This technique can be applied to one or more embodiments in this disclosure. In the case of the generic error-resilient framework in FIG. 8, the infidelity scaling changes as given below.

**Theorem VII.4.** *Consider the QRAM with the high-level scheme in FIG. 8 with N memory locations. Let n = logN, $\lambda = 2^{n-d}$ be the number of intermediate qubits q'$_j$ updated in each round in phase II, and $\gamma = 2^{n-d-d'}$ be the size of a CNOT tree.*

*The infidelity of the QRAM while using entanglement distillation for long-range operations is*

$$O\left(\varepsilon_L\left(\frac{\gamma N}{\lambda} + \sqrt{\lambda}\log\gamma\right) + \varepsilon_s\log\frac{\lambda^2}{\gamma}\right.$$
$$+\varepsilon_I\left(\frac{N}{\lambda}\log N\log\frac{N}{\gamma} + \frac{\gamma N}{\lambda}\log N + \log\frac{N}{\gamma} + \log^2\lambda\right) \quad (\text{Eq.}\,19)$$
$$\left.+\varepsilon_c\frac{\gamma N}{\lambda} + \varepsilon_{cc}\frac{N}{\lambda}\log\frac{N}{\lambda} + \varepsilon_{cs}\left(\log^2\frac{\lambda}{\gamma} + \log^2\lambda\right)\right).$$

*Moreover, the T count is* $\tilde{O}\left(\frac{N}{\gamma} + \frac{N}{\lambda}\log\frac{N}{\lambda} + \lambda\right)$ *, and qubit count is* $\tilde{O}\left(\log\frac{N}{\lambda} + \lambda\right)$.

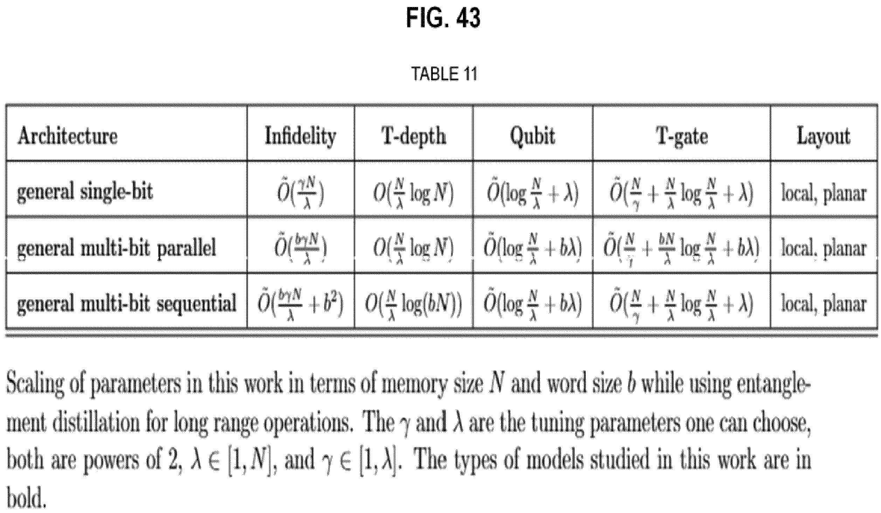

Across one or more embodiments this results in a decrease in infidelity by an additive factor and at most polylogarithmic overhead in qubit and T counts. The updated table of results is in FIG. 43.

Turning now to FIG. 27, a computer system 100 is generally shown in accordance with one or more embodiments of the invention. The computer system 100 can be an electronic, computer framework comprising and/or employing any number and combination of computing devices and networks utilizing various communication technologies, as described herein. The computer system 100 can be easily scalable, extensible, and modular, with the ability to change to different services or reconfigure some features independently of others. The computer system 100 may be, for example, a server, desktop computer, laptop computer, tablet computer, or smartphone. In some examples, computer system 100 may be a cloud computing node. Computer system 100 may be described in the general context of computer system executable instructions, such as program modules, being executed by a computer system. Generally, program modules may include routines, programs, objects, components, logic, data structures, and so on that perform particular tasks or implement particular abstract data types. Computer system 100 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 27 the computer system 100 has one or more central processing units (CPU(s)) 101a, 101b, 101c, etc., (collectively or generically referred to as processor(s) 101). The processors 101 can be a single-core processor, multi-core processor, computing cluster, or any number of other configurations. The processors 101, also referred to as processing circuits, are coupled via a system bus 102 to a system memory 103 and various other components. The system memory 103 can include a read only memory (ROM) 104 and a random access memory (RAM) 105. The ROM 104 is coupled to the system bus 102 and may include a basic input/output system (BIOS) or its successors like Unified Extensible Firmware Interface (UEFI), which controls certain basic functions of the computer system 100. The RAM is read-write memory coupled to the system bus 102 for use by the processors 101. The system memory 103 provides temporary memory space for operations of said instructions during operation. The system memory 103 can include random access memory (RAM), read only memory, flash memory, or any other suitable memory systems.

The computer system 100 comprises an input/output (I/O) adapter 106 and a communications adapter 107 coupled to the system bus 102. The I/O adapter 106 may be a small computer system interface (SCSI) adapter that communicates with a hard disk 108 and/or any other similar component. The I/O adapter 106 and the hard disk 108 are collectively referred to herein as a mass storage 110.

Software 111 for execution on the computer system 100 may be stored in the mass storage 110. The mass storage 110 is an example of a tangible storage medium readable by the processors 101, where the software 111 is stored as instructions for execution by the processors 101 to cause the computer system 100 to operate, such as is described herein below with respect to the various Figures. Examples of computer program product and the execution of such instruction is discussed herein in more detail. The communications adapter 107 interconnects the system bus 102 with a network 112, which may be an outside network, enabling the computer system 100 to communicate with other such systems. In one embodiment, a portion of the system memory 103 and the mass storage 110 collectively store an operating system, which may be any appropriate operating system to coordinate the functions of the various components shown in FIG. 27.

Additional input/output devices are shown as connected to the system bus 102 via a display adapter 115 and an interface adapter 116. In one embodiment, the adapters 106, 107, 115, and 116 may be connected to one or more I/O buses that are connected to the system bus 102 via an intermediate bus bridge (not shown). A display 119 (e.g., a screen or a display monitor) is connected to the system bus 102 by the display adapter 115, which may include a graphics controller to improve the performance of graphics intensive applications and a video controller. A keyboard 121, a mouse 122, a speaker 123, a microphone 124, etc., can be interconnected to the system bus 102 via the interface adapter 116, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI) and the Peripheral Component Interconnect Express (PCIe). Thus, as configured in FIG. 27, the computer system 100 includes processing capability in the form of the processors 101, storage capability including the system memory 103 and the mass storage 110, input means such as the keyboard 121, the mouse 122, and the microphone 124, and output capability including the speaker 123 and the display 119.

In some embodiments, the communications adapter 107 can transmit data using any suitable interface or protocol, such as the internet small computer system interface, among others. The network 112 may be a cellular network, a radio network, a wide area network (WAN), a local area network (LAN), or the Internet, among others. An external computing device may connect to the computer system 100 through the network 112. In some examples, an external computing device may be an external webserver or a cloud computing node.

It is to be understood that the block diagram of FIG. 27 is not intended to indicate that the computer system 100 is to include all of the components shown in FIG. 27. Rather, the computer system 100 can include any appropriate fewer or additional components not illustrated in FIG. 27 (e.g., additional memory components, embedded controllers, modules, additional network interfaces, etc.). Further, the embodiments described herein with respect to computer system 100 may be implemented with any appropriate logic, wherein the logic, as referred to herein, can include any suitable hardware (e.g., a processor, an embedded controller, or an application specific integrated circuit, among others), software (e.g., an application, among others), firmware, or any suitable combination of hardware, software, and firmware, in various embodiments.

While the disclosure has been described with reference to various embodiments, it will be understood by those skilled in the art that changes may be made and equivalents may be substituted for elements thereof without departing from the scope of the invention as defined in the appended claims. The various tasks and process steps described herein can be incorporated into a more comprehensive procedure or process having additional steps or functionality not described in detail herein. In addition, many modifications may be made to adapt a particular situation or material to the teachings of the disclosure insofar they fall within the scope of the appended claims. Therefore, it is intended that the present disclosure not be limited to the particular embodiments disclosed, but will include all embodiments falling within the scope of the appended claims.

Unless defined otherwise, technical and scientific terms used herein have the same meaning as is commonly understood by one of skill in the art to which this disclosure belongs.

Various embodiments of the invention are described herein with reference to the related drawings. The drawings depicted herein are illustrative. There can be many variations to the diagrams and/or the steps (or operations) described therein without departing from the disclosure. For instance, the actions can be performed in a differing order or actions can be added, deleted or modified. All of these variations are considered a part of the present disclosure.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. The term "or" means "and/or" unless clearly indicated otherwise by context.

The terms "received from", "receiving from", "passed to", "passing to", etc. describe a communication path between two elements and does not imply a direct connection between the elements with no intervening elements/connections therebetween unless specified. A respective communication path can be a direct or indirect communication path.

For the sake of brevity, conventional techniques related to making and using aspects of the invention may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

The present invention may be a system, a method, and/or a computer program product at any possible technical detail level of integration. The computer program product may include a computer readable storage medium (or media) having computer readable program instructions thereon for causing a processor to carry out aspects of the present invention.

Various embodiments are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments described herein have been presented for purposes of illustration, but are not intended to be exhaustive or limited to the form(s) disclosed. The embodiments were chosen and described in order to best explain the principles of the disclosure. Many modifications and variations will be apparent to those of ordinary skill in the art without departing from the scope of the claims. The terminology used herein was chosen to best explain the principles of the various embodiments, the practical application or technical improvement over technologies found in the marketplace, or to enable others of ordinary skill in the art to understand the embodiments described herein.

**Claims**

1. A method for quantum data lookup for a planar nearest-neighbor quantum architecture, the method comprising:

   in response to receiving an input comprising an address having a length of n bits, routing (1502) a number, d, most significant bits of the input through a number, d, first linear quantum routers (710) to determine a first output (704), wherein d<n;
   routing (1504) the first output (704) to at least one second CSWAP quantum router (720) in a configuration of depth d', by setting a status of the at least one second CSWAP quantum router (720) using d' middle bits from the bits of the address immediately after the d most significant bits of the address, the at least one second CSWAP quantum router feeding the first output to a CNOT gate tree (722) of depth n-d-d', the CNOT gate tree generating a second output that is fed to one or more first logical qubits (724) formed by two or more physical qubits (14) and denoting memory elements corresponding to memory locations, gathering respective values of the one or more first logical qubits (724) in second logical qubits (726) formed of two or more physical qubits and generating readouts of respective states of the second logical qubits (726); and
   routing (1506) the readouts through third CSWAP quantum routers (730) of depth n-d, the third CSWAP quantum routers arranged to output the readouts as data of a lookup in the address of the input.

2. The method of claim 1, wherein setting the status of the at least one second CSWAP quantum router (720) comprises setting the at least one second CSWAP quantum router (720) such that when the at least one second CSWAP quantum router (720) is set to 0, the at least one second CSWAP quantum router (720) routes any qubit to the left and when the at least one second CSWAP quantum router (720) is set to 1, the at least one second CSWAP quantum router routes any qubit to the right.

3. A quantum circuit (12) configured in a planar nearest-neighbor quantum architecture, the quantum circuit comprising:

   a number, d, first linear quantum routers (710) configured to determine a first output (704), in response to receiving a number, d, most significant bits of an input comprising an address having a length of n bits, wherein d<n;
   at least one second CSWAP quantum router (720) in a configuration of depth d', wherein a status of the at least one second CSWAP quantum router is set using d' middle bits of the bits of the address immediately after the d most significant bits of the address, to feed the first output to a CNOT gate tree (722) of depth n-d-d', in response to the first output, the CNOT gate tree configured to generate a second output that is configured to be fed to one or more first logical qubits (724) formed by two or more physical qubits (14) and denoting memory elements corresponding to memory locations, to gather respective values of the one or more first logical qubits (724) in second logical qubits (726) formed of two or more physical qubits, and to generate readouts of respective states of the second logical qubits (726); and

third CSWAP quantum routers (730) of depth n-d coupled to the second logical qubits and arranged to output the readouts as data of a lookup in the address of the input.

4. The quantum circuit of claim 3, wherein setting the status of the at least one second CSWAP quantum router (720) comprises setting the at least one second CSWAP quantum router (720) such that when the at least one second CSWAP quantum router (720) is set to 0, the at least one second CSWAP quantum router (720) routes any qubit to the left and when the at least one second CSWAP quantum router (720) is set to 1, the at least one second CSWAP quantum router routes any qubit to the right.

## Patentansprüche

1. Verfahren für Quantendatensuche für eine planare Quantenarchitektur des nächsten Nachbarn, wobei das Verfahren Folgendes umfasst:

   als Reaktion auf das Empfangen einer Eingabe, die eine Adresse umfasst, die eine Länge von n Bits aufweist, Leiten (1502) einer Anzahl, d, an am meisten signifikanten Bits der Eingabe durch eine Anzahl, d, an ersten linearen Quantenroutern (710), um eine erste Ausgabe (704) zu bestimmen, wobei d<n;
   Leiten (1504) der ersten Ausgabe (704) zu mindestens einem zweiten CSWAP-Quantenrouter (720) in einer Tiefenkonfiguration d' durch Festlegen eines Status des mindestens einen zweiten CSWAP-Quantenrouters (720) unter Verwendung von d' mittleren Bits von den Bits der Adresse unmittelbar nach den d am meisten signifikanten Bits der Adresse, wobei der mindestens eine zweite CSWAP-Quantenrouter die erste Ausgabe einem CNOT-Gate-Baum (722) der Tiefe n-d-d' zuführt, wobei der CNOT-Gate-Baum eine zweite Ausgabe erzeugt, die einem oder mehreren ersten logischen Qubits (724) zugeführt wird, die durch zwei oder mehr physische Qubits (14) gebildet sind und Speicherelemente entsprechend Speicherorten markieren, jeweilige Werte von dem einen oder den mehreren ersten logischen Qubits (724) in zweiten logischen Qubits (726), die aus zwei oder mehr physischen Qubits gebildet sind, sammelt und Auslesungen von jeweiligen Zuständen der zweiten logischen Qubits (726) erzeugt; und
   Leiten (1506) der Auslesungen durch dritte CSWAP-Quantenrouter (730) der Tiefe n-d, wobei die dritten CSWAP-Quantenrouter dazu angeordnet sind, die Auslesungen als Daten einer Suche in der Adresse der Eingabe auszugeben.

2. Verfahren nach Anspruch 1, wobei das Festlegen des Status des mindestens einen zweiten CSWAP-Quantenrouters (720) Festlegen des mindestens einen zweiten CSWAP-Quantenrouters (720) umfasst, sodass, wenn der mindestens eine zweite CSWAP-Quantenrouter (720) auf 0 festgelegt ist, der mindestens eine zweite CSWAP-Quantenrouter (720) ein beliebiges Qubit nach links leitet und wenn der mindestens eine zweite CSWAP-Quantenrouter (720) auf 1 festgelegt ist, der mindestens eine zweite CSWAP-Quantenrouter ein beliebiges Qubit nach rechts leitet.

3. Quantenschaltung (12), die in einer planaren Quantenarchitektur des nächsten Nachbarn konfiguriert ist, wobei die Quantenschaltung Folgendes umfasst:

   eine Anzahl, d, an ersten linearen Quantenroutern (710), die dazu konfiguriert ist, eine erste Ausgabe (704), als Reaktion auf das Empfangen einer Anzahl, d, an am meisten signifikanten Bits einer Eingabe, die eine Adresse umfasst, die eine Länge an n Bits aufweist, zu bestimmen, wobei d<n;
   mindestens einen zweiten CSWAP-Quantenrouter (720) in einer Tiefenkonfiguration d', wobei ein Status des mindestens einen zweiten CSWAP-Quantenrouters unter Verwendung von d' mittleren Bits der Bits der Adresse unmittelbar nach den d am meisten signifikanten Bits der Adresse festgelegt wird, um die erste Ausgabe einem CNOT-Gate-Baum (722) der Tiefe n-d-d' zuzuführen, als Reaktion auf die erste Ausgabe, wobei der CNOT-Gate-Baum dazu konfiguriert ist, eine zweite Ausgabe zu erzeugen, die dazu konfiguriert ist, einem oder mehreren ersten logischen Qubits (724) zugeführt zu werden, die durch zwei oder mehr physische Qubits (14) gebildet sind und Speicherelemente entsprechend Speicherorten markieren, jeweilige Werte des einen oder der mehreren ersten logischen Qubits (724) in zweiten logischen Qubits (726), die aus zwei oder mehr physischen Qubits gebildet sind, zu sammeln und Auslesungen von jeweiligen Zuständen der zweiten logischen Qubits (726) zu erzeugen; und

dritte CSWAP-Quantenrouter (730) der Tiefe n-d, die an die zweiten logischen Qubits gekoppelt und dazu angeordnet sind, die Auslesungen als Daten einer Suche in der Adresse der Eingabe auszugeben.

4. Quantenschaltung nach Anspruch 3, wobei das Festlegen des Status des mindestens einen zweiten CSWAP-Quantenrouters (720) Festlegen des mindestens einen zweiten CSWAP-Quantenrouters (720) umfasst, sodass, wenn der mindestens eine zweite CSWAP-Quantenrouter (720) auf 0 festgelegt ist, der mindestens eine zweite CSWAP-Quantenrouter (720) ein beliebiges Qubit nach links leitet und, wenn der mindestens eine zweite CSWAP-Quantenrouter (720) auf 1 festgelegt ist, der mindestens eine zweite CSWAP-Quantenrouter ein beliebiges Qubit nach rechts leitet.

**Revendications**

1. Procédé de recherche de données quantiques pour une architecture quantique planaire à plus proches voisins, le procédé comprenant :

en réponse à la réception d'une entrée comprenant une adresse ayant une longueur de n bits, l'acheminement (1502) d'un nombre, d, de bits les plus significatifs de l'entrée à travers un nombre, d, de premiers routeurs quantiques linéaires (710) pour déterminer une première sortie (704), dans lequel d<n ;

le routage (1504) de la première sortie (704) vers au moins un deuxième routeur quantique CSWAP (720) dans une configuration de profondeur d', en réglant un état de l'au moins un deuxième routeur quantique CSWAP (720) à l'aide de d' bits intermédiaires des bits de l'adresse immédiatement après les d bits les plus significatifs de l'adresse, l'au moins un deuxième routeur quantique CSWAP alimentant ensuite la première sortie d'un arbre de portes CNOT (722) de profondeur n-d-d', l'arbre de portes CNOT générant une seconde sortie qui alimente un ou plusieurs premiers qubits logiques (724) formés de deux qubits physiques (14) ou plus et désignant des éléments de mémoire correspondant à des emplacements de mémoire, la collecte des valeurs respectives des un ou plusieurs premiers qubits logiques (724) dans des seconds qubits logiques (726) formés de deux qubits physiques ou plus et la génération de lectures des états respectifs des seconds qubits logiques (726) ; et

le routage (1506) des lectures à travers les troisièmes routeurs quantiques CSWAP (730) de profondeur n-d, les troisièmes routeurs quantiques CSWAP étant agencés pour produire les lectures sous forme de données d'une recherche dans l'adresse de l'entrée.

2. Procédé selon la revendication 1, dans lequel le réglage de l'état de l'au moins un deuxième routeur quantique CSWAP (720) comprend le réglage de l'au moins un deuxième routeur quantique CSWAP (720) de sorte que, lorsque l'au moins un deuxième routeur quantique CSWAP (720) est réglé sur 0, l'au moins un deuxième routeur quantique CSWAP (720) achemine tout qubit vers la gauche, et lorsque l'au moins un deuxième routeur quantique CSWAP (720) est réglé sur 1, l'au moins un deuxième routeur quantique CSWAP achemine tout qubit vers la droite.

3. Circuit quantique (12) configuré dans une architecture quantique planaire de plus proches voisins, le circuit quantique comprenant :

un nombre, d, de premiers routeurs quantiques linéaires (710) configurés pour déterminer une première sortie (704), en réponse à la réception d'un nombre, d, de bits les plus significatifs d'une entrée comprenant une adresse ayant une longueur de n bits, dans lequel d<n ;

au moins un deuxième routeur quantique CSWAP (720) dans une configuration de profondeur d', dans lequel un état de l'au moins un deuxième routeur quantique CSWAP est réglé à l'aide de d' bits intermédiaires des bits de l'adresse immédiatement après les d bits les plus significatifs de l'adresse, pour alimenter la première sortie d'un arbre de portes CNOT (722) de profondeur n-d-d', en réponse à la première sortie, l'arbre de portes CNOT configuré pour générer une seconde sortie qui est configurée pour alimenter un ou plusieurs premiers qubits logiques (724) formés de deux qubits physiques (14) ou plus et désignant des éléments de mémoire correspondant à des emplacements de mémoire, pour collecter des valeurs respectives des un ou plusieurs premiers qubits logiques (724) dans des seconds qubits logiques (726) formés de deux qubits physiques ou plus, et pour générer des lectures des états respectifs des seconds qubits logiques (726) ; et

des troisièmes routeurs quantiques CSWAP (730) de profondeur n-d couplés aux seconds qubits logiques et agencés pour produire les lectures sous forme de données d'une recherche dans l'adresse de l'entrée.

4. Circuit quantique selon la revendication 3, dans lequel le réglage de l'état de l'au moins un deuxième routeur quantique CSWAP (720) comprend le réglage de l'au moins un deuxième routeur quantique CSWAP (720) de sorte que, lorsque l'au moins un deuxième routeur quantique CSWAP (720) est réglé sur 0, l'au moins un deuxième routeur quantique CSWAP (720) achemine tout qubit vers la gauche, et lorsque l'au moins un deuxième routeur quantique CSWAP (720) est réglé sur 1, l'au moins un deuxième routeur quantique CSWAP achemine tout qubit vers la droite.

FIG. 1

*FIG. 3*

*FIG. 2*

FIG. 4

QUANTUM CIRCUIT 12

MZM 430

SEMICONDUCTOR SEGMENTS 420

408  406

410 TETRONS

404

410 TETRONS

412 COHERENT LINKS

402 SUPER CONDUCTING WIRES

404 QUBIT ISLANDS

404 QUBIT ISLANDS

FIG. 5A

FIG. 5B

FIG. 5C

FIG. 5D

FIG. 5E

FIG. 5F

# FIG. 6

TABLE 1 COST SCALING FOR PROPOSED CIRCUIT DESIGNS

| Model | Qubit Count | T-count | Infidelity scaling |
|---|---|---|---|
| Single-bit readout | $O(\sqrt{N})$ | $O\left(N^{3/4}\right)$ | $\tilde{O}\left(N^{3/4}\right)$ |
| Parallel multi-bit readout | $O(b\sqrt{N})$ | $O\left(bN^{3/4}\right)$ | $\tilde{O}\left(bN^{3/4}\right)$ |
| Sequential multi-bit readout | $O(b\sqrt{N})$ | $O\left(N^{3/4}\right)$ | $\tilde{O}\left(bN^{3/4} + b^2\right)$ |
| Partial long-range connectivity | $O(\sqrt{N})$ | $O\left(N^{3/4}\right)$ | $\tilde{O}(\sqrt{N})$ |

FIG. 7

EP 4 607 413 B1

LEGEND

| | |
|---|---|
| **—** | REPRESENTS BLUE LINE OF PATH TAKEN |

INPUT REGISTER 702

ROUTERS 710

$\mathcal{R}_0$

$\mathcal{R}_1$

Stage I

$q_i$

ROUTERS 720

$\mathbf{R}_0$

Stage II

GATE TREE 722

LOGICAL QUBITS 724 (MEMORY ELEMENTS)

$x_{4i}$  $x_{4i+1}$  $x_{4i+2}$  $x_{4i+3}$

LOGICAL QUBITS 726 VALUES $(q'_j)$

$q'_0$  $q'_1$  $q'_2$  $q'_3$

$\mathbf{R}'_1$  $\mathbf{R}'_2$

Stage III

OUTPUT ROUTERS 730

$\mathbf{R}'_0$

OUTPUT REGISTER 708

FIG. 8

EP 4 607 413 B1

FIG. 9A

FIG. 9B

FIG. 9C

## FIG. 10A

ROUTERS 720

$R_0$

$C_0$ | $C_1$

## FIG. 10B

bus
$a_0$
input
$t_0$
$in_0$
$R_0$
$L_0$

## FIG. 10C

| bus | | |
| input | | |
| | $in_0$ | $R_0$ |
| $a_0$ | $L_0$ | $t_0$ |

| LEGEND | |
| --- | --- |
| | REPRESENTS BLUE LINES |

input

FIG. 11A

FIG. 11B

$input$ ——•————•——
$|0\rangle$ ——⊕————│——
$|0\rangle$ ————————⊕——

FIG. 11C

$L_0$ | $in_0$ | $R_0$

| LEGEND | |
|---|---|
| — | REPRESENTS BLUE LINES |

EP 4 607 413 B1

**FIG. 12A**

EP 4 607 413 B1

REPRESENTS RED LINES

REPRESENTS BLUE LINES

DIRECTION OF INFORMATION/ALGORITHM FLOW

**• • •** REPRESENTS
RED LINES

## FIG. 12B

━━ REPRESENTS
BLUE LINES

DIRECTION OF INFORMATION/ALGORITHM FLOW

## FIG. 13

TABLE 2

| Model | Qubit Count | T-count | Infidelity scaling |
|---|---|---|---|
| Fan-out | $O(N)$ | $O(N)$ | $\tilde{O}(N)$ |
| Bucket-brigade QRAM | $O(N)$ | $O(N)$ | $\tilde{O}(\log^2 N)$ |
| SELECT-SWAP | $O(\sqrt{N})$ | $O(\sqrt{bN})$ | $\tilde{O}(bN)$ |
| QROM | $O(N)$ | $O(N)$ | $\tilde{O}(N)$ |

# FIG. 14A

130

---

**Algorithm**   Pseudocode for quantum data lookup on memory of size $N$ with partition size $\lambda$, and CNOT tree size $\gamma$

---

**Setup:** classical database `data` of size $N$ with $n = \log_2 N$, memory partition $\lambda \leq N$ with $d = \log_2\left(\frac{N}{\lambda}\right)$ and CNOT tree size $\gamma \leq \lambda$ with $d' = \log_2\left(\frac{\lambda}{\gamma}\right)$.

**Input:** state $|a\rangle$ where $a = a_0 \ldots a_{n-1}$ is an address of length $n$.

**Output:** state $|a\rangle |\text{data}[a]\rangle$ where $\text{data}[a]$ refers to the data at address $a$.

    **Stage I:**

1: Initialize all qubits of the quantum lookup table to 0.

2: **for** $k$ in $0 \ldots d - 1$ **do**

3:    Set $a_k$ as the status of the linear router $\mathcal{R}_k$.

**Stage II:**

for $i$ in $0 \ldots 2^d - 1$ do

    if $i = a_0 \ldots a_{d-1}$ then

        Set $q_i \leftarrow |1\rangle$

    else

        Set $q_i \leftarrow |0\rangle$

    Set the status of the CSWAP routers based on address bits $a_d \ldots a_{d+d'-1}$

    Route $q_i$ along the query path determined by the CSWAP routers.

    Propagate $q_i$'s signal to the $\gamma$ leaves $c_0, \ldots, c_{\gamma-1}$ of the CNOT tree attached to the last CSWAP router.

    for $j$ in $0 \ldots \lambda - 1$ do

        Apply unitary $U_{\lambda \cdot i + j}$ where $U_{\lambda \cdot i + j} = \mathrm{CNOT}|c_j\rangle\,|y_j\rangle$ if $\mathtt{data}[\lambda \cdot i + j] = 1$ and $\mathbf{I}$ otherwise.

        Apply $\mathrm{CNOT}|y_j\rangle\,|q'_j\rangle$.

    Reset all qubits $c_j$, $y_j$, and those in the CNOT tree to 0.

    Route $q_i$ back up the CSWAP routers to its original location.

    Reset the status of CSWAP routers and $q_i$ to 0.

**Stage III:**

Set the status of $\log_2(\gamma)$ CSWAP routers based on address bits $a_d \ldots a_{n-1}$.

Route $q'_\ell$ along the query path determined by the CSWAP routers to the output register where $\ell = a_d \ldots a_{n-1}$.

<br>

**FIG. 14B**

130

# FIG. 15

IN RESPONSE TO RECEIVING AN INPUT, ROUTE THE INPUT THROUGH FIRST QUANTUM ROUTERS TO DETERMINE A FIRST OUTPUT  1502

ROUTE THE FIRST OUTPUT TO AT LEAST ONE SECOND QUANTUM ROUTER, THE AT LEAST ONE SECOND QUANTUM ROUTER FEEDING THE FIRST OUTPUT TO A GATE TREE, THE GATE TREE GENERATING A SECOND OUTPUT THAT IS FED TO QUBITS, THE QUBITS PERFORMING OPERATIONS GENERATING READOUTS  1504

ROUTE THE READOUTS THROUGH THIRD QUANTUM ROUTERS, THE THIRD QUANTUM ROUTERS ARRANGED TO OUTPUT THE READOUTS  1506

EP 4 607 413 B1

# FIG. 16

TABLE 3

| Architecture | Infidelity | T-depth | Qubit | T-gate | Connectivity | Planar |
|---|---|---|---|---|---|---|
| fan-out | $\tilde{O}(N)$ | $O(\log N)$ | $O(N)$ | $O(N)$ | all-to-all | no |
| bucket-brigade | $O(\log^2 N)$ | $O(\log N)$ | $O(N)$ | $O(N)$ | all-to-all | no |
| SELECT-SWAP | $O(bN)$ | $O(\sqrt{N})$ | $O(\sqrt{N})$ | $O(\sqrt{bN})$ | all-to-all | no |
| **general single-bit** | $\tilde{O}\left(\dfrac{N}{\sqrt{\lambda}} + \dfrac{\gamma N}{\lambda}\right)$ | $O\left(\dfrac{N}{\lambda}\log N\right)$ | $O\left(\log\dfrac{N}{\lambda} + \lambda\right)$ | $O\left(\dfrac{N}{\gamma} + \dfrac{N}{\lambda}\log\dfrac{N}{\lambda} + \lambda\right)$ | local | yes |
| **general multi-bit parallel** | $\tilde{O}\left(\dfrac{bN}{\sqrt{\lambda}} + \dfrac{b\gamma N}{\lambda}\right)$ | $O\left(\dfrac{N}{\lambda}\log N\right)$ | $O\left(\log\dfrac{N}{\lambda} + b\lambda\right)$ | $O\left(\dfrac{N}{\gamma} + \dfrac{bN}{\lambda}\log\dfrac{N}{\lambda} + b\lambda\right)$ | local | yes |
| **general multi-bit sequential** | $\tilde{O}\left(\dfrac{bN}{\sqrt{\lambda}} + \dfrac{b\gamma N}{\lambda} + b^2\right)$ | $O\left(\dfrac{N}{\lambda}\log(bN)\right)$ | $O\left(\log\dfrac{N}{\lambda} + b\lambda\right)$ | $O\left(\dfrac{N}{\gamma} + \dfrac{N}{\lambda}\log\dfrac{N}{\lambda} + \lambda\right)$ | local | yes |
| **single-bit** | $\tilde{O}(N^{3/4})$ | $O(\sqrt{N}\log N)$ | $O(\sqrt{N})$ | $O(N^{3/4})$ | local | yes |
| **parallel multi-bit** | $\tilde{O}(bN^{3/4})$ | $O(\sqrt{N}\log N)$ | $O(b\sqrt{N})$ | $O(bN^{3/4})$ | local | yes |
| **sequential multi-bit** | $\tilde{O}(bN^{3/4} + b^2)$ | $O(\sqrt{N}\log(bN))$ | $O(b\sqrt{N})$ | $O(N^{3/4})$ | local | yes |
| **single-bit long-range** | $\tilde{O}(\sqrt{N})$ | $O(\sqrt{N}\log N)$ | $O(\sqrt{N})$ | $O(N^{3/4})$ | hybrid | yes |

# FIG. 17

EP 4 607 413 B1

Incident qubit $|b\rangle$

Router $|a\rangle$

Left output   Right output

FIG. 18

EP 4 607 413 B1

FIG. 19

— Black
— Blue
---- Red

# FIG. 20

TABLE 4

| Error type | Notation |
|---|---|
| Idling/ identity gate | $\varepsilon_I$ |
| GHZ qubit | $\varepsilon_G$ |
| SWAP gate | $\varepsilon_s$ |
| CSWAP gate | $\varepsilon_{cs}$ |
| CNOT gate | $\varepsilon_c$ |
| CCNOT gate | $\varepsilon_{cc}$ |

FIG. 21

⊚ Green  ● Blue

FIG. 22

FIG. 23

input

FIG. 24A

input
$|0\rangle$
$|0\rangle$

FIG. 24B

L  R

L

FIG. 24C

L
R

FIG. 24D

FIG. 25

EP 4 607 413 B1

FIG. 26

FIG. 27

100

FIG. 28

FIG. 29

EP 4 607 413 B1

FIG. 30

Stage I

Stage II

Stage III

$\mathcal{R}_0$  $\mathcal{R}_1$  $q_i$

$x_{4i}$  $q'_0$  $x_{4i+1}$  $q'_1$  $x_{4i+2}$  $q'_2$  $x_{4i+3}$  $q'_3$

$R'_0$  $R'_1$  $R'_2$

**FIG. 31B**

**FIG. 31A**

**FIG. 31C**

EP 4 607 413 B1

FIG. 32A

FIG. 32B

FIG. 32C

$$|0\rangle$$

$$|0\rangle$$

$$|1\rangle$$

$$t_0$$

$$t_1$$

$$q_0 = |0\rangle \qquad |1\rangle$$

$$|1\rangle$$

$$t_0$$

$$t_1$$

$$q_3 = |0\rangle \qquad |0\rangle$$

FIG. 33A

FIG. 33B

FIG. 34

EP 4 607 413 B1

FIG. 35

FIG. 36

ROUTERS 710

$\mathcal{R}_0$

$\mathcal{R}_1$

$q_i$

ROUTERS 720

$\mathbf{R}_0$

GATE TREE 722

$x_{4i}$ $x_{4i+1}$ $x_{4i+2}$ $x_{4i+3}$

LOGICAL QUBITS 724
(MEMORY ELEMENTS)

$x_{4i}^0$ $x_{4i}^1$ $x_{4i+1}^0$ $x_{4i+1}^1$ $x_{4i+2}^0$ $x_{4i+2}^1$ $x_{4i+3}^0$ $x_{4i+3}^1$

LOGICAL QUBITS 726
VALUES ($q_i'$)

OUTPUT ROUTERS
730

$\mathbf{R}_1'$ $\mathbf{R}_2'$

$\mathbf{R}_0'$

EP 4 607 413 B1

# FIG. 37

TABLE 5

| $d$ \ $d'$ | 0 | $n/8$ | $2n/8$ | $3n/8$ | $4n/8$ | $5n/8$ | $6n/8$ | $7n/8$ | $n$ |
|---|---|---|---|---|---|---|---|---|---|
| 0 | $n$ | $7n/8$ | $3n/4$ | $5n/8$ | $n/2$ | $n/2$ | $n/2$ | $n/2$ | $n/2$ |
| $n/8$ | $n$ | $7n/8$ | $3n/4$ | $5n/8$ | $9n/16$ | $9n/16$ | $9n/16$ | $9n/16$ | |
| $2n/8$ | $n$ | $7n/8$ | $3n/4$ | $5n/8$ | $5n/8$ | $5n/8$ | $5n/8$ | | |
| $3n/8$ | $n$ | $7n/8$ | $3n/4$ | $11n/16$ | $11n/16$ | $11n/16$ | | | |
| $4n/8$ | $n$ | $7n/8$ | $3n/4$ | $3n/4$ | $3n/4$ | | | | |
| $5n/8$ | $n$ | $7n/8$ | $13n/16$ | $13n/16$ | | | | | |
| $6n/8$ | $n$ | $7n/8$ | $7n/8$ | | | | | | |
| $7n/8$ | $n$ | $15n/16$ | | | | | | | |
| $n$ | $n$ | | | | | | | | |

EP 4 607 413 B1

# FIG. 38

TABLE 6

| d \ d' | 0 | n/8 | 2n/8 | 3n/8 | 4n/8 | 5n/8 | 6n/8 | 7n/8 | n |
|---|---|---|---|---|---|---|---|---|---|
| 0 | $n$ | $7n/8$ | $3n/4$ | $5n/8$ | $n/2$ | $27n/64$ | $13n/32$ | $25n/64$ | $3n/8$ |
| $n/8$ | $n$ | $7n/8$ | $3n/4$ | $5n/8$ | $n/2$ | $31n/64$ | $15n/32$ | $29n/64$ | |
| $2n/8$ | $n$ | $7n/8$ | $3n/4$ | $5n/8$ | $9n/16$ | $35n/64$ | $17n/32$ | | |
| $3n/8$ | $n$ | $7n/8$ | $3n/4$ | $41n/64$ | $5n/8$ | $39n/64$ | | | |
| $4n/8$ | $n$ | $7n/8$ | $3n/4$ | $45n/64$ | $11n/16$ | | | | |
| $5n/8$ | $n$ | $7n/8$ | $25n/32$ | $49n/64$ | | | | | |
| $6n/8$ | $n$ | $7n/8$ | $27n/32$ | | | | | | |
| $7n/8$ | $n$ | $59n/64$ | | | | | | | |
| $n$ | $n$ | | | | | | | | |

EP 4 607 413 B1

# FIG. 39

TABLE 7

| $d \backslash d'$ | 0 | $n/8$ | $2n/8$ | $3n/8$ | $4n/8$ | $5n/8$ | $6n/8$ | $7n/8$ | $n$ |
|---|---|---|---|---|---|---|---|---|---|
| 0 | $n$ | $7n/8$ | $3n/4$ | $5n/8$ | $n/2$ | $3n/8$ | $5n/16$ | $9n/32$ | $n/4$ |
| $n/8$ | $n$ | $7n/8$ | $3n/4$ | $5n/8$ | $n/2$ | $13n/32$ | $3n/8$ | $11n/32$ | |
| $2n/8$ | $n$ | $7n/8$ | $3n/4$ | $5n/8$ | $n/2$ | $15n/32$ | $7n/16$ | | |
| $3n/8$ | $n$ | $7n/8$ | $3n/4$ | $5n/8$ | $9n/16$ | $17n/32$ | | | |
| $4n/8$ | $n$ | $7n/8$ | $3n/4$ | $21n/32$ | $5n/8$ | | | | |
| $5n/8$ | $n$ | $7n/8$ | $3n/4$ | $23n/32$ | | | | | |
| $6n/8$ | $n$ | $7n/8$ | $13n/16$ | | | | | | |
| $7n/8$ | $n$ | $29n/32$ | | | | | | | |
| $n$ | $n$ | | | | | | | | |

# FIG. 40

TABLE 8

| $d'$ / $d$ | 0 | $n/8$ | $2n/8$ | $3n/8$ | $4n/8$ | $5n/8$ | $6n/8$ | $7n/8$ | $n$ |
|---|---|---|---|---|---|---|---|---|---|
| 0 | $n$ | $7n/8$ | $3n/4$ | $5n/8$ | $n/2$ | $3n/8$ | $n/4$ | $11n/64$ | $n/8$ |
| $n/8$ | $n$ | $7n/8$ | $3n/4$ | $5n/8$ | $n/2$ | $3n/8$ | $9n/32$ | $15n/64$ | |
| $2n/8$ | $n$ | $7n/8$ | $3n/4$ | $5n/8$ | $n/2$ | $25n/64$ | $11n/32$ | | |
| $3n/8$ | $n$ | $7n/8$ | $3n/4$ | $5n/8$ | $n/2$ | $29n/64$ | | | |
| $4n/8$ | $n$ | $7n/8$ | $3n/4$ | $5n/8$ | $9n/16$ | | | | |
| $5n/8$ | $n$ | $7n/8$ | $3n/4$ | $43n/64$ | | | | | |
| $6n/8$ | $n$ | $7n/8$ | $25n/32$ | | | | | | |
| $7n/8$ | $n$ | $57n/64$ | | | | | | | |
| $n$ | $n$ | | | | | | | | |

EP 4 607 413 B1

# FIG. 41

TABLE 9

| d \ d' | 0 | n/8 | 2n/8 | 3n/8 | 4n/8 | 5n/8 | 6n/8 | 7n/8 | n |
|--------|---|-----|------|------|------|------|------|------|---|
| 0 | $n$ | $7n/8$ | $3n/4$ | $5n/8$ | $n/2$ | $3n/8$ | $n/4$ | $n/8$ | $0$ |
| $n/8$ | $n$ | $7n/8$ | $3n/4$ | $5n/8$ | $n/2$ | $3n/8$ | $n/4$ | $n/8$ | |
| $2n/8$ | $n$ | $7n/8$ | $3n/4$ | $5n/8$ | $n/2$ | $3n/8$ | $n/4$ | | |
| $3n/8$ | $n$ | $7n/8$ | $3n/4$ | $5n/8$ | $n/2$ | $3n/8$ | | | |
| $4n/8$ | $n$ | $7n/8$ | $3n/4$ | $5n/8$ | $n/2$ | | | | |
| $5n/8$ | $n$ | $7n/8$ | $3n/4$ | $5n/8$ | | | | | |
| $6n/8$ | $n$ | $7n/8$ | $3n/4$ | | | | | | |
| $7n/8$ | $n$ | $7n/8$ | | | | | | | |
| $n$ | $n$ | | | | | | | | |

EP 4 607 413 B1

# FIG. 42

TABLE 10

| Error type | Symbol |
|---|---|
| Idling/ identity gate | $\varepsilon_I$ |
| GHZ qubit | $\varepsilon_G$ |
| Long range | $\varepsilon_L$ |
| SWAP gate | $\varepsilon_s$ |
| CSWAP gate | $\varepsilon_{cs}$ |
| CNOT gate | $\varepsilon_c$ |
| CCNOT gate | $\varepsilon_{cc}$ |

Error types considered in the fine-tuned analysis throughout this work.

## FIG. 43

TABLE 11

| Architecture | Infidelity | T-depth | Qubit | T-gate | Layout |
|---|---|---|---|---|---|
| general single-bit | $\tilde{O}(\frac{\gamma N}{\lambda})$ | $O(\frac{N}{\lambda}\log N)$ | $\tilde{O}(\log\frac{N}{\lambda}+\lambda)$ | $\tilde{O}(\frac{N}{\gamma}+\frac{N}{\lambda}\log\frac{N}{\lambda}+\lambda)$ | local, planar |
| general multi-bit parallel | $\tilde{O}(\frac{b\gamma N}{\lambda})$ | $O(\frac{N}{\lambda}\log N)$ | $\tilde{O}(\log\frac{N}{\lambda}+b\lambda)$ | $\tilde{O}(\frac{N}{\gamma}+\frac{bN}{\lambda}\log\frac{N}{\lambda}+b\lambda)$ | local, planar |
| general multi-bit sequential | $\tilde{O}(\frac{b\gamma N}{\lambda}+b^2)$ | $O(\frac{N}{\lambda}\log(bN))$ | $\tilde{O}(\log\frac{N}{\lambda}+b\lambda)$ | $\tilde{O}(\frac{N}{\gamma}+\frac{N}{\lambda}\log\frac{N}{\lambda}+\lambda)$ | local, planar |

Scaling of parameters in this work in terms of memory size $N$ and word size $b$ while using entanglement distillation for long range operations. The $\gamma$ and $\lambda$ are the tuning parameters one can choose, both are powers of 2, $\lambda \in [1,N]$, and $\gamma \in [1,\lambda]$. The types of models studied in this work are in bold.

EP 4 607 413 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **K. PHALAK et al.** Quantum Random Access Memory for Dummies. *arXiv:2305.01178v1*
- **S. XU et al.** Systems Architecture for Quantum Random Access Memory. *MICRO '23 Proceedings of the 56TH IEEE/ACM International Symposium on Microarchitecture*, 526-538
- **KARZIG et al.** Scalable Designs for Quasiparticle-Poisoning-Protected Topological Quantum Computation with Majorana Zero Modes. *, arxiv:1610.05289v4 [cond-mat.mes-hall*, 21 June 2017
- **LUTCHYN et al.** Majorana Fermions and a Topological Phase Transition in Semiconductor-Superconductor Heterostructures. *arXiv:1002.4033v2 [cond-mat.supr-con*, 13 August 2010
- **M. E. BEVERLAND et al.** Assessing requirements to scale to practical quantum advantage. *arXiv:2211.07629 [quant-ph*, 14 November 2022
- **ADAM PAETZNICK ; CHRISTINA KNAPP ; NICOLAS DELFOSSE ; BELA BAUER ; JEONGWAN HAAH ; MATTHEW B. HASTINGS ; MARCUS P. DA SILVA**. Performance of planar floquet codes with majorana-based qubits. *PRX Quantum*, 25 January 2023, vol. 4, 010310
- **CONNOR T. HANN ; GIDEON LEE, S. M. GIRVIN ; LIANG JIANG**. Resilience of Quantum Random Access Memory to Generic Noise. *PRX Quantum*, 29 April 2021, vol. 2, 020311
- **CONNOR T. HANN**. *Resilience of Quantum Random Access Memory to Generic Noise*
- Convolutional Entanglement Distillation. **M. M. WILDE ; H. KROVI ; T. A. BRUN**. IEEE International Symposium on Information Theory. IEEE, 2010, 2657-2661